(19) Europäisches Patentamt
European Patent Office
Office européen des brevets

(11) EP 1 367 069 A1

# (12) EUROPEAN PATENT APPLICATION

(43) Date of publication:
03.12.2003 Bulletin 2003/49

(51) Int Cl.[7]: **C08F 36/04**, C08F 4/68, C08F 4/54, C08F 4/70

(21) Application number: 03012330.1

(22) Date of filing: 28.05.2003

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 28.05.2002 US 383548 P
07.11.2002 US 424669 P

(71) Applicant: DOW GLOBAL TECHNOLOGIES INC.
Midland, Michigan 48674 (US)

(72) Inventors:
- Thiele, Sven
06110 Halle (DE)
- Wilson, David R.
Midland, Michigan 48640 (US)
- Boone, Harold W.
Sugar Land, Texas 77479 (US)
- Feng, Shaoguang
Midland, Michigan 48640 (US)
- Mullins, Michael J.
Lake Jackson, Texas 77566 (US)
- Monroy, Victor M.
Charlotte, North Carolina 28270-4419 (US)

(74) Representative: Dey, Michael, Dipl.-Chem. Dr. et al
Weickmann & Weickmann,
Postfach 860 820
81635 München (DE)

## (54) Process for homo-or copolymerization of conjugated diens

(57) According to this invention, pyridine or phosphabenzene ligand-containing Group 5, 8, 9, lanthanide and actinide metal complexes corresponding to the formula:

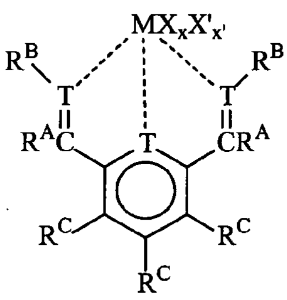

are disclosed as useful for polymerization of conjugated ethylenically unsaturated addition polymerizable monomers or copolymerization of one type of conjugated ethylenically unsaturated addition polymerizable monomer with at least one different type of conjugated ethylenically unsaturated addition polymerizable monomer or copolymerization of at least one type of conjugated ethylenically unsaturated addition polymerizable monomers with ethylenically monounsaturated addition polymerizable monomers. M is a metal from one of Groups 5, 8 or 9 of the Periodic Table of the Elements, the lanthanides or actinides; T is nitrogen or phosphorus; $R^A$, $R^B$ and $R^C$ are independently each occurrence hydrogen or a group having from 1 to 80 atoms not counting hydrogen further defined herein, the $R^B$ and $R^A$ groups are optionally bonded to the same T=C grouping may be joined together to form a divalent ligand group and two $R^C$ groups are optionally joined together forming a divalent ligand group; X is an anionic ligand group having up to 60 atoms not counting hydrogen, provided however that in no occurrence is X a cyclic, delocalized, aromatic group that is π-bonded to M, and optionally two X groups together form a divalent ligand group; X' independently each occurrence is a neutral Lewis base ligand having up to 30 nonhydrogen atoms; x is an integer number from 0 to 5; and x' is a number from 0 to 3. Novel homo- and copolymers are obtained which have advantageous properties for the production of a wide range of products and for the modification of plastics, such as high impact polystyrene or impact-modified polypropylene

EP 1 367 069 A1

## Description

TECHNICAL FIELD

This invention relates to metal complex compositions, their preparation and their use as catalysts to produce polymers of conjugated dienes through (homo)polymerization or of conjugated unsaturated addition polymerizable monomers and copolymerization of conjugated unsaturated addition polymerizable monomers with at least one different type of conjugated unsaturated addition polymerizable monomers and copolymerization of conjugated unsaturated addition polymerizable monomers with ethylenically monounsaturated addition polymerizable monomers, especially aromatic ethylenically monounsaturated addition polymerizable monomers.

More particularly, the invention relates to metal complexes containing at least one metal - nitrogen or metal - phosphorous bond, more particularly at least one metal - nitrogen bond and to the preparation of the catalyst and the use of the prepared catalyst to produce homopolymers or copolymers of conjugated dienes or copolymers of conjugated dienes with aromatic alpha-olefins, preferably through, but not limited to, polymerization of 1,3-butadiene or isoprene or through copolymerization of 1,3-butadiene or isoprene with styrene, paramethylstyrene or divinyl benzene or through copolymerization of 1,3-butadiene with isoprene. More preferably the polydiene homopolymer or the polydiene sequences of the copolymer consist predominantly of trans units and even more preferably the copolymerization of one conjugated diene monomer with one aromatic $\alpha$-olefin monomer results in random copolymers.

BACKGROUND OF THE INVENTION

Metal complex catalysts for producing polymers from conjugated unsaturated addition polymerizable monomer(s), and copolymers from conjugated unsaturated addition polymerizable monomers with at least one different type of conjugated unsaturated addition polymerizable monomers, aromatic $\alpha$-olefin monomers and aliphatic $\alpha$-olefin monomers are known.

EP 816,386 describes olefin polymerization catalysts comprising transition metal compounds, preferably transition metals from group IIIA, IVA, VA, VIA, VIIA or VIII or a lanthanide element, preferably titanium, zirconium or hafnium, with an alkadienyl ligand.

The catalyst further comprises an auxiliary alkylaluminoxane compound and can be used for polymerization and copolymerization of olefins. However, EP 816386 does not refer to diene copolymerization reactions.

Catalysts for the polymerization and copolymerization of 1,3-butadiene based on a vanadium metal complex are described in the patent and open literature. More in particular, there are two main groups of vanadium complexes containing (one) vanadium - nitrogen bond(s) which were investigated more intensively: cyclopentadienyl vanadium complexes and vanadium complexes lacking the cyclopentadienyl ligand. Metal complexes in combination with different activator compounds describe the state of the art, but are not an object of this invention.

It should be pointed out that the knowledge of the molecular weight and molecular weight distribution of the polymer as well as the microstructure (cis-1,4-, trans-1,4- and 1,2-polybutadiene ratio) of the polybutadiene or of the polybutadiene fraction of the copolymer and the distribution of the comonomer such as styrene or isoprene in butadiene-containing polymers, is crucial for the preparation of polymers with desired properties. Though a few of the patents describe some characteristics of the polydiene obtained, little purposeful effort was made to change the microstructure and the molecular weight of basically high trans polybutadiene or of styrene-containing high trans polybutadiene to obtain polymers with different properties. In addition little purposeful effort was made to change the copolymer properties such as copolymer composition (ratio of monomer A : monomer B) of butadiene-isoprene copolymers. In particular no reference was found to describe the preparation and evaluation of the properties of high-trans polybutadiene-containing polyisoprene to obtain polymers with different properties. It would be very desirable to effect the elasticity, the molecular weight and the gel content of the high trans polybutadiene just by varying the styrene or isoprene content. It would be especially desirable to prepare high trans polybutadiene, styrene-containing high trans polybutadiene or isoprene containing polyisoprene containing specific amounts of 1,2-polybutadiene and to prepare diene - diene or diene-aromatic alpha olefine, preferably butadiene-isoprene or butadiene-styrene copolymers possessing different degrees of crystallinity to make polybutadiene applicable for the preparation of HIPS (high impact polystyrene) or of ABS and for specific tire applicatons.

It would be valuable to recognize that vanadium complex (precatalyst)/co-catalyst mixtures have a dominant effect on the polymer structure. The microstructure of the polydienes and the molecular weight could be tuned by selecting suitable precatalysts or activators, by choice of method for the preparation of the catalyst and by selecting suitable polymerization conditions. In addition, there is a need for vanadium catalyst precursors and catalysts which are stable in a dry state and in solution at room temperature and at higher temperatures so that these compounds may be more easily handled and stored. In addition, it would be desirable to have catalyst components that could be directly injected into the polymerization reactor without the need to "age" (stir, shake or store) the catalyst or catalyst components for a longer period of time. Especially for a solution polymerization process or a continuous polymerization process, liquid or dissolved catalyst or catalyst components are more suitable for a proper dosing into the polymerization vessel.

## SUMMARY OF THE INVENTION

According to the present invention for polymerization of conjugated ethylenically unsaturated addition polymerizable monomers or copolymerization of one type of conjugated ethylenically unsaturated addition polymerizable monomer with at least one different type of conjugated ethylenically unsaturated addition polymerizable monomer or copolymerization of at least one type of conjugated ethylenically unsaturated addition polymerizable monomers with ethylenically monounsaturated addition polymerizable monomers, especially aromatic ethylenically monounsaturated addition polymerizable monomers there are provided pyridine or phosphabenzene ligand-containing Group 5, 8, 9, lanthanide and actinide metal complexes corresponding to the formula:

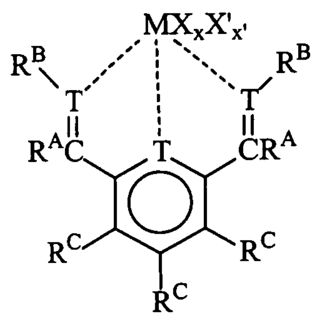

wherein:

M is a metal from one of Groups 5, 8 or 9 of the Periodic Table of the Elements, the lanthanides or actinides;
T is nitrogen or phosphorus;
$R^A$ independently each occurrence is hydrogen or a group having from 1 to 80 atoms not counting hydrogen, which is nitro, nitrile, halide, hydrocarbyl, hydrocarbylsilyl, hydrocarbylsiloxy, halo-substituted hydrocarbyl, hydrocarbyloxy-substituted hydrocarbyl, hydrocarbylamino-substituted hydrocarbyl, or hydrocarbylsilyl-substituted hydrocarbyl, hydrocarbyloxy, amino, hydrocarbylamino, and ketohydrocarbyl;
$R^B$ independently each occurrence is hydrogen or a group having from 1 to 80 atoms not counting hydrogen, which is hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl-substituted hydrocarbyl, hydrocarbyloxy, amino, hydrocarbylamino and optionally the $R^B$ and $R^A$ groups bonded to the same T=C grouping may be joined together to form a divalent ligand group;
$R^c$ independently each occurrence is hydrogen or a group having from 1 to 80 atoms not counting hydrogen, which is nitro, nitrile, halide, hydrocarbyl, halo-substituted hydrocarbyl, oxygen-substituted hydrocarbyl, including for example hydrocarbyloxy-hydrocarbyl, hydrocarbyloxy, hydroxy-, keto-, aldehyde-, and ester-substituted hydrocarbyl; amino; nitrogen-substituted hydrocarbyl, including for example hydrocarbylamino, amide, amino- or hydrocarbylamino-substituted hydrocarbyl; silicon-substituted hydrocarbyl, including hydrocarbylsilyl or siloxy, or hydrocarbylsilyl-substituted hydrocarbyl; or two $R^c$ groups are joined together forming a divalent ligand group;
X is an anionic ligand group having up to 60 atoms, provided however that in no occurrence is X a cyclic, delocalized, aromatic group that is $\pi$-bonded to M, and optionally two X groups together form a divalent ligand group;
X' independently each occurrence is a neutral Lewis base ligand having up to 30 nonhydrogen atoms;
x is an integer number from 0 to 5; and
x' is a number from 0 to 3.

The formula weight of the metal complex preferably is lower than 2000 g/mol, more preferably lower than 1000 g/mol.

Additionally, according to the present invention for polymerization of conjugated ethylenically unsaturated addition polymerizable monomers or copolymerization of one type of conjugated ethylenically unsaturated addition polymerizable monomer with at least one different type of conjugated ethylenically unsaturated addition polymerizable

monomer or copolymerization of one type of conjugated ethylenically unsaturated addition polymerizable monomer with aromatic or nonaromatic alpha olefins or with nonconjugated dienes there is provided a process for preparing pyridine or phosphabenzene Group 5, 8, 9, lanthanide and actinide metal complexes corresponding to the formula:

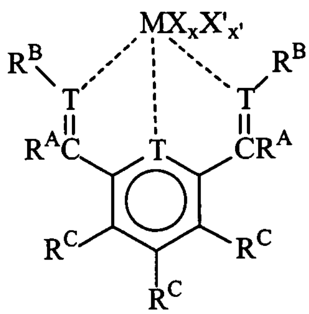

wherein M, T, $R^A$, $R^B$, $R^C$, X, X', x and x'are as previously defined, comprising:

contacting a compound according to the formula $MX_xX'_{x''}$ wherein M, X, x, and X' are as previously defined and x" is a number from 0 to 6, with a pyridine or phosphabenzene compound corresponding to the formula:

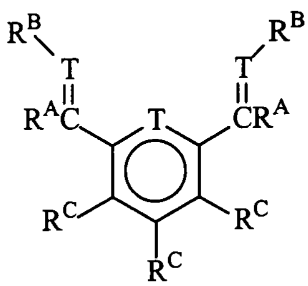

In a preferred embodiment, the compound according to the formula $MX_xX'_{x''}$ is contacted with the pyridine or phosphabenzene compound corresponding to the formula:

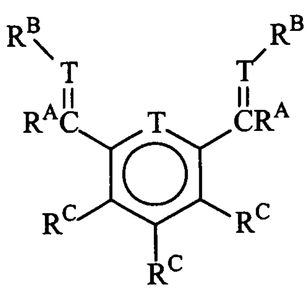

in a solvent.

Further according to the present invention there are provided catalysts for the polymerization of one type of conjugated ethylenically unsaturated addition polymerizable monomers or copolymerization of one type of conjugated ethylenically unsaturated addition polymerizable monomer with at least one different type of conjugated ethylenically

unsaturated addition polymerizable monomer or copolymerization of one type of conjugated ethylenically unsaturated addition polymerizable monomer with aromatic or nonaromatic alpha olefins or with nonconjugated dienes comprising:

1 ) a combination of one or more of the above metal complexes and one or more activators (cocatalysts) and optionally a support (carrier material) or
2) the reaction product formed by contacting one or more of the above metal complexes with one or more activators and optionally a support or
3) the product formed by subjecting one or more of the above metal complexes and optionally a support to activating techniques.

The present invention also provides a process for preparing catalysts for polymerization of conjugated ethylenically unsaturated addition polymerizable monomers or copolymerization of one type of conjugated ethylenically unsaturated addition polymerizable monomer with at least one different type of conjugated ethylenically unsaturated addition polymerizable monomer or copolymerization of one type of conjugated ethylenically unsaturated addition polymerizable monomer with aromatic or nonaromatic alpha olefins or with nonconjugated dienes comprising contacting one or more of the above metal complexes with one or more activators and optionally a support or subjecting one or more of the above metal complexes and optionally a support to activating techniques.
The present invention also provides a polymerization process comprising contacting one or more conjugated ethylenically unsaturated addition polymerizable monomers optionally in the presence of an inert, aliphatic, alicyclic or cyclic or aromatic hydrocarbon, under polymerization conditions with a catalyst comprising:

1 ) a combination of one or more of the above metal complexes and one or more activators and optionally a support or
2) the reaction product formed by contacting one or more of the above metal complexes with one or more activators and optionally a support or
3) the product formed by subjecting one or more of the above metal complexes and optionally a support to activating techniques.

The polymerization may be performed under solution, suspension, slurry, or gas phase process conditions, and the catalyst or individual components thereof may be used in a heterogeneous, i.e., a supported state, or in a homogeneous state as dictated by process conditions. The catalyst can be used in combination with one or more additional catalysts of the same or different nature either simultaneously in the same reactor and/or sequentially in separate reactors. The catalyst can be formed in *situ* in the presence of or prior to addition to a reaction mixture comprising one or more ethylenically unsaturated addition polymerizable monomers.
According to the present invention there are provided homopolymers comprising one conjugated ethylenically unsaturated addition polymerizable monomer, even more especially one conjugated ethylenically polyunsaturated addition polymerizable monomer.
Further according to the present invention there are provided copolymers comprising more than one conjugated ethylenically unsaturated addition polymerizable monomers, even more especially conjugated ethylenically polyunsaturated addition polymerizable monomers in combination with a second type of conjugated ethylenically polyunsaturated addition polymerizable monomer.
Further according to the present invention there are provided copolymers comprising conjugated ethylenically polyunsaturated addition polymerizable monomers in combination with ethylenically monounsaturated addition polymerizable monomers, especially aromatic ethylenically monounsaturated addition polymerizable monomers.
Catalysts for polymerization of conjugated ethylenically unsaturated addition polymerizable monomers according to the invention possess improved catalytic properties and are especially useful in the polymerization of conjugated dienes. In addition, the complexes are compatible with and may be used in combination with alkylaluminum compounds which may be employed to scavenge monomer impurities without detrimental effects to their catalytic properties.
The polymers of the invention may be used in the production of many useful shapes, molded parts, films, foams, golf balls, tires, hoses, conveyor and other belts, gaskets, seals, shoes and in the modification of plastics.

DETAILED DESCRIPTION OF THE INVENTION

All reference to the Periodic Table of the Elements herein shall refer to the Periodic Table of the Elements, published and copyrighted by CRC Press, Inc., 1989. Also, any reference to a Group or Groups shall be to the Group or Groups as reflected in this Periodic Table of the Elements using the IUPAC system for numbering groups.
By the term "neutral Lewis base ligand" is meant uncharged groups that are sufficiently nucleophilic to be

capable of forming a coordination bond to the metal atom of the metal complex of the invention. Preferred neutral Lewis base ligand groups, X', are carbon monoxide, acetylacetonate, ethers, thioethers, polyethers, amines, polyamines, phosphines, phosphites, polyphosphines, alcohols, nitriles, esters, olefins and conjugated dienes. The metal complexes according to the present invention may be present as coordination complexes of neutral Lewis base ligands.

M in the metal complex catalyst composition is prefereably vanadium, neodymium, iron or cobalt, most preferably vanadium.

T in the metal complex composition is preferably nitrogen.

Preferred pyridine metal complexes according to the present invention correspond to the formula I:

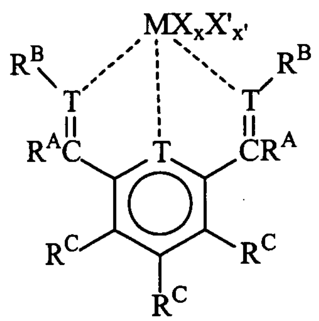

Formula I

wherein $R^A$, $R^B$, $R^c$, x and x' are as previously defined;

M is vanadium, iron, cobalt or neodymium;

T is nitrogen or phosphorus;

X independently each occurrence is hydrogen or a group having from 1 to 60 atoms not counting hydrogen, which is hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl-substituted hydrocarbyl, hydrocarbyloxy, hydrocarbylcarboxylate, hydrocarbylsulfide, hydrocarbylsiloxy, hydrocarbylamido, cyanide, acetylacetonate, dithiocarbamate, dithiocarboxylate and halide, provided however that in no occurrence is X a cyclic, delocalized, aromatic group that is $\pi$-bonded to M, and optionally two X groups together form a divalent ligand group;

Preferred X groups are halide, hydrocarbyl (including alkyl, alkenyl, aryl, alkaryl, aralkyl, cycloalkyl and cycloalkenyl) hydrocarbyloxide, hydrocarbylsulfide, N,N-dihydrocarbylamide, hydrocarbyleneamide, hydrocarbylcarboxylate, acetylacetonate, dithiocarbamate, and dithiocarboxylate groups, said X having from 1 to 20 atoms other than hydrogen.

X' independently each occurrence is selected from carbon monoxide; phosphines, $PR^i_3$, and phosphites, $P(OR^i)_3$, wherein $R^i$ independently each occurrence is hydrocarbyl, silyl, especially trimethylphosphine, triethylphosphine, tributylphosphine, triphenylphosphine and 1,2-bis(dimethylphosphino)ethane, 1,2-bis(diphenylphosphino)ethane, bis(diphenylphosphino)methane, 1,3-bis(diphenylphosphino)propane, trimethylphosphite, triethylphosphite, tributylphosphite, triphenylphosphite; thioethers, especialy dimethylthioether, methylphenylthioether, diethylthioether; ethers and polyethers, especially tetrahydrofuran (THF), diethylether (Et2O), dioxane, 1,2-dimethoxyethane (DME); amines and polyamines, especially pyridine, bipyridine, pyrrolidine, piperidine, tetramethylethylenediamine (TMEDA) and triethylamine (TEA); olefins, especially ethylene, propylene, butene, hexene, octene, styrene, divinylbenzene; conjugated dienes having from 4 to 40 carbon atoms, especially butadiene, isoprene, 1,3-pentadiene, 2,4-hexadiene; alcohols, especially methanol, ethanol, propanol, butanol; nitriles, especially acetonitrile, acrylonitrile, propanenitrile, benzonitrile; esters, especially methyl acetate, ethyl acetate, butyl acetate, methyl acrylate, methyl methacrylate, methyl benzoate.

Preferably, the metal complex comprises vanadium, iron or cobalt, even more preferably at least one vanadium metal atom.

Preferred $R^B$ groups are hydrocarbyl, especially alkyl, cyclic alkyl, aryl, alkaryl, more especially methyl, ethyl, 1-methylethyl, 1,1-dimethylethyl, cyclohexyl, phenyl, 2,6-dialkylphenyl, and benzyl; hydrocarbylsilyl such as trimethylsilyl; and hydrocarbylamino, especially alkylamino, cyclic alkylamino, arylamino and alkaryl, more especially methylamino, dimethylamino, diethylamino, methylethylamino, methylphenylamino, phenylamino, cyclohexylamino, dipropylamino, dibutylamino, piperidino, morpholino, and pyrrolidino.

Preferred $R^A$ and $R^C$ groups are hydrogen, nitro, nitrile, halide, especially chloride or bromide, hydrocarbyl,

hydrocarbylsilyl, amino, hydrocarbylamino, hydrocarbyloxy, hydrocarbylsiloxy, ketohydrocarbyl, especially hydrogen, halide, alkyl, cyclic alkyl, aryl, acyl, alkyloxy, alkylsiloxy and alkaryl, more especially hydrogen, chloride, bromide, methyl, ethyl, 1-methylethyl, 1,1-dimethylethyl, cyclohexyl, phenyl, benzyl, trimethylsilyl, 2,6-dimethylphenyl, methoxy, ethoxy, methylethyloxy, 1,1-dimethylethyloxy, acetyl (1-ketoethyl), trimethylsiloxy, 1.1-dimethylethyl(dimethylsilyl)oxy, amino, methylamino, dimethylamino, diethylamino, methylethylamino, methylphenylamino, dipropylamino, dibutylamino, piperidino, morpholino, pyrrolidino, hexahydro-1H-azepin-1-yl, hexahydro-1(2H)-azocinyl, octahydro-1 H-azonin-1-yl or octahydro-1(2H)-azecinyl.

Especially preferred pyridine metal complexes according to the present invention correspond to the formula I:

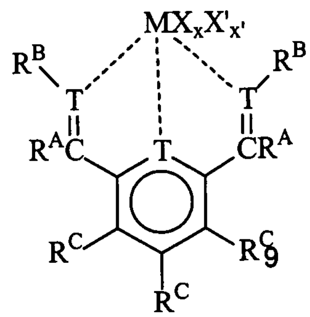

Formula I

wherein $R^c$, X, X', x and x' are as previously defined above for Formula I;

M is vanadium, iron, cobalt or neodymium, especially vanadium;

T is nitrogen;

the $R^A$ and $R^B$ groups of $R^AC=TR^B$ are linked together to form a heterocycle, preferably a 5-membered or 6-membered ring, more preferably wherein the heterocycle contains two or more non-carbon atoms in the ring, especially to form an oxazoline or imidazole ring. In another embodiment of the invention, the oxazoline or imidazole ring may optionally be substituted such that chiral centers are formed on the ring.

Especially preferred pyridine metal complexes according to the present invention correspond to the formula II:

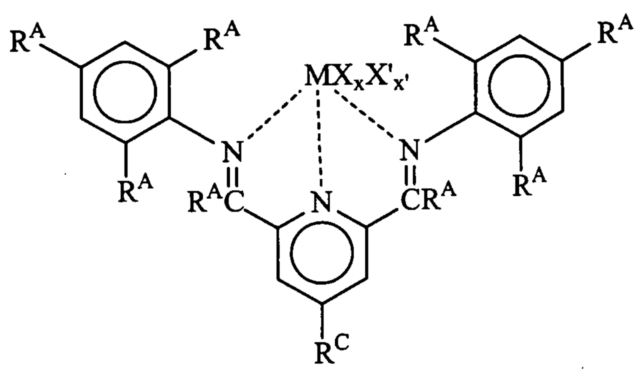

Formula II

wherein X, X', x and x' are as previously defined;

M is vanadium, iron, cobalt or neodymium, especially vanadium;

$R^A$ independently each occurrence is hydrogen or $C_{1-6}$ alkyl, most preferably methyl, ethyl, 1-methylethyl, cyclohexyl;

$R^c$ independently each occurrence is hydrogen, halide or $C_{1-6}$ alkyl, most preferably hydrogen, chloride, methyl, ethyl, 1-methylethyl, cyclohexyl;

X independently each occurrence is chloride, bromide, $C_{1-10}$ hydrocarbyl, or $C_{1-10}$ hydrocarbylsilylhydrocarbyl, especially chloride, methyl, neopentyl, trimethylsilylmethyl;
x is 1, 2, 3 or 4, especially 2 or 3;
X' is THF, DME, TEA, TMEDA, Et2O;
x' is a number from zero to two.

More especially preferred pyridine metal complexes according to the present invention correspond to the formula III:

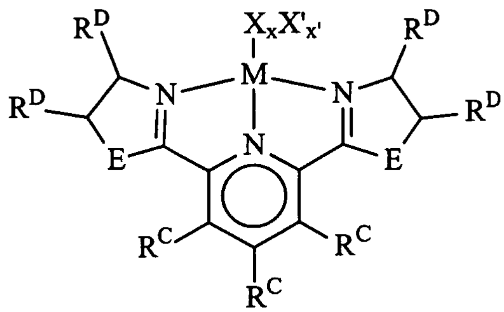

**Formula III**

wherein $R^c$, X, X', x and x' are as previously defined above for Formula I;

M is vanadium, iron, cobalt or neodymium, especially vanadium;
E is $NR^D$ or O, especially $NR^D$;
$R^D$ independently each occurrence is hydrogen, $C_{1-24}$ hydrocarbyl, $C_{1-24}$ hydrocarbyloxy-substituted hydrocarbyl or $C_{1-24}$ hydrocarbylamino-substituted hydrocarbyl, and optionally, two $R^D$ groups on the same ring are joined together in a ring structure;

Most highly preferred pyridine metal complexes according to the present invention correspond to the formula IV:

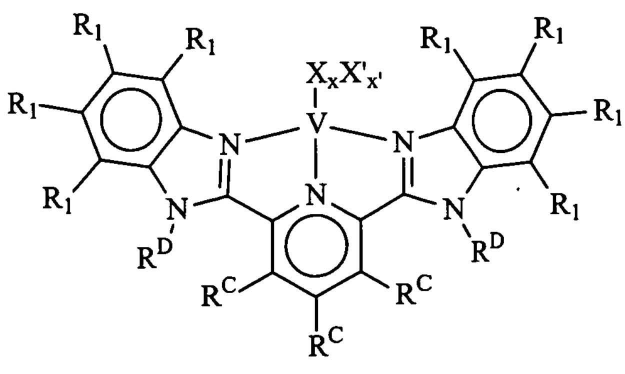

**Formula IV**

wherein:

$R^C$ independently each occurrence is hydrogen, $C_{1-20}$, preferably $C_{1-6}$, hydrocarbyl; $C_{1-20}$ preferably $C_{1-6}$, keto-hydrocarbyl; $C_{1-20}$, preferably $C_{1-6}$, hydrocarbyloxy; $C_{1-20}$, preferably $C_{1-6}$, hydrocarbylamino; halide; especially methyl, ethyl, propyl, isopropyl, butyl, hexyl, cyclohexyl, octyl, benzyl, acetyl, methoxy, ethoxy, octanoxy, phenoxy, amino, methylamino, dimethylamino, ethylamino, diethylamino, morpholino, piperidino, pyrrolidino; benzylamino, and, of the halides, especially fluoro, chloro, bromo;
$R_1$ independently each occurrence is hydrogen or $C_{1-6}$ hydrocarbyl, especially methyl, ethyl, isopropyl, cyclohexyl,

$C_{1-6}$ hydrocarbyloxy, especially methoxy, methoxymethyl, methoxyethyl, $C_{1-6}$ hydrocarbylamino, especially dimethylamino, piperidino, pyrrolidino; halide, especially fluoro, chloro, bromo;

$R^D$ independently each occurrence is hydrogen or $C_{1-24}$ hydrocarbyl, especially methyl, ethyl, propyl, isopropyl, butyl, pentyl, cyclopentyl, hexyl, cyclohexyl, octyl, dodecyl, tetradecyl, hexadecyl, octadecyl; $C_{1-24}$, preferably $C_{1-8}$, hydrocarbyloxy-substituted hydrocarbyl, especially methoxymethyl, methoxylethyl, ethoxyethyl, propoxyethyl, butoxyethyl, hexyloxyethyl, acetyl, benzoyl, or $C_{1-24}$, preferably $C_{1-8}$, hydrocarbylamino-substituted hydrocarbyl, especially dimethylaminomethyl, diethylaminomethyl, dimethylaminoethyl; diethylaminoethyl, morpholinomethyl, piperidinomethyl, anilinomethyl;

X independently each occurrence is chloride, bromide, $C_{1-10}$, preferably $C_{1-7}$, hydrocarbyl, or $C_{1-10}$, preferably $C_{1-7}$, hydrocarbylsilylhydrocarbyl, especially chloride, methyl, neopentyl, trimethylsilylmethyl, benzyl;

x is 1, 2, 3, or 4, preferably 2 or 3;

X' is THF, DME, TEA, TMEDA, Et2O;

x' is a number from zero to two.

Most highly preferred pyridine metal complexes according to the present invention correspond to the formula V:

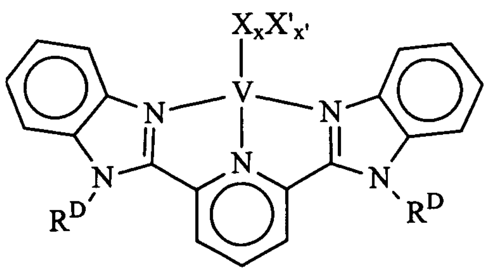

Formula V

wherein:

$R^D$ independently each occurrence is hydrogen or $C_{1-24}$ hydrocarbyl, especially hydrogen, methyl, ethyl, propyl, isopropyl, butyl, pentyl, cyclopentyl, hexyl, cyclohexyl, octyl, dodecyl, tetradecyl, hexadecyl, octadecyl, phenyl, benzyl;

X independently each occurrence is chloride, bromide, methyl, neopentyl, trimethylsilylmethyl;

x is 2 or 3;

X' is THF, DME, TEA, TMEDA, Et2O

x' is a number from zero to two.

The metal complexes of the invention represented by the foregoing formulae may optionally be present as Lewis base adducts, especially as adducts of THF, DME, TEA, TMEDA or Et20.

Exemplary, but non-limiting metal complexes according to the invention include the following vanadium dichloride and trichloride complexes:

[2,6-bis{1-[(phenyl)imino]ethyl}pyridine]vanadium dichloride; [2,6-bis{1-[(2,6-dimethylphenyl)imino]ethyl}pyridine]vanadium dichloride; [2,6-bis{1-[(2,6-diethylphenyl)imino]ethyl}pyridine]vanadium dichloride; [2,6-bis{1-[(2,6-dipropylphenyl)imino]ethyl}pyridine]vanadium dichloride; [2,6-bis{1-[(2,6-diisopropylphenyl)imino]ethyl}pyridine]vanadium dichloride; [2,6-bis{1-[(2,6-dibutylphenyl)imino]ethyl}pyridine]vanadium dichloride; [2,6-bis{1-[(2,6-dicyclohexylphenyl)imino]ethyl}pyridine]vanadium dichloride; [2,6-bis{[(phenyl)imino]methyl}pyridine]vanadium dichloride; [2,6-bis{[(2,6-dimethylphenyl)imino]methyl}pyridine]vanadium dichloride; [2,6-bis{[(2,6-diethylphenyl)imino]methyl}pyridine]vanadium dichloride; [2,6-bis{[(2,6-dipropylphenyl)imino]methyl}pyridine]vanadium dichloride; [2,6-bis{[(2,6-diisopropylphenyl)imino]methyl}pyridine]vanadium dichloride; [2,6-bis{[(2,6-dibutylphenyl)imino]methyl}pyridine]vanadium dichloride; [2,6-bis{[(2,6-dicyclohexylphenyl)imino]methyl}pyridine]vanadium dichloride; [2,6-bis{1-[(4-methylphenyl)imino]ethyl}pyridine]vanadium dichloride; [2,6-bis{1-[(2,4,6-trimethylphenyl)imino]ethyl}pyridine]vanadium dichloride; [2,6-bis{1-[(2,4,6-triethylphenyl)imino]ethyl}pyridine]vanadium dichloride; [2,6-bis{1-[(2,4,6-tripropylphenyl)imino]ethyl}pyridine]vanadium dichloride; [2,6-bis{1-[(2,4,6-triisopropylphenyl) imino]ethyl}pyridine]vanadium dichloride; [2,6-bis{1-[(2,4,6-tributylphenyl)imino]ethyl}pyridine]vanadium dichloride; [2,6-bis{1-[(2,4,6-tricyclohexylphenyl)imino]ethyl}pyridine]vanadium dichloride; [2,6-bis{1-[(2,6-diethyl-4-methyl phenyl)imino]ethyl}pyridine]vanadium dichloride; [2,6-bis{1-[(2,6-dipropyl-4-methylphenyl)imino]ethyl}pyridine]vanadium dichloride; [2,6-bis{1-[(2,6-diisopropyl-4-methyl phenyl)imino]ethyl}pyridine]vanadium dichloride; [2,6-bis{1-[(2,6-dibutyl-4-methylphenyi)imino]ethyl}pyridine]vanadium dichloride; [2,6-bis{1-[(2,6-dicyclohexyl-4-methylphenyl)imino]ethyl}pyridine]vanadium dichloride; [2,6-bis{[(4-methylphenyl)imino]methyl}pyridine]vanadium dichloride; [2,6-bis{[(2,4,6-trimethylphenyl)imino]methyl}pyridine]vanadium dichloride; [2,6-bis{[(2,4,6-triethylphenyl)imino]methyl}pyridine]vanadium dichloride; [2,6-bis{[(2,4,6-tripropylphenyl)imino]methyl}pyridine]vanadium dichloride; [2,6-bis{[(2,4,6-triisopropylphenyl)imino]methyl}pyridine]vanadium dichloride; [2,6-bis{[ (2,4,6-tributylphenyl)imino]methyl}pyridine]vanadium dichloride; [2,6-bis{[(2,4,6-tricyclohexylphenyl)imino]methyl}pyridine]vanadium dichloride; [2,6-bis{[(2,6-diethyl-4-methylphenyl)imino]methyl}pyridine]vanadium dichloride; [2,6-bis{[(2,6-dipropyl-4-methylphenyl)imino]methyl}pyridine]vanadium dichloride; [2,6-bis{[(2,6-diisopropyl-4-methylphenyl)imino]methyl}pyridine]vanadium dichloride; [2,6-bis{[(2,6-dibutyl-4-methylphenyl)imino]methyl} pyridine]vanadium dichloride; [2,6-bis{[(2,6-dicyclohexyl-4-methylphenyl)imino]methyl}pyridine]vanadium dichloride; [2,6-bis{1-[(phenyl)imino]ethyl}-4-methylpyridine]vanadium dichloride; [2,6-bis{1-[(2,6-dimethylphenyl)imino] ethyl}-4-methylpyridine]vanadium dichloride; [2,6-bis{1-[(2,6-diethylphenyl)imino]ethyl}-4-methylpyridine]vanadium dichloride; [2,6-bis{1-[(2,6-dipropylphenyl)imino]ethyl}-4-methylpyridine]vanadium dichloride; [2,6-bis {1-[(2,6-diisopropylphenyl)imino]ethyl}-4-methylpyridine]vanadium dichloride; [2,6-bis{1-[(2,6-dibutylphenyl)imino]ethyl}-4-methylpyridine]vanadium dichloride; [2,6-bis{1-((2,6-dicyclohexylphenyl)imino]ethyl}-4-methylpyridine]vanadium dichloride; [2,6-bis{[(phenyl)imino]methyl}-4-methylpyridine]vanadium dichloride; [2,6-bis{[ (2,6-dimethylphenyl)imino]methyl}-4-methylpyridine]vanadium dichloride; [2,6-bis{[(2,6-diethylphenyl)imino]methyl}-4-methylpyridine]vanadium dichloride; [2,6-bis{[(2,6-dipropylphenyl)imino]methyl}-4-methylpyridine]vanadium dichloride; [2,6-bis{[(2,6-diisopropylphenyl)imino]methyl}-4-methylpyridine]vanadium dichloride; [2,6-bis{[ (2,6-dibutylphenyl)imino]methyl}-4-methylpyridine]vanadium dichloride; [2,6-bis{[(2,6-dicyclohexylphenyl)imino] methyl}-4-methylpyridine]vanadium dichloride; [2,6-bis{1-[(4-methylphenyl)imino]ethyl}-4-methylpyridine]vanadium dichloride; [2,6-bis{1 -[(2,4,6-trimethylphenyl)imino]ethyl}-4-methylpyridine]vanadium dichloride; [2,6-bis {1-((2,4,6-triethylphenyl)imino]ethyl}-4-methylpyridine]vanadium dichloride; [2,6-bis{1-[(2,4,6-tripropylphenyl)imino]ethyl}-4-methylpyridine]vanadium dichloride; [2,6-bis{1 -[(2,4,6-triisopropylphenyl)imino]ethyl}-4-methylpyridine]vanadium dichloride; [2,6-bis{1 -[(2,4,6-tributylphenyl)imino]ethyl}-4-methylpyridine]vanadium dichloride; [2,6-bis{1-[(2,4,6-tricyclohexylphenyl)imino]ethyl}-4-methylpyridine]vanadium dichloride; [2,6-bis{1-[(2,6-diethyl-4-methylphenyl)imino]ethyl}-4-methylpyridine]vanadium dichloride; [2,6-bis{1-[(2,6-dipropyl-4-methylphenyl)imino]ethyl}-4-methylpyridine]vanadium dichloride; [2,6-bis{1-[(2,6-diisopropyl-4-methylphenyl)imino]ethyl}-4-methylpyridine]vanadium dichloride; [2,6-bis{1-[(2,6-dibutyl-4-methylphenyl)imino]ethyl}-4-methylpyridine]vanadium dichloride; [2,6-bis{1-[(2,6-dicyclohexyl-4-methylphenyl)imino]ethyl}4-methylpyridine]vanadium dichloride; [2,6-bis{[(4-methylphenyl)imino]methyl}-4-methylpyridine]vanadium dichloride; [2,6-bis{[(2,4,6-trimethylphenyl) imino]methyl}-4-methylpyridine]vanadium dichloride; [2,6-bis{[(2,4,6-triethylphenyl)imino]methyl}-4-methylpyridine]vanadium dichloride; [2,6-bis{[(2,4,6-tripropylphenyl)imino]methyl}-4-methylpyridine]vanadium dichloride; [2,6-bis{[(2,4,6-triisopropylphenyl)imino]methyl}-4-methylpyridine]vanadium dichloride; [2,6-bis{[(2,4,6-tributylphenyl)imino]methyl}-4-methylpyridine]vanadium dichloride; [2,6-bis{[(2,4,6-tricyclohexylphenyl)imino]methyl}-4-methylpyridine]vanadium dichloride; [2,6-bis{[(2,6-diethyl-4-methylphenyl)imino]methyl}-4-methylpyridine]vanadium dichloride; [2,6-bis{[(2,6-dipropyl-4-methylphenyl)imino]methyl}-4-methylpyridine]vanadium dichloride; [2,6-bis{[(2,6-diisopropyl-4-methylphenyl)imino]methyl}-4-methylpyridine]vanadium dichloride; [2,6-bis{[(2,6-dibutyl-4-methylphenyl)imino]methyl}-4-methylpyridine]vanadium dichloride; [2,6-bis{[(2,6-dicyclohexyl-4-methylphenyl)imino]methyl}-4-methylpyridine]vanadium dichloride; [2,6-bis{1-[(phenyl)imino]ethyl}-4-chloropyridine]vanadium dichloride; [2,6-bis{1-[(2,6-dimethylphenyl)imino]ethyl}-4-chloropyridine]vanadium dichloride; [2,6-bis {1-[(2,6-diethylphenyl)imino]ethyl}-4-chloropyridine]vanadium dichloride; [2,6-bis{1-[(2,6-dipropylphenyl)imino] ethyl}-4-chioropyridine]vanadium dichloride; [2,6-bis{1-[(2,6-diisopropylphenyl)imino]ethyl}-4-chloropyridine]vanadium dichloride; [2,6-bis{1-[(2,6-dibutylphenyl)imino]ethyl}-4-chloropyridine]vanadium dichloride; [2,6-bis {1-[(2,6-dicyclohexylphenyl)imino]ethyl}-4-chloropyridine]vanadium dichloride; [2,6-bis{[(phenyl)imino]methyl}-4-chloropyridine]vanadium dichloride; [2,6-bis{[(2,6-dimethylphenyl)imino]methyl}-4-chloropyridine]vanadium dichloride; [2,6-bis{[(2,6-diethylphenyl)imino]methyl}-4-chloropyridine]vanadium dichloride; [2,6-bis{[(2,6-dipropylphenyl)imino]methyl}4-chloropyridine]vanadium dichloride; [2,6-bis{[(2,6-diisopropylphenyl)imino]methyl}-4-chloropyridine]vanadium dichloride; [2,6-bis{[(2,6-dibutylphenyl)imino]methyl}-4-chloropyridine]vanadium

dichloride; [2,6-bis{[(2,6-dicyclohexylphenyl)imino]methyl}-4-chloropyridine]vanadium dichloride; [2,6-bis{1-[(4-methylphenyl)imino]ethyl}-4-chloropyridine]vanadium dichloride; [2,6-bis{1-[(2,4,6-trimethylphenyl)imino]ethyl}-4-chloropyridine]vanadium dichloride; [2,6-bis{1-[(2,4,6-triethylphenyl)imino]ethyl}-4-chloropyridine]vanadium dichloride; [2,6-bis{1-[(2,4,6-tripropylphenyl)imino]ethyl}-4-chloropyridine]vanadium dichloride; [2,6-bis{1-[(2,4,6-triisopropylphenyl)imino]ethyl}-4-chloropyridine]vanadium dichloride; [2,6-bis{1-[(2,4,6-tributylphenyl)imino]ethyl}-4-chloropyridine]vanadium dichloride; [2,6-bis{1-[(2,4,6-tricyclohexylphenyl)imino]ethyl}-4-chloropyridine]vanadium dichloride; [2,6-bis{1-[(2,6-diethyl-4-methylphenyl)imino]ethyl}-4-chloropyridine]vanadium dichloride; [2,6-bis{1-[(2,6-dipropyl-4-methylphenyl)imino]ethyl}-4-chloropyridine]vanadium dichloride; [2,6-bis{1-((2,6-diisopropyl-4-methylphenyl)imino]ethyl}-4-chloropyridine]vanadium dichloride; (2,6-bis{1-((2,6-dibutyl-4-methylphenyl)imino]ethyl}-4-chloropyridine]vanadium dichloride; [2,6-bis{1-[(2,6-dicyclohexyl-4-methylphenyl)imino]ethyl}-4-chloropyridine]vanadium dichloride; [2,6-bis{[(4-methylphenyl)imino]methyl}-4-chloropyridine]vanadium dichloride; [2,6-bis{[(2,4,6-trimethylphenyl)imino]methyl}-4-chloropyridine]vanadium dichloride; [2,6-bis{[(2,4,6-triethylphenyl)imino]methyl}-4-chloropyridine]vanadium dichloride; [2,6-bis{[(2,4,6-tripropylphenyl)imino]methyl}-4-chloropyridine]vanadium dichloride; [2,6-bis{[(2,4,6-triisopropylphenyl)imino]methyl}4-chloropyridine]vanadium dichloride; [2,6-bis{[(2,4,6-tributylphenyl)imino]methyl}-4-chloropyridine]vanadium dichloride; [2,6-bis{[(2,4,6-tricyclohexylphenyl)imino]methyl}4-chloropyridine]vanadium dichloride; [2,6-bis{[(2,6-diethyl-4-methylphenyl)imino]methyl}-4-chloropyridine]vanadium dichloride; [2,6-bis{[(2,6-dipropyl-4-methylphenyl)imino]methyl}-4-chloropyridine]vanadium dichloride; [2,6-bis{[(2,6-diisopropyl-4-methylphenyl)imino]methyl}-4-chloropyridine]vanadium dichloride; [2,6-bis{[(2,6-dibutyl-4-methylphenyl)imino]methyl}-4-chloropyridine]vanadium dichloride; [2,6-bis{[(2,6-dicyclohexyl-4-methylphenyl)imino]methyl}-4-chloropyridine]vanadium dichloride; [2,6-bis{1-[(methyl)imino]ethyl}pyridine]vanadium dichloride; [2,6-bis{1-[(ethyl)imino]ethyl}pyridine]vanadium dichloride; [2,6-bis{1-[(isopropyl)imino]ethyl}pyridine]vanadium dichloride; [2,6-bis{1-[(cyclohexyl)imino]ethyl}pyridine]vanadium dichloride; [2,6-bis{1-[(methyl)imino]methyl}pyridine]vanadium dichloride; [2,6-bis{1-[(ethyl)imino]methyl}pyridine]vanadium dichloride; [2,6-bis{1-[(isopropyl)imino]methyl}pyridine]vanadium dichloride; [2,6-bis{1-[(cyclohexyl)imino]methyl}pyridine]vanadium dichloride; [2,6-bis{1-[(methyl)imino]ethyl}-4-methylpyridine]vanadium dichloride; [2,6-bis{1-[(ethyl)imino]ethyl}-4-methylpyridine]vanadium dichloride; [2,6-bis{1-((isopropyl)imino]ethyl}-4-methylpyridine]vanadium dichloride; [2,6-bis{1 -[(cyclohexyl)imino]ethyl}-4-methylpyridine]vanadium dichloride; [2,6-bis{1-[(methyl)imino]methyl}-4-methylpyridine]vanadium dichloride; [2,6-bis{1 -[(ethyl)imino]methyl}-4-methylpyridine]vanadium dichloride; [2,6-bis{1-((isopropyl)imino]methyl}-4-methylpyridine]vanadium dichloride; [2,6-bis{1-[(cyclohexyl)imino]methyl}-4-methylpyridine]vanadium dichloride; 2,6-diformylpyridine bis(pyrrolidylhydrazone)vanadium dichloride; 2,6-diformylpyridine bis(piperidylhydrazone)vanadium dichloride; 2,6-diformylpyridine bis(phenylhydrazone)vanadium dichloride; 2,6-diformylpyridine bis(methylhydrazone)vanadium dichloride; 2,6-diformyl-4-chloropyridine bis(methylhydrazone)vanadium dichloride; 2,6-diacetylpyridine bis(pyrrolidylhydrazone)vanadium dichloride; 2,6-diacetylpyridine bis(piperidylhydrazone)vanadium dichloride; 2,6-diacetylpyridine bis(phenylhydrazone)vanadium dichloride; 2,6-diacetylpyridine bis(methylhydrazone)vanadium dichloride; 2,6-diacetyl-4-chloropyridine bis(phenylhydrazone)vanadium dichloride; 2,6-diformyl-4-methyl-pyridine bis(pyrroiidyihydrazone)vanadium dichloride; 2,6-diformyl-4-methyl-pyridine bis(piperidylhydrazone)vanadium dichloride; 2,6-diformyl-4-methyl-pyridine bis(phenyihydrazone)vanadium dichloride; 2,6-diformyl-4-methyl-pyridine bis(methylhydrazone)vanadium dichloride; 2,6-diacetyl-4-methyl-pyridine bis(pyrrolidylhydrazone)vanadium dichloride; 2,6-diacetyl-4-methyl-pyridine bis(piperidylhydrazone)vanadium dichloride; 2,6-diacetyl-4-methyl-pyridine bis(phenylhydrazone)vanadium dichloride; 2,6-diacetyl-4-methyl-pyridine bis(methylhydrazone)vanadium dichloride; [2,6-bis-(2-oxazolin-2-yl)pyridine]vanadium dichloride; [2,6-bis-(4S-isopropyl-2-oxazolin-2-yl)pyridine]vanadium dichloride; [2,6-bis-(4R-isopropyl-2-oxazolin-2-yl)pyridine]vanadium dichloride; [2,6-bis-(4-methyl-2-oxazolin-2-yl)pyridine]vanadium dichloride; [2,6-bis-(4-t-butyl-2-oxazolin-2-yl)pyridine]vanadium dichloride; [2,6-bis-(4,4-dimethyl-2-oxazolin-2-yl)pyridine]vanadium dichloride; [2,6-bis-(4-phenyl-2-oxazolin-2-yl)pyridine]vanadium dichloride; [2,6-bis-(5-phenyl-2-oxazolin-2-yl)pyridine]vanadium dichloride; [2,6-bis-(4,5-diphenyl-2-oxazolin-2-yl)pyridine]vanadium dichloride; [2,6-bis-(4-benzyl-2-oxazolin-2-yl)pyridine]vanadium dichloride; [2,6-bis-(4-methoxymethyl-2-oxazolin-2-yl)pyridine]vanadium dichloride; [2,6-bis-(4-methyl-2-oxazolin-2-yl)pyridine]vanadium dichloride; [2,6-bis-(4S-isopropyl-4-methyl-2-oxazolin-2-yl)pyridine]vanadium dichloride; [2,6-bis-(4R-isopropyl-4-methyl-2-oxazolin-2-yl)pyridine]vanadium dichloride; [2,6-bis-(4-methyl-4-methyl-2-oxazolin-2-yl)pyridine]vanadium dichloride; [2,6-bis-(4-t-butyl-4-methyl-2-oxazolin-2-yl)pyridine]vanadium dichloride; [2,6-bis-(4,4-dimethyl-4-methyl-2-oxazolin-2-yl)pyridine]vanadium dichloride; [2,6-bis-(4-phenyl-4-methyl-2-oxazolin-2-yl)pyridine]vanadium dichloride; [2,6-bis-(5-phenyl-4-methyl-2-oxazolin-2-yl)pyridine]vanadium dichloride; [2,6-bis-(4,5-diphenyl-4-methyl-2-oxazolin-2-yl)pyridine]vanadium dichloride; [2,6-bis-(4-benzyl-4-methyl-2-oxazolin-2-yl)pyridine]vanadium dichloride; [2,6-bis-(4-methoxymethyl-4-methyl-2-oxazolin-2-yl)pyridine]vanadium dichloride; [2,6-bis(imidazol-2-yl)pyridine]vanadium dichloride; [2,6-bis(1-methylimidazol-2-yl)pyridine]vanadium dichloride; [2,6-bis(1-ethylimidazol-2-yl)pyridine]vanadium dichloride; [2,6-bis(1 -butylimidazoi-2-yl)pyridine]vanadium dichloride; [2,6-bis(1 -phenylimidazol-2-yl)pyridine]vanadium dichloride; [2,6-bis(1-benzylimidazol-2-yl)pyridine]vanadium dichloride; [2,6-bis(1-phenylimidazol-2-yl)pyridine]vanadium dichloride; [2,6-bls(1-acetylimidazol-2-yl)pyridine]vanadium dichloride; [2,6-bis(1-(4-methoxyphenyl)imidazol-2-yl)pyridine]vanadium dichloride; [2,6-bis(1-trimethylsilylimidazol-2-yl)pyridine]vanadium dichloride; [2,6-bis(1,5-dimethylimidazol-2-yl)pyridine]vanadium dichloride; [2,6-bis(1,5-dimethyl-4-phenylimidazol-2-yl)pyridine]vanadium dichloride; [2,6-bis(1-methyl-5-nitroimidazol-2-yl)pyridine]vanadium dichloride; [2,6-bis(1,4,5-trimethylimidazol-2-yl)pyridine]vanadium dichloride; [2,6-bis(4,5-dimethylimidazol-2-yl)pyridine]vanadium dichloride; [2,6-bis(4,5-diphenylimidazol-2-yl)pyridine] vanadium dichloride; [2,6-bis(4-methylimidazol-2-yl)pyridine]vanadium dichloride; [2,6-bis(4-(2-methoxethyl)imidazol-2-yl)pyridine]vanadium dichloride; [2,6-bis(benzimidazol-2-yl)pyridine]vanadium dichloride; [2,6-bis(1 -methylbenzimidazol-2-yl)pyridine]vanadium dichloride; [2,6-bis(1-ethylbenzimidazol-2-yl)pyridine]vanadium dichloride; [2,6-bis(1-propylbenzimidazol-2-yl)pyridine]vanadium dichloride; [2,6-bis(1-isopropylbenzimidazol-2-yl)pyridine]vanadium dichloride; [2,6-bis(1-butylbenzimidazol-2-yl)pyridine]vanadium dichloride; [2,6-bis(1 -pentylbenzimidazol-2-yl)pyridine]vanadium dichloride; [2,6-bis(1-cyclopentylbenzimidazol-2-yl)pyridine]vanadium dichloride; [2,6-bis(1-hexylbenzimidazol-2-yl)pyridine]vanadium dichloride; [2,6-bis(1-cyclohexylbenzimidazol-2-yl)pyridine]vanadium dichloride; [2,6-bis(1-octylbenzimidazol-2-yl)pyridine]vanadium dichloride; [2,6-bis (1-decylbenzimidazol-2-yl)pyridine]vanadium dichloride; [2,6-bis(1-dodecylbenzimidazol-2-yl)pyridine]vanadium dichloride; [2,6-bis(1-tetradecylbenzimidazol-2-yl)pyridine]vanadium dichloride; [2,6-bis(1-hexadecylbenzimidazol-2-yl)pyridine]vanadium dichloride; [2,6-bis(1-octadecylbenzimidazol-2-yl)pyridine]vanadium dichloride; [2,6-bis(1-benzylbenzimidazol-2-yl)pyridine]vanadium dichloride; [2,6-bis(1-phenylbenzimidazol-2-yl)pyridine]vanadium dichloride; [2,6-bis(4-methylbenzimidazol-2-yl)pyridine]vanadium dichloride; [2,6-bis(5-methylbenzimidazol-2-yl)pyridine]vanadium dichloride; [2,6-bis(6-methylbenzimidazol-2-yl)pyridine]vanadium dichloride; [2,6-bis (7-methylbenzimidazol-2-yl)pyridine]vanadium dichloride; [2,6-bis(5-ethylbenzimidazol-2-yl)pyridine]vanadium dichloride; [2,6-bis(5-propylbenzimidazol-2-yl)pyridine]vanadium dichloride; [2,6-bis(5-isopropylbenzimidazol-2-yl)pyridine]vanadium dichloride; [2,6-bis(5-butylbenzimidazol-2-yl)pyridine]vanadium dichloride; [2,6-bis (5-pentylbenzimidazol-2-yl)pyridine]vanadium dichloride; [2,6-bis(5-cyclopentylbenzimidazol-2-yl)pyridine]vanadium dichloride; [2,6-bis(5-hexylbenzimidazol-2-yl)pyridine]vanadium dichloride; [2,6-bis(1-acetylbenzimidazol-2-yl)pyridine]vanadium dichloride; [2,6-bis(1-benzoylbenzimidazol-2-yl)pyridine]vanadium dichloride; [2,6-bis (1,5-dimethylbenzimidazol-2-yl)pyridine]vanadium dichloride; [2,6-bis(4-methoxybenzimidazol-2-yl)pyridine]vanadium dichloride; [2,6-bis(5-methoxybenzimidazol-2-yl)pyridine]vanadium dichloride; [2,6-bis(6-methoxybenzimidazol-2-yl)pyridine]vanadium dichloride; [2,6-bis(7-methoxybenzimidazol-2-yl)pyridine]vanadium dichloride; [2,6-bis(1-methyl-5-methoxybenzimidazol-2-yl)pyridine]vanadium dichloride; [2,6-bis(1-(methoxymethyl)benzimidazol-2-yl)pyridine]vanadium dichloride; [2,6-bis(1-(ethoxymethyl)benzimidazol-2-yl)pyridine]vanadium dichloride; [2,6-bis(1-(propoxymethyl)benzimidazol-2-yl)pyridine]vanadium dichloride; [2,6-bis(1-(butoxymethyl)benzimidazol-2-yl)pyridine]vanadium dichloride; [2,6-bis(1-(hexyloxymethyl)benzimidazol-2-yl)pyridine]vanadium dichloride; [2,6-bis(1-(2-methoxyethyl)benzimidazol-2-yl)pyridine]vanadium dichloride; [2,6-bis(1-(2-ethoxyethyl) benzimidazol-2-yl)pyridine]vanadium dichloride; [2,6-bis(1-(2-propoxyethyl)benzimidazol-2-yl)pyridine]vanadium dichloride; [2,6-bis(1-(2-butoxyethyl)benzimidazol-2-yl)pyridine]vanadium dichloride; [2,6-bis(1-(2-hexyloxyethyl) benzimidazol-2-yl)pyridine]vanadium dichloride; [2,6-bis(1-(dimethylaminomethyl)benzimidazol-2-yl)pyridine]vanadium dichloride; [2,6-bis(1-(diethylaminomethyl)benzimidazol-2-yl)pyridine]vanadium dichloride; [2,6-bis (1-(dimethylaminoethyl)benzimidazol-2-yl)pyridine]vanadium dichloride; [2,6-bis(1-(diethylaminoethyl)benzimidazol-2-yl)pyridine]vanadium dichloride; [2,6-bis(1-(morpholinomethyl)benzimidazol-2-yl)pyridine]vanadium dichloride; [2,6-bis(1-(anilinomethyl)benzimidazol-2-yl)pyridine]vanadium dichloride; [2,6-bis(1-(piperidinomethyl)benzimidazol-2-yl)pyridine]vanadium dichloride; [2,6-bis(1-(pyrrolidinomethyl)benzimidazol-2-yl)pyridine]vanadium dichloride; [2,6-bis(5-(dimethylamino)benzimidazol-2-yl)pyridine]vanadium dichloride; [2,6-bis(5-(piperidino)benzimidazol-2-yl)pyridine]vanadium dichloride; [2,6-bis(5-(pyrrolidino)benzimidazol-2-yl)pyridine]vanadium dichloride; [2,6-bis(5,6-dimethyl-1-(piperidinomethyl)benzimidazol-2-yl)pyridine]vanadium dichloride;

[2,6-bis{1-[(phenyl)imino]ethyl}pyridine]vanadium trichloride; [2,6-bis{1-[(2,6-dimethylphenyl)imino]ethyl}pyridine] vanadium trichloride; [2,6-bis{1-[(2,6-diethylphenyl)imino]ethyl}pyridine]vanadium trichloride; [2,6-bis {1-[(2,6-dipropylphenyl)imino]ethyl}pyridine]vanadium trichloride; [2,6-bis{1-[(2,6-diisopropylphenyl)imino]ethyl} pyridine]vanadium trichloride; [2,6-bis{1-[(2,6-dibutylphenyl)imino]ethyl}pyridine]vanadium trichloride; [2,6-bis {1-[(2,6-dicyclohexylphenyl)imino]ethyl}pyridine]vanadium trichloride; [2,6-bis{[(phenyl)imino]methyl}pyridine]vanadium trichloride; [2,6-bis{[(2,6-dimethylphenyl)imino]methyl}pyridine]vanadium trichloride; [2,6-bis{[(2,6-diethylphenyl)imino]methyl}pyridine]vanadium trichloride; [2,6-bis{[(2,6-dipropylphenyl)imino]methyl}pyridine]vanadium trichloride; [2,6-bis{[(2,6-diisopropylphenyl)imino]methyl}pyridine]vanadium trichloride; [2,6-bis{[(2,6-dibutylphenyl)imino]methyl}pyridine]vanadium trichloride; [2,6-bis{[(2,6-dicyclohexylphenyl)imino]methyl}pyridine]vanadium trichloride; [2,6-bis{1-[(4-methylphenyl)imino]ethyl}pyridine]vanadium trichloride; [2,6-bis{1-[(2,4,6-trimethylphenyl)imino]ethyl}pyridine]vanadium trichloride; [2,6-bis{1-[(2,4,6-triethylphenyl)imino]ethyl}pyridine]vanadium trichloride; [2,6-bis{1-[(2,4,6-tripropylphenyl)imino]ethyl}pyridine]vanadium trichloride; [2,6-bis{1-[(2,4,6-triisopropylphenyl)imino]ethyl}pyridine]vanadium trichloride; [2,6-bis{1-[(2,4,6-tributylphenyl)imino]ethyl}pyridine]vanadium trichloride; [2,6-bis{1-[(2,4,6-tricyclohexylphenyl)imino]ethyl}pyridine]vanadium trichloride; [2,6-bis{1-[(2,6-diethyl-4-methylphenyl)imino]ethyl}pyridine]vanadium trichloride; [2,6-bis{1-[(2,6-dipropyl-4-methylphenyl)imino]ethyl}pyridine]vanadium trichloride; [2,6-bis{1-[(2,6-diisopropyl-4-methylphenyl)imino]ethyl}pyridine]vanadium trichloride; [2,6-bis{1-[(2,6-dibutyl-4-methylphenyl)imino]ethyl}pyridine]vanadium trichloride; [2,6-bis{1-[(2,6-dicyclohexyl-4-methylphenyl)imino]ethyl}pyridine]vanadium trichloride; [2,6-bis{[(4-methylphenyl)imino]methyl}pyridine]vanadium trichloride; [2,6-bis{[(2,4,6-trimethylphenyl)imino]methyl}pyridine]vanadium trichloride; [2,6-bis{[(2,4,6-triethylphenyl)imino]methyl}pyridine]vanadium trichloride; [2,6-bis{[(2,4,6-tripropylphenyl)imino]methyl}pyridine]vanadium trichloride; [2,6-bis{[(2,4,6-triisopropylphenyl)imino]methyl}pyridine]vanadium trichloride; [2,6-bis{[(2,4,6-tributylphenyl)imino]methyl}pyridine]vanadium trichloride; [2,6-bis{[(2,4,6-tricyclohexylphenyl)imino]methyl}pyridine]vanadium trichloride; [2,6-bis{[(2,6-diethyl-4-methylphenyl)imino]methyl}pyridine]vanadium trichloride; [2,6-bis{[(2,6-dipropyl-4-methylphenyl)imino]methyl}pyridine]vanadium trichloride; [2,6-bis([(2,6-diisopropyl-4-methylphenyl)imino]methyl}pyridine]vanadium trichloride; [2,6-bis{[(2,6-dibutyl-4-methylphenyl)imino]methyl}pyridine]vanadium trichloride; [2,6-bis{[(2,6-dicyclohexyl-4-methylphenyl)imino]methyl}pyridine]vanadium trichloride; [2,6-bis{1-[(phenyl)imino]ethyl}-4-methylpyridine]vanadium trichloride; [2,6-bis{1-[(2,6-dimethylphenyl)imino]ethyl}-4-methylpyridine]vanadium trichloride; [2,6-bis{1-[(2,6-diethylphenyl)imino]ethyl}-4-methylpyridine]vanadium trichloride; [2,6-bis{1-[(2,6-dipropylphenyl)imino]ethyl}-4-methylpyridine]vanadium trichloride; [2,6-bis(1-[(2,6-diisopropylphenyl)imino]ethyl}-4-methylpyridine]vanadium trichloride; [2,6-bis{1-[(2,6-dibutylphenyl)imino]ethyl}-4-methylpyridine]vanadium trichloride; [2,6-bis{1-[(2,6-dicyclohexylphenyl)imino]ethyl}-4-methylpyridine]vanadium trichloride; [2,6-bis{[(phenyl)imino]methyl}-4-methylpyridine]vanadium trichloride; [2,6-bis{[(2,6-dimethylphenyl)imino]methyl}-4-methylpyridine]vanadium trichloride; [2,6-bis{[(2,6-diethylphenyl)imino]methyl}-4-methylpyridine]vanadium trichloride; [2,6-bis{[(2,6-dipropylphenyl)imino]methyl}-4-methylpyridine]vanadium trichloride; [2,6-bis{[(2,6-diisopropylphenyl)imino]methyl}-4-methylpyridine]vanadium trichloride; [2,6-bis([(2,6-dibutylphenyl)imino]methyl}-4-methylpyridine]vanadium trichloride; [2,6-bis{[(2,6-dicyclohexylphenyl)imino]methyl}-4-methylpyridine]vanadium trichloride; [2,6-bis{1-[(4-methylphenyl)imino]ethyl}-4-methylpyridine]vanadium trichloride; [2,6-bis{1-[(2,4,6-trimethylphenyl)imino]ethyl}-4-methylpyridine]vanadium trichloride; [2,6-bis(1-[(2,4,6-triethylphenyl)imino]ethyl}-4-methylpyridine]vanadium trichloride; [2,6-bis{1-[(2,4,6-tripropylphenyl )imino]ethyl}-4-methylpyridine]vanadium trichloride; [2,6-bis(1-[(2,4,6-triisopropylphenyl)imino]ethyl}-4-methylpyridine]vanadium trichloride; [2,6-bis{1-[(2,4,6-tributylphenyl)imino]ethyl}-4-methylpyridine]vanadium trichloride; [2,6-bis{1-[(2,4,6-tricyclohexylphenyl)imino]ethyl}-4-methylpyridine]vanadium trichloride; [2,6-bis{1-[(2,6-diethyl-4-methylphenyl)imino]ethyl}-4-methylpyridine]vanadium trichloride; [2,6-bis{1-[(2,6-dipropyl-4-methylphenyl)imino]ethyl-4-methylpyridine]vanadium trichloride; [2,6-bis{1-[(2,6-diisopropyl-4-methylphenyl)imino]ethyl}-4-methylpyridine]vanadium trichloride; [2,6-bis{1-[(2,6-dibutyl-4-methylphenyl)imino]ethyl}-4-methylpyridine]vanadium trichloride; [2,6-bis(1-[(2,6-dicyclohexyl-4-methylphenyl)imino]ethyl}-4-methylpyridine]vanadium trichloride; [2,6-bis{[(4-methylphenyl)imino]methyl}-4-methylpyridine]vanadium trichloride; [2,6-bis{[(2,4,6-trimethylphenyl)imino]methyl}-4-methylpyridine]vanadium trichloride; [2,6-bis{[(2,4,6-triethylphenyl)imino]methyl}-4-methylpyridine]vanadium trichloride; [2,6-bis{[(2,4,6-tripropylphenyl)imino]methyl}-4-methylpyridine]vanadium trichloride; [2,6-bis{[(2,4,6-triisopropylphenyl)imino]methyl}4-methylpyridine]vanadium trichloride; [2,6-bis{[(2,4,6-tributylphenyl)imino]methyl}-4-methylpyridine]vanadium trichloride; [2,6-bis{[(2,4,6-tricyclohexylphenyl)imino]methyl}-4-methylpyridine]vanadium trichloride; [2,6-bis{[(2,6-diethyl-4-methylphenyl)imino]methyl}-4-methylpyridine]vanadium trichloride; [2,6-bis{[(2,6-dipropyl-4-methylphenyl)imino]methyl}-4-methylpyridine]vanadium trichloride; [2,6-bis{[(2,6-diisopropyl-4-methylphenyl)imino]methyl}-4-methylpyridine]vanadium trichloride; [2,6-bis{[(2,6-dibutyl-4-methylphenyl)imino]methyl}-4-methylpyridine]vanadium trichloride; [2,6-bis{[(2,6-dicyclohexyl-4-methylphenyl)imino]methyl}-4-methylpyridine]vanadium trichloride; [2,6-bis{1-[(phenyl)imino]ethyl}-4-chloropyridine]vanadium trichloride; [2,6-bis{1-[(2,6-dimethylphenyl)imino]ethyl}-4-chloropyridine]vanadium trichloride; [2,6-bis{1-[(2,6-diethylphenyl)imino]ethyl}-4-chloropyridine]vanadium trichloride; [2,6-bis{1-[(2,6-dipropylphenyl)imino]ethyl)4-chloropyridine]vanadium trichloride; [2,6-bis{1-[(2,6-diisopropylphenyl)imino]ethyl}-4-chloropyridine]vanadium trichloride; [2,6-bis{1-[(2,6-dibutylphenyl)imino]ethyl}-4-chloropyridine]vanadium trichloride; [2,6-bis{1-[(2,6-dicyclohexylphenyl)imino]ethyl}-4-chloropyridine]vanadium trichloride; [2,6-bis{[(phenyl)imino]methyl}-4-chloropyridine]vanadium trichloride; [2,6-bis{[(2,6-dimethylphenyl)imino]methyl}-4-chloropyridine]vanadium trichloride; [2,6-bis{[(2,6-diethylphenyl)imino]methyl}-4-chloropyridine]vanadium trichloride; [2,6-bis{[(2,6-dipropylphenyl)imino]methyl}-4-chloropyridine]vanadium trichloride; [2,6-bis{[(2,6-diisopropylphenyl)imino]methyl}-4-chloropyridine]vanadium trichloride; [2,6-bis{[(2,6-dibutylphenyl)imino]methyl}-4-chloropyridine]vanadium trichloride; [2,6-bis{[(2,6-dicyclohexylphenyl)imino]methyl}-4-chloropyridine]vanadium trichloride; [2,6-bis{1-[(4-methylphenyl)imino]ethyl}-4-chloropyridine]vanadium trichloride; [2,6-bis{1-[(2,4,6-trimethylphenyl)imino]ethyl}-4-chloropyridine]vanadium trichloride; [2,6-bis{1-[(2,4,6-triethylphenyl)imino]ethyl}-4-chloropyridine]vanadium trichloride; [2,6-bis{1-[(2,4,6-tripropylphenyl)imino]ethyl}-4-chloropyridine]vanadium trichloride; [2,6-bis{1-[(2,4,6-triisopropylphenyl)imino]ethyl}-4-chloropyridine]vanadium trichloride; [2,6-bis{1-[(2,4,6-tributylphenyl)imino]ethyl}-4-chloropyridine]vanadium trichloride; [2,6-bis{1-[(2,4,6-tricyclohexylphenyl)imino]ethyl}-4-chloropyridine]vanadium trichloride; [2,6-bis(1-[(2,6-diethyl-4-methylphenyl)imino]ethyl}4-chloropyridine]vanadium trichloride; [2,6-bis{1 -[(2,6-dipropyl-4-methylphenyl)imino]ethyl}-4-chloropyridine]vanadium trichloride; [2,6-bis{1 [(2,6-diisopropyl-4-methylphenyl)imino]ethyl}-4-chloropyridine]vanadium trichloride; [2,6-bis{1-[(2,6-dibutyl-4-methylphenyl)imino]ethyl}-4-chloropyridine]vanadium trichloride; [2,6-bis{1-[(2,6-dicyclohexyl-4-methylphenyl) imino]ethyl}-4-chloropyridine]vanadium trichloride; [2,6-bis{[(4-methylphenyl)imino]methyl}-4-chloropyridine]vanadium trichloride; [2,6-bis{[(2,4,6-trimethylphenyl)imino]methyl}-4-chloropyridine]vanadium trichloride; [2,6-bis{[(2,4,6-triethylphenyl)imino]methyl}-4-chloropyridine]vanadium trichloride; [2,6-bis{[(2,4,6-tripropylphenyl)imino] methyl}-4-chloropyridine]vanadium trichloride; [2,6-bis{[(2,4,6-triisopropylphenyl)imino]methyl}-4-chloropyridine] vanadium trichloride; [2,6-bis{[(2,4,6-tributylphenyl)imino]methyl}-4-chloropyridine]vanadium trichloride; [2,6-bis{[(2,4,6-tricyclohexylphenyl)imino]methyl}-4-chloropyridine]vanadium trichloride; [2,6-bis{[(2,6-diethyl-4-methylphenyl)imino]methyl}-4-chloropyridine]vanadium trichloride; [2,6-bis{[(2,6-dipropyl-4-methylphenyl)imino]methyl}-4-chloropyridine]vanadium trichloride; [2,6-bis{[(2,6-diisopropyl-4-methylphenyl)imino]methyl}-4-chloropyridine] vanadium trichloride; [2,6-bis{[(2,6-dlbutyl-4-methylphenyl)imino]methyl}-4-chloropyridine]vanadium trichloride; [2,6-bis{[(2,6-dicyclohexyl-4-methylphenyl)imino]methyl}-4-chloropyridine]vanadium trichloride; [2,6-bis{1-[(methyl)imino]ethyl}pyridine]vanadium trichloride; [2,6-bis{1-[(ethyl)imino]ethyl}pyridine]vanadium trichloride; [2,6-bis {1-[(isopropyl)imino]ethyl}pyridine]vanadium trichloride; [2,6-bis{1-[(cyclohexyl)imino]ethyl}pyridine]vanadium trichloride; [2,6-bis{1-[(methyl)imino]methyl}pyridine]vanadium trichloride; [2,6-bis{1-[(ethyl)imino]methyl}pyridine]vanadium trichloride; [2,6-bis{1-[(isopropyl)imino]methyl}pyridine]vanadium trichloride; [2,6-bis{1-[(cyclohexyl) imino]methyl}pyridine]vanadium trichloride; [2,6-bis{1-[(methyl)imino]ethyl}-4-methylpyridine]vanadium trichloride; [2,6-bis{1-[(ethyl)imino]ethyl}-4-methylpyridine]vanadium trichloride; [2,6-bis{1-[(isopropyl)imino]ethyl}-4-methylpyridine]vanadium trichloride; [2,6-bis{1-[(cyclohexyl)imino]ethyl}-4-methylpyridine]vanadium trichloride; [2,6-bis{1-[(methyl)imino]methyl}-4-methylpyridine]vanadium trichloride; [2,6-bis{1-[(ethyl )imino]methyl}-4-methylpyridine]vanadium trichloride; [2,6-bis{1-[(isopropyl)imino]methyl}-4-methylpyridine]vanadium trichloride; [2,6-bis{1-[(cyclohexyl)imino]methyl}-4-methylpyridine]vanadium trichloride; 2,6-diformylpyridine bis(pyrrolidylhydrazone)vanadium trichloride; 2,6-diformylpyridine bis(piperidylhydrazone)vanadium trichloride; 2,6-diformylpyridine bis(phenylhydrazone)vanadium trichloride; 2,6-diformylpyridine bis(methylhydrazone)vanadium trichloride; 2,6-diformyl-4-chloropyridine bis(methylhydrazone)vanadium trichloride; 2,6-diacetylpyridine bis(pyrrolidylhydrazone)vanadium trichloride; 2,6-diacetylpyridine bis(piperidylhydrazone)vanadium trichloride; 2,6-diacetylpyridine bis(phenylhydrazone)vanadium trichloride; 2,6-diacetylpyridine bis(methylhydrazone)vanadium trichloride; 2,6-diacetyl-4-chloropyridine bis(phenylhydrazone)vanadium trichloride; 2,6-diformyl-4-methyl-pyridine bis(pyrrolidylhydrazone)vanadium trichloride; 2,6-diformyl-4-methyl-pyridine bis(piperidylhydrazone)vanadium trichloride; 2,6-diformyl-4-methyl-pyridine bis(phenylhydrazone)vanadium trichloride; 2,6-diformyl-4-methyl-pyridine bis (methylhydrazone)vanadium trichloride; 2,6-diacetyl-4-methyl-pyridine bis(pyrrolidylhydrazone)vanadium trichloride; 2,6-diacetyl-4-methyl-pyridine bis(piperidylhydrazone)vanadium trichloride; 2,6-diacetyl-4-methyl-pyridine bis(phenylhydrazone)vanadium trichloride; 2,6-diacetyl-4-methyl-pyridine bis(methylhydrazone)vanadium trichloride;

[2,6-bis-(2-oxazolin-2-yl)pyridine]vanadium trichloride; [2,6-bis-(4S-isopropyl-2-oxazolin-2-yl)pyridine]vanadium trichloride; [2,6-bis-(4R-isopropyl-2-oxazolin-2-yl)pyridine]vanadium trichloride; [2,6-bis-(4-methyl-2-oxazolin-2-yl)pyridine]vanadium trichloride; [2,6-bis-(4-t-butyl-2-oxazolin-2-yl)pyridine]vanadium trichloride; [2,6-bis-(4,4-dimethyl-2-oxazolin-2-yl)pyridine]vanadium trichloride; [2,6-bis-(4-phenyl-2-oxazolin-2-yl)pyridine]vanadium trichloride; [2,6-bis-(5-phenyl-2-oxazolin-2-yl)pyridine]vanadium trichloride; [2,6-bis-(4,5-diphenyl-2-oxazolin-2-yl) pyridine]vanadium trichloride; [2,6-bis-(4-benzyl-2-oxazolin-2-yl)pyridine]vanadium trichloride; [2,6-bis-(4-methoxymethyl-2-oxazolin-2-yl)pyridine]vanadium trichloride; [2,6-bis-(4-methyl-2-oxazolin-2-yl)pyridine]vanadium trichloride; [2,6-bis-(4S-isopropyl-4-methyl-2-oxazolin-2-yl)pyridine]vanadium trichloride; [2,6-bis-(4R-isopropyl-4-methyl-2-oxazolin-2-yl)pyridine]vanadium trichloride; [2,6-bis-(4-methyl-4-methyl-2-oxazolin-2-yl)pyridine]vanadium trichloride; [2,6-bis-(4-t-butyl-4-methyl-2-oxazolin-2-yl)pyridine]vanadium trichloride; [2,6-bis-(4,4-dimethyl-4-methyl-2-oxazolin-2-yl)pyridine]vanadium trichloride; [2,6-bis-(4-phenyl-4-methyl-2-oxazolin-2-yl)pyridine]vanadium trichloride; [2,6-bis-(5-phenyl-4-methyl-2-oxazolin-2-yl)pyridine]vanadium trichloride; [2,6-bis-(4,5-diphenyl-4-methyl-2-oxazolin-2-yl)pyridine]vanadium trichloride; [2,6-bis-(4-benzyl-4-methyl-2-oxazolin-2-yl)pyridine]vanadium trichloride; [2,6-bis-(4-methoxymethyl-4-methyl-2-oxazolin-2-yl)pyridine]vanadium trichloride; [2,6-bis(imidazol-2-yl)pyridine]vanadium trichloride; [2,6-bls(1-methyllmldazol-2-yl)pyridine]vanadium trichloride; [2,6-bis(1-ethylimidazol-2-yl)pyridine]vanadium trichloride; [2,6-bis(1-butylimidazol-2-yl)pyridine]vanadium trichloride; [2,6-bis(1-phenylimidazol-2-yl)pyridine]vanadium trichloride; [2,6-bis(1-benzylimidazol-2-yl)pyridine]vanadium trichloride; [2,6-bis(1-phenylimidazol-2-yl)pyridine]vanadium trichloride; [2,6-bis(1-acetylimidazol-2-yl)pyridine]vanadium trichloride; [2,6-bis(1-(4-methoxyphenyl)imidazol-2-yl)pyridine]vanadium trichloride; [2,6-bis(1 -trimethylsilylimidazol-2-yl)pyridine]vanadium trichloride; [2,6-bis(1,5-dimethylimidazol-2-yl)pyridine]vanadium trichloride; [2,6-bis(1,5-dimethyl-4-phenylimidazol-2-yl)pyridine]vanadium trichloride; [2,6-bis(1-methyl-5-nitroimidazol-2-yl) pyridine]vanadium trichloride; [2,6-bis(1,4,5-trimethylimidazol-2-yl)pyridine]vanadium trichloride; [2,6-bis(4,5-dimethylimidazol-2-yl)pyridine]vanadium trichloride; [2,6-bis(4,5-diphenylimidazol-2-yl)pyridine]vanadium trichloride; [2,6-bis(4-methylimidazol-2-yl)pyridine]vanadium trichloride; [2,6-bis(4-(2-methoxethyl)imidazol-2-yl)pyridine]vanadium trichloride;

[2,6-bis(benzimidazol-2-yl)pyridine]vanadium trichloride; [2,6-bis(1-methylbenzimidazol-2-yl)pyridine]vanadium trichloride; [2,6-bis(1-ethylbenzimidazol-2-yl)pyridine]vanadium trichloride; [2,6-bis(1-propylbenzimidazol-2-yl)pyridine]vanadium trichloride; [2,6-bis(1-isopropylbenzimidazol-2-yl)pyridine]vanadium trichloride; [2,6-bis(1-butylbenzimidazol-2-yl)pyridine]vanadium trichloride; [2,6-bis(1-pentylbenzimidazol-2-yl)pyridine]vanadium trichloride; [2,6-bis(1-cyclopentylbenzimidazol-2-yl)pyridine]vanadium trichloride; [2,6-bis(1-hexylbenzimidazol-2-yl)pyridine] vanadium trichloride; [2,6-bis(1-cyclohexylbenzimidazol-2-yl)pyridine]vanadium trichloride; [2,6-bis(1-octylbenzimidazol-2-yl)pyridine]vanadium trichloride; [2,6-bis(1-decylbenzimidazol-2-yl)pyridine]vanadium trichloride; [2,6-bis(1-dodecylbenzimidazol-2-yl)pyridine]vanadium trichloride; [2,6-bis(1-tetradecylbenzimidazol-2-yl)pyridine]vanadium trichloride; [2,6-bis(1-hexadecylbenzimidazol-2-yl)pyridine]vanadium trichloride; [2,6-bis(1-octadecylbenzimidazol-2-yl)pyridine]vanadium trichloride; [2,6-bis(1-benzylbenzimidazol-2-yl)pyridine]vanadium trichloride; [2,6-bis(1-phenylbenzlmldazol-2-yl)pyridine]vanadium trichloride; [2,6-bis(4-methylbenzimidazol-2-yl)pyridine]vanadium trichloride; [2,6-bis(5-methylbenzimidazol-2-yl)pyridine]vanadium trichloride; [2,6-bis(6-methylbenzimidazol-2-yl)pyridine]vanadium trichloride; [2,6-bis(7-methylbenzimidazol-2-yl)pyridine]vanadium trichloride; [2,6-bis(5-ethylbenzimidazol-2-yl)pyridine]vanadium trichloride: [2,6-bis(5-propylbenzimidazol-2-yl)pyridine]vanadium trichloride; [2,6-bis(5-isopropylbenzimidazol-2-yl)pyridine]vanadium trichloride; [2,6-bis(5-butylbenzimidazol-2-yl)pyridine]vanadium trichloride; [2,6-bis(5-pentylbenzimidazoi-2-yl)pyridine]vanadium trichloride; [2,6-bis (5-cyclopentylbenzimidazol-2-yl)pyridine]vanadium trichloride; [2,6-bis(5-hexylbenzimidazol-2-yl)pyridine]vanadium trichloride; [2,6-bis(1-acetylbenzimidazol-2-yl)pyridine]vanadium trichloride; [2,6-bis(1-benzoylbenzimidazol-2-yl)pyridine]vanadium trichloride; [2,6-bis(1,5-dimethylbenzimidazol-2-yl)pyridine]vanadium trichloride; [2,6-bis (4-methoxybenzimidazol-2-yl)pyridine]vanadium trichloride; [2,6-bis(5-methoxybenzimidazol-2-yl)pyridine]vanadium trichloride; [2,6-bis(6-methoxybenzimidazol-2-yl)pyridine]vanadium trichloride; [2,6-bis(7-methoxybenzimidazol-2-yl)pyridine]vanadium trichloride; [2,6-bis(1-methyl-5-methoxybenzimidazol-2-yl)pyridine]vanadium trichloride; [2,6-bis(1-(methoxymethyl)benzimidazol-2-yl)pyridine]vanadium trichloride; [2,6-bis(1-(ethoxymethyl) benzimidazol-2-yl)pyridine]vanadium trichloride; [2,6-bis(1-(propoxymethyl)benzimidazol-2-yl)pyridine]vanadium trichloride; [2,6-bis(1-(butoxymethyl)benzimidazol-2-yl)pyridine]vanadium trichloride; [2,6-bis(1-(hexyloxymethyl) benzimidazol-2-yl)pyridine]vanadium trichloride; [2,6-bis(1-(2-methoxyethyl)benzimidazol-2-yl)pyridine]vanadium trichloride; [2,6-bis(1-(2-ethoxyethyl)benzimidazol-2-yl)pyridine]vanadium trichloride; [2,6-bis(1-(2-propoxyethyl ) benzimidazol-2-yl)pyridine]vanadium trichloride; [2,6-bis(1-(2-butoxyethyl)benzimidazol-2-yl)pyridine]vanadium trichloride; [2,6-bis(1-(2-hexyloxyethyl)benzimidazol-2-yl)pyridine]vanadium trichloride; [2,6-bis(1-(dimethylaminomethyl)benzimidazol-2-yl)pyridine]vanadium trichloride; [2,6-bis(1-(diethylaminomethyl)benzimidazol-2-yl)pyridine]vanadium trichloride; [2,6-bis(1-(dimethylaminoethyl)benzimidazol-2-yl)pyridine]vanadium trichloride; [2,6-bis(1-(diethylaminoethyl)benzimidazol-2-yl)pyridine]vanadium trichloride; [2,6-bis(1-(morpholinomethyl)benzimidazol-2-yl)pyridine]vanadium trichloride; [2,6-bis(1-(anilinomethyl)benzimidazol-2-yl)pyridine]vanadium trichloride; [2,6-bis(1-(piperidinomethyl)benzimidazol-2-yl)pyridine]vanadium trichloride; [2,6-bis(1-(pyrrolidinomethyl) benzimidazol-2-yl)pyridine]vanadium trichloride; [2,6-bis(5-(dimethylamino)benzimidazol-2-yl)pyridine]vanadium trichloride; [2,6-bis(5-(piperidino)benzimidazol-2-yl)pyridine]vanadium trichloride; [2,6-bis(5-(pyrrolidino)benzimidazol-2-yl)pyridine]vanadium trichloride; [2,6-bis(5,6-dimethyl-1-(piperidinomethyl)benzimidazol-2-yl)pyridine]vanadium trichloride;

The skilled artisan will recognize that additional members of the foregoing list will include the corresponding Lewis base adducts thereof.

Further exemplary, but non-limiting metal complexes according to the invention include the following iron dichloride and trichloride complexes:

[2,6-bis{1-[(phenyl)imino]ethyl}pyridine]iron dichloride; [2,6-bis{1-[(2,6-dimethylphenyl)imino]ethyl}pyridine]iron dichloride; [2,6-bis{1-[(2,6-diethylphenyl)imino]ethyl}pyridine]iron dichloride; [2,6-bis{1-[(2,6-dipropylphenyl)imino]ethyl}pyridine]iron dichloride; [2,6-bis{1-[(2,6-diisopropylphenyl)imino]ethyl}pyridine]iron dichloride; [2,6-bis {1-[(2,6-dibutylphenyl)imino]ethyl}pyridine]iron dichloride; [2,6-bis{1-[(2,6-dicyclohexylphenyl)imino]ethyl}pyridine]iron dichloride; [2,6-bis{[(phenyl)imino]methyl}pyridine]iron dichloride; [2,6-bis{[(2,6-dimethylphenyl)imino]methyl}pyridine]iron dichloride; [2,6-bis{[(2,6-diethylphenyl)imino]methyl}pyridine]iron dichloride; [2,6-bis{[(2,6-dipropylphenyl)imino]methyl}pyridine]iron dichloride; [2,6-bis{[(2,6-diisopropylphenyl)imino]methyl}pyridine]iron dichloride; [2,6-bis{[(2,6-dibutylphenyl)imino]methyl}pyridine]iron dichloride; [2,6-bis{[(2,6-dicyclohexylphenyl)imino] methyl}pyridine]iron dichloride; [2,6-bis{1-[(4-methylphenyl)imino]ethyl}pyridine]iron dichloride; [2,6-bis{1-[(2,4,6-trimethylphenyl)imino]ethyl}pyridine]iron dichloride; [2,6-bis{1-[(2,4,6-triethylphenyl)imino]ethyl}pyridine] iron dichloride; [2,6-bis{1-[(2,4,6-tripropylphenyl)imino]ethyl}pyridine]iron dichloride; [2,6-bis{1-[(2,4,6-triisopropylphenyl)imino]ethyl}pyridine]iron dichloride; [2,6-bis{1-[(2,4,6-tributylphenyl)imino]ethyl}pyridine]iron dichloride; [2,6-bis{1-[(2,4,6-tricyclohexylphenyl)imino]ethyl}pyridine]iron dichloride; [2,6-bis{1-[(2,6-diethyl-4-methylphenyl) imino]ethyl}pyridine]iron dichloride; [2,6-bis{1-[(2,6-dipropyl-4-methylphenyl)imino]ethyl}pyridine]iron dichloride; [2,6-bis{1-[(2,6-diisopropyl-4-methylphenyl)imino]ethyl}pyridine]iron dichloride; [2,6-bis{1-[(2,6-dibutyl-4-methylphenyl)imino]ethyl}pyridine]iron dichloride; [2,6-bis{1-[(2,6-dicyclohexyl-4-methylphenyl)imino]ethyl}pyridine]iron dichloride; [2,6-bis{[(4-methylphenyl)imino]methyl}pyridine]iron dichloride; [2,6-bis{[(2,4,6-trimethylphenyl)imino] methyl}pyridine]iron dichloride; [2,6-bis{[(2,4,6-triethylphenyl)imino]methyl}pyridine]iron dichloride; [2,6-bis{[ (2,4,6-tripropylphenyl)imino]methyl}pyridine]iron dichloride; [2,6-bis{[(2,4,6-triisopropylphenyl)imino]methyl}pyridine]iron dichloride; [2,6-bis{[(2,4,6-tributylphenyl)imino]methyl}pyridine]iron dichloride; [2,6-bis{[(2,4,6-tricyclohexylphenyl)imino]methyl}pyridine]iron dichloride; [2,6-bis{[(2,6-diethyl-4-methylphenyl)imino]methyl}pyridine]iron dichloride; [2,6-bis{[(2,6-dipropyl-4-methylphenyl)imino]methyl}pyridine]iron dichloride; [2,6-bis{[(2,6-diisopropyl-4-methylphenyl)imino]methyl}pyridine]iron dichloride; [2,6-bis{[(2,6-dibutyl-4-methylphenyl)imino]methyl}pyridine] iron dichloride; [2,6-bis{[(2,6-dicyclohexyl-4-methylphenyl)imino]methyl}pyridine]iron dichloride; [2,6-bis{1-[(phenyl)imino]ethy}-4-methylpyridine]iron dichloride; [2,6-bis{1-[(2,6-dimethylphenyl)imino]ethyl}-4-methylpyridine] iron dichloride; [2,6-bis{1-[(2,6-diethylphenyl)imino]ethyl}-4-methylpyridine]iron dichloride; [2,6-bis{1-[(2,6-dipropylphenyl)imino]ethyl}-4-methylpyridine]iron dichloride; [2,6-bis{1-[(2,6-diisopropylphenyl)imino]ethyl}-4-methylpyridine]iron dichloride; [2,6-bis{1-[(2,6-dibutylphenyl)imino]ethyl}-4-methylpyridine]iron dichloride; [2,6-bis {1-[(2,6-dicyclohexylphenyl)imino]ethyl}-4-methylpyridine]iron dichloride; [2,6-bis{[(phenyl)imino]methyl}-4-methylpyridine]iron dichloride; [2,6-bis{[(2,6-dimethylphenyl)imino]methyl}-4-methylpyridine]iron dichloride; [2,6-bis{[ (2,6-diethylphenyl)imino]methyl}-4-methylpyridine]iron dichloride; [2,6-bis{[(2,6-dipropylphenyl)imino]methyl}-4-methylpyridine]iron dichloride; [2,6-bis{[(2,6-diisopropylphenyl)imino]methyl}-4-methylpyridine]iron dichloride; [2,6-bis{[(2,6-dibutylphenyl)imino]methyl}-4-methylpyridine]iron dichloride; [2,6-bis{[(2,6-dicyclohexylphenyl)imino]methyl}4-methylpyridine]iron dichloride; [2,6-bis{1-[(4-methylphenyl)imino]ethyl}-4-methylpyridine]iron dichloride; [2,6-bis{1-[(2,4,6-trimethylphenyl)imino]ethyl}-4-methylpyridine]iron dichloride; [2,6-bis{1-[(2,4,6-triethylphenyl)imino]ethyl}-4-methylpyridine]iron dichloride; [2,6-bis{1-[(2,4,6-tripropylphenyl)imino]ethyl}-4-methylpyridine] iron dichloride; [2,6-bis{1-[(2,4,6-triisopropylphenyl)imino]ethyl}4-methylpyridine]iron dichloride; [2,6-bis {1-[(2,4,6-tributylphenyl)imino]ethyl}-4-methylpyridine]iron dichloride; [2,6-bis{1-[(2,4,6-tricyclohexylphenyl)imino] ethyl}-4-methylpyridine]iron dichloride; [2,6-bis{1-[(2,6-diethyl-4-methylphenyl)imino]ethyl}-4-methylpyridine]iron dichloride; [2,6-bis{1-[(2,6-dipropyl-4-methylphenyl)imino]ethyl}4-methylpyridine]iron dichloride; [2,6-bis{1-[(2,6-diisopropyl-4-methylphenyl)imino]ethyl}-4-methylpyridine]iron dichloride; [2,6-bis{1-[(2,6-dibutyl-4-methylphenyl) imino]ethyl}-4-methylpyridine]iron dichloride; [2,6-bis{1-[(2,6-dicyclohexyl-4-methylphenyl)imino]ethyl}4-methylpyridine]iron dichloride; [2,6-bis{[(4-methylphenyl)imino]methyl}-4-methylpyridine]iron dichloride; [2,6-bis{[ (2,4,6-trimethylphenyl)imino]methyl}-4-methylpyridine]iron dichloride; [2,6-bis{[(2,4,6-triethylphenyl)imino]methyl}-4-methylpyridine]iron dichloride; [2,6-bis{[(2,4,6-tripropylphenyl)imino]methyl}-4-methylpyridine]iron dichloride; [2,6-bis{[(2,4,6-triisopropylphenyl)imino]methyl}4-methylpyridine]iron dichloride; [2,6-bis{[(2,4,6-tributylphenyl)imino]methyl}-4-methylpyridine]iron dichloride; [2,6-bis{[(2,4,6-tricyclohexylphenyl)imino]methyl}-4-methylpyridine]iron dichloride; [2,6-bis{[(2,6-diethyl-4-methylphenyl)imino]methyl}4-methylpyridine]iron dichloride; [2,6-bis{[(2,6-dipropyl-4-methylphenyl)imino]methyl}4-methylpyridine]iron dichloride; [2,6-bis{[(2,6-diisopropyl-4-methylphenyl)imino]methyl}-4-methylpyridine]iron dichloride; [2,6-bis{[(2,6-dibutyl-4-methylphenyl)imino]methyl}-4-methylpyridine]iron dichloride; [2,6-bis{[(2,6-dicyclohexyl-4-methylphenyl)imino]methyl}-4-methylpyridine] iron dichloride; [2,6-bis{1 -[(phenyl)imino]ethyl}-4-chloropyridine]iron dichloride; [2,6-bis{1-[(2,6-dimethylphenyl) imino]ethyl}-4-chloropyridine]iron dichloride; [2,6-bis{1-((2,6-diethylphenyl)imino]ethyl}4-chloropyridine]iron dichloride; [2,6-bis{1-[(2,6-dipropylphenyl)imino]ethyl}-4-chloropyridine]iron dichloride; [2,6-bis{1-[(2,6-diisopropylphenyl)imino]ethyl}-4-chloropyridine]iron dichloride; [2,6-bis{1-[(2,6-dibutylphenyl)imino]ethyl}-4-chloropyridine] iron dichloride; [2,6-bis{1-[(2,6-dicyclohexylphenyl)imino]ethyl}-4-chloropyridine]iron dichloride; [2,6-bis{[(phenyl) imino]methyl}-4-chloropyridine]iron dichloride; [2,6-bis{[(2,6-dimethylphenyl)imino]methyl}-4-chloropyridine]iron dichloride; [2,6-bis{[(2,6-diethylphenyl)imino]methyl}-4-chloropyridine]iron dichloride; [2,6-bis{[(2,6-dipropylphenyl)imino]methyl}-4-chloropyridine]iron dichloride; [2,6-bis{[(2,6-diisopropylphenyl)imino]methyl}-4-chloropyridine]iron dichloride; [2,6-bis{[(2,6-dibutylphenyl)imino]methyl}-4-chloropyridine]iron dichloride; [2,6-bis{[(2,6-dicyclohexylphenyl)imino]methyl}-4-chloropyridine]iron dichloride; [2,6-bis{1-[(4-methylphenyl)imino]ethyl}-4-chloropyridine]iron dichloride; [2,6-bis{1-[(2,4,6-trimethylphenyl)imino]ethyl}-4-chloropyridine]iron dichloride; [2,6-bis {1-[(2,4,6-triethylphenyl)imino]ethyl}-4-chloropyridine]iron dichloride; [2,6-bis{1-[(2,4,6-tripropylphenyl)imino] ethyl}-4-chloropyridine]iron dichloride; [2,6-bis{1-[(2,4,6-triisopropylphenyl)imino]ethyl}-4-chloropyridine]iron dichloride; [2,6-bis{1-[(2,4,6-tributylphenyl)imino]ethyl}-4-chloropyridine]iron dichloride; [2,6-bis{1-[(2,4,6-tricyclohexylphenyl)imino]ethyl}-4-chloropyridine]iron dichloride; [2,6-bis{1-[(2,6-diethyl-4-methylphenyl)imino]ethyl}-4-chloropyridine]iron dichloride; [2,6-bis{1-[(2,6-dipropyl-4-methylphenyl)imino]ethyl}-4-chloropyridine]iron dichloride; [2,6-bis{l -[(2,6-diisopropyl-4-methylphenyl)imino]ethyl}-4-chloropyridine]iron dichloride; [2,6-bis{1-[(2,6-dibutyl-4-methylphenyl)imino]ethyl}-4-chloropyridine]iron dichloride; [2,6-bis{1-[(2,6-dicyclohexyl-4-methylphenyl)imino]ethyl}-4-chloropyridine]iron dichloride; [2,6-bis{[(4-methylphenyl)imino]methyl}-4-chloropyridine]iron dichloride; [2,6-bis{[(2,4,6-trimethylphenyl)imino]methyl}-4-chloropyridine]iron dichloride; [2,6-bis{[(2,4,6-triethylphenyl) imino]methyl}4-chloropyridine]iron dichloride; [2,6-bis{[(2,4,6-tripropylphenyl)imino]methyl}-chloropyridine]iron dichloride; [2,6-bis{[(2,4,6-triisopropylphenyl)imino]methyl}-4-chloropyridine]iron dichloride; [2,6-bis{[(2,4,6-tributylphenyl)imino]methyl}4-chloropyridine]iron dichloride; [2,6-bis{[(2,4,6-tricyclohexylphenyl)imino]methyl}-4-chloropyridine]iron dichloride; [2,6-bis{[(2,6-diethyl-4-methylphenyl)imino]methyl}-4-chloropyridine]iron dichloride; [2,6-bis{[(2,6-dipropyl-4-methylphenyl)imino]methyl}-4-chloropyridine]iron dichloride; [2,6-bis{[(2,6-diisopropyl-4-methylphenyl)imino]methyl}4-chloropyridine]iron dichloride; [2,6-bis{[(2,6-dibutyl-4-methylphenyl)imino]methyl}4-chloropyridine]iron dichloride; [2,6-bis{[(2,6-dicyclohexyl-4-methylphenyl)imino]methyl}-4-chloropyridine] iron dichloride; [2,6-bis{1-[(methyl)imino]ethyl}pyridine]iron dichloride; [2,6-bis{1-((ethyl)imino]ethyl}pyridine]iron dichloride; [2,6-bis{1-[(isopropyl)imino]ethyl}pyridine]iron dichloride; [2,6-bis{1-[(cyclohexyl)imino]ethyl}pyridine] iron dichloride; [2,6-bis{1 -[(methyl)imino]methyl}pyridine]iron dichloride; [2,6-bis{1-[(ethyl)imino]methyl}pyridine] iron dichloride; [2,6-bis{1-[(isopropyl)imino]methyl}pyridine]iron dichloride; [2,6-bis{1-[(cyclohexyl)imino]methyl} pyridine]iron dichloride; [2,6-bis{1-[(methyl)imino]ethyl}-4-methylpyridine]iron dichloride; [2,6-bis{1-[(ethyl)imino] ethyl}-4-methylpyridine]iron dichloride; [2,6-bis{1 -[(isopropyl)imino]ethyl}-4-methylpyridine]iron dichloride; [2,6-bis{1-[(cyclohexyl)imino]ethyl}-4-methylpyridine]iron dichloride; [2,6-bis{1-((methyl)imino]methyl}-4-methylpyridine]iron dichloride; [2,6-bis{1-[(ethyl)imino]methyl}-4-methylpyridine]iron dichloride; [2,6-bis{1-[(isopropyl)imino]methyl}-4-methylpyridine]iron dichloride; [2,6-bis{1-[(cyclohexyl )imino]methyl}-4-methylpyridine]iron dichloride; 2,6-diformylpyridine bis(pyrrolidylhydrazone)iron dichloride; 2,6-diformylpyridine bis(piperidylhydrazone)iron dichloride; 2,6-diformylpyridine bis(phenylhydrazone)iron dichloride; 2,6-diformylpyridine bis(methylhydrazone) iron dichloride; 2,6-diformyl-4-chloropyridine bis(methylhydrazone)iron dichloride; 2,6-diacetylpyridine bis(pyrrolidylhydrazone)iron dichloride; 2,6-diacetylpyridine bis(piperidylhydrazone)iron dichloride; 2,6-diacetylpyridine bis (phenylhydrazone)iron dichloride; 2,6-diacetylpyridine bis(methylhydrazone)iron dichloride; 2,6-diacetyl-4-chloropyridine bis(phenylhydrazone)iron dichloride; 2,6-diformyl-4-methyl-pyridine bis(pyrrolidylhydrazone)iron dichloride; 2,6-diformyl-4-methyl-pyridine bis(piperidylhydrazone)iron dichloride; 2,6-diformyl-4-methyl-pyridine bis(phenylhydrazone)iron dichloride; 2,6-diformyl-4-methyl-pyridine bis(methylhydrazone)iron dichloride; 2,6-diacetyl-4-methyl-pyridine bis(pyrrolidylhydrazone)iron dichloride; 2,6-diacetyl-4-methyl-pyridine bis(piperidylhydrazone) iron dichloride; 2,6-diacetyl-4-methyl-pyridine bis(phenylhydrazone)iron dichloride; 2,6-diacetyl-4-methyl-pyridine bis(methylhydrazone)iron dichloride;

[2,6-bis-(2-oxazolin-2-yl)pyridine]iron dichloride; [2,6-bis-(45-isopropyl-2-oxazolin-2-yl)pyridine]iron dichloride; [2,6-bis-(4R-isopropyl-2-oxazolin-2-yl)pyridine]iron dichloride;

[2,6-bis-(4-methyl-2-oxazolin-2-yl)pyridine]iron dichloride; [2,6-bis-(4-t-butyl-2-oxazolin-2-yl)pyridine]iron dichloride; [2,6-bis-(4,4-dimethyl-2-oxazolin-2-yl)pyridine]iron dichloride;

[2,6-bis-(4-phenyl-2-oxazolin-2-yl)pyridine]iron dichloride; [2,6-bis-(5-phenyl-2-oxazolin-2-yl)pyridine]iron dichloride; [2,6-bis-(4,5-diphenyl-2-oxazolin-2-yl)pyridine]iron dichloride;

[2,6-bis-(4-benzyl-2-oxazolin-2-yl )pyridine]iron dichloride; [2,6-bis-(4-methoxymethyl-2-oxazolin-2-yl)pyridine] iron dichloride; [2,6-bis-(4-methyl-2-oxazolin-2-yl)pyridine]iron dichloride; [2,6-bis-(4S-isopropyl-4-methyl-2-oxazolin-2-yl)pyridine]iron dichloride; [2,6-bis-(4R-isopropyl-4-methyl-2-oxazolin-2-yl)pyridine]iron dichloride; [2,6-bis-(4-methyl-methyl-2-oxazolin-2-yl)pyridine]iron dichloride; [2,6-bis-(4-t-butyl-4-methyl-2-oxazolin-2-yl)pyridine]iron dichloride; [2,6-bis-(4,4-dimethyl-4-methyl-2-oxazolin-2-yl)pyridine]iron dichloride; [2,6-bis-(4-phenyl-4-methyl-2-oxazolin-2-yl)pyridine]iron dichloride; [2,6-bis-(5-phenyl-4-methyl-2-oxazolin-2-yl)pyridine]iron dichloride; [2,6-bis-(4,5-diphenyl-4-methyl-2-oxazolin-2-yl)pyridine]iron dichloride; [2,6-bis-(4-benzyl-4-methyl-2-oxazolin-2-yl)pyridine]iron dichloride; [2,6-bis-(4-methoxymethyl-4-methyl-2-oxazolin-2-yl)pyridine]iron dichloride;

[2,6-bis(imidazol-2-yl)pyridine]iron dichloride; [2,6-bis(1 -methylimidazol-2-yl)pyridine]iron dichloride; [2,6-bis (1-ethylimidazol-2-yl)pyridine]iron dichloride; [2,6-bis(1-butylimidazol-2-yl)pyridine]iron dichloride; [2,6-bis(1-phenylimidazol-2-yl)pyridine]iron dichloride; [2,6-bis(1-benzylimidazol-2-yl)pyridine]iron dichloride; [2,6-bis(1-phenylimidazol-2-yl)pyridine]iron dichloride; [2,6-bis(1-acetylimidazol-2-yl)pyridine]iron dichloride; [2,6-bis(1-(4-methoxyphenyl)imidazol-2-yl)pyridine]iron dichloride; [2,6-bis(1 -trimethylsilylimidazol-2-yl)pyridine]iron dichloride; [2,6-bis(1,5-dimethylimidazol-2-yl)pyridine]iron dichloride; [2,6-bis(1,5-dimethyl-4-phenylimidazol-2-yl)pyridine] iron dichloride; [2,6-bis(1-methyl-5-nitroimidazol-2-yl)pyridine]iron dichloride; [2,6-bis(1,4,5-trimethylimidazol-2-yl) pyridine]iron dichloride; [2,6-bis(4,5-dimethylimidazol-2-yl)pyridine]iron dichloride; [2,6-bis(4,5-diphenylimidazol-2-yl)pyridine]iron dichloride; [2,6-bis(4-methylimidazol-2-yl)pyridine]iron dichloride; [2,6-bis(4-(2-methoxethyl)imidazol-2-yl)pyridine]iron dichloride;

[2,6-bis(benzimidazol-2-yl)pyridine]iron dichloride; [2,6-bis(1 -methylbenzimidazol-2-yl)pyridine]iron dichloride; [2,6-bis(1-ethylbenzimidazol-2-yl)pyridine]iron dichloride; [2,6-bis(1-propylbenzimidazol-2-yl)pyridine]iron dichloride; [2,6-bis(1 -isopropylbenzimidazol-2-yl)pyridine]iron dichloride; [2,6-bis(1-butylbenzimidazol-2-yl)pyridine]iron dichloride; [2,6-bis(1-pentylbenzimidazol-2-yl)pyridine]iron dichloride; [2,6-bis(1 -cyclopentylbenzimidazol-2-yl)pyridine]iron dichloride; [2,6-bis(1-hexylbenzimidazol-2-yl)pyridine]iron dichloride; [2,6-bis(1-cyclohexylbenzimidazol-2-yl)pyridine]iron dichloride; [2,6-bis(1-octylbenzimidazol-2-yl)pyridine]iron dichloride; [2,6-bis(1-decylbenzimidazol-2-yl)pyridine]iron dichloride; [2,6-bis(1-dodecylbenzimidazol-2-yl)pyridine]iron dichloride; [2,6-bis(1-tetradecylbenzimidazol-2-yl)pyridine]iron dichloride; [2,6-bis(1-hexadecylbenzimidazol-2-yl)pyridine]iron dichloride; [2,6-bis(1-octadecylbenzimidazol-2-yl)pyridine]iron dichloride; [2,6-bis(1-benzylbenzimidazol-2-yl)pyridine]iron dichloride; [2,6-bis(1 -phenylbenzimidazol-2-yl)pyridine]iron dichloride; [2,6-bis(4-methylbenzimidazol-2-yl)pyridine]iron dichloride; [2,6-bis(5-methylbenzimidazol-2-yl)pyridine]iron dichloride; [2,6-bis(6-methylbenzimidazol-2-yl)pyridine]iron dichloride; [2,6-bis(7-methylbenzimidazol-2-yl)pyridine]iron dichloride; [2,6-bis(5-ethylbenzimidazol-2-yl)pyridine]iron dichloride; [2,6-bis(5-propylbenzimidazol-2-yl)pyridine]iron dichloride: [2,6-bis(5-isopropylbenzimidazol-2-yl)pyridine]iron dichloride; [2,6-bis(5-butylbenzimidazol-2-yl)pyridine]iron dichloride; [2,6-bis(5-pentylbenzimidazol-2-yl)pyridine]iron dichloride; [2,6-bis(5-cyclopentylbenzimidazol-2-yl)pyridine]iron dichloride; [2,6-bis(5-hexylbenzimidazol-2-yl)pyridine]iron dichloride; [2,6-bis(1-acetylbenzimidazol-2-yl)pyridine]iron dichloride; [2,6-bis(1-benzoylbenzimidazol-2-yl)pyridine]iron dichloride; [2,6-bis(1,5-dimethylbenzimidazol-2-yl)pyridine] iron dichloride; [2,6-bis(4-methoxybenzimidazol-2-yl)pyridine]iron dichloride; [2,6-bis(5-methoxybenzimidazol-2-yl)pyridine]iron dichloride; [2,6-bis(6-methoxybenzimidazol-2-yl)pyridine]iron dichloride; [2,6-bis(7-methoxybenzimidazol-2-yl)pyridine]iron dichloride; [2,6-bis(1-methyl-5-methoxybenzimidazol-2-yl)pyridine]iron dichloride; [2,6-bis(1 -(methoxymethyl)benzimidazol-2-yl)pyridine]iron dichloride; [2,6-bis(1-(ethoxymethyl)benzimidazol-2-yl)pyridine]iron dichloride; [2,6-bis(1-(propoxymethyl)benzimidazol-2-yl)pyridine]iron dichloride; [2,6-bis(1-(butoxymethyl)benzimidazol-2-yl)pyridine]iron dichloride; [2,6-bis(1-(hexyloxymethyl)benzimidazol-2-yl)pyridine]iron dichloride; [2,6-bis(1-(2-methoxyethyl)benzimidazol-2-yl)pyridine]iron dichloride; [2,6-bis(1-(2-ethoxyethyl)benzimidazol-2-yl)pyridine]iron dichloride; [2,6-bis(1-(2-propoxyethyl)benzimidazol-2-yl)pyridine]iron dichloride; [2,6-bis(1-(2-butoxyethyl)benzimidazol-2-yl)pyridine]iron dichloride; [2,6-bis(1-(2-hexyloxyethyl)benzimidazol-2-yl)pyridine]iron dichloride; [2,6-bis(1-(dimethylaminomethyl)benzimidazol-2-yl)pyridine]iron dichloride; [2,6-bis (1-(diethylaminomethyl)benzimidazol-2-yl)pyridine]iron dichloride; [2,6-bis(1-(dimethylaminoethyl)benzimidazol-2-yl)pyridine]iron dichloride; [2,6-bis(1-(diethylaminoethyl)benzimidazol-2-yl)pyridine]iron dichloride; [2,6-bis (1-(morpholinomethyl)benzimidazol-2-yl)pyridine]iron dichloride; [2,6-bis(1-(anilinomethyl)benzimidazol-2-yl)pyridine]iron dichloride; [2,6-bis(1-(piperidinomethyl)benzimidazol-2-yl)pyridine]iron dichloride; [2,6-bis(1-(pyrrolidinomethyl)benzimidazol-2-yl)pyridine]iron dichloride; [2,6-bis(5-(dimethylamino)benzimidazol-2-yl)pyridine]iron dichloride; [2,6-bis(5-(piperidino)benzimidazol-2-yl)pyridine]iron dichloride; [2,6-bis(5-(pyrrolidino)benzimidazol-2-yl)pyridine]iron dichloride; [2,6-bis(5,6-dimethyl-1-(piperidinomethyl)benzimidazol-2-yl)pyridine]iron dichloride; [2,6-bis{1-((phenyl)imino]ethyl}pyridine]iron trichloride; [2,6-bis{1-[(2,6-dimethylphenyl)imino]ethyl}pyridine]iron trichloride; [2,6-bis{1-[(2,6-diethylphenyl)imino]ethyl}pyridine]iron trichloride; [2,6-bis{1-[(2,6-dipropylphenyl)imino]ethyl}pyridine]iron trichloride; [2,6-bis{1-[(2,6-diisopropylphenyl)imino]ethyl}pyridine]iron trichloride; [2,6-bis {1-[(2,6-dibutylphenyl)imino]ethyl}pyridine]iron trichloride; [2,6-bis{1-[(2,6-dicyclohexylphenyl)imino]ethyl}pyridine]iron trichloride; [2,6-bis{[(phenyl)imino]methyl}pyridine]iron trichloride; [2,6-bis{[(2,6-dimethylphenyl)imino]methyl}pyridine]iron trichloride; [2,6-bis{[(2,6-diethylphenyl)imino]methyl}pyridine]iron trichloride; [2,6-bis{[(2,6-dipropylphenyl)imino]methyl}pyridine]iron trichloride; [2,6-bis{[(2,6-diisopropylphenyl)imino]methyl}pyridine]iron trichloride; [2,6-bis{[(2,6-dibutylphenyl)imino]methyl}pyridine]iron trichloride; [2,6-bis{[(2,6-dicyclohexylphenyl)imino]methyl}pyridine]iron trichloride; [2,6-bis{1-[(4-methylphenyl)imino]ethyl}pyridine]iron trichloride; [2,6-bis{1 -[(2,4,6-trimethylphenyl)imino]ethyl}pyridine]iron trichloride; [2,6-bis{1-[(2,4,6-triethylphenyl)imino]ethyl}pyridine] iron trichloride; [2,6-bis{1-[(2,4,6-tripropylphenyl)imino]ethyl}pyridine]iron trichloride; [2,6-bis{1-[(2,4,6-triisopropylphenyl)imino]ethyl}pyridine]iron trichloride; [2,6-bis{1-[(2,4,6-tributylphenyl)imino]ethyl}pyridine]iron trichloride; [2,6-bis{1-[(2,4,6-tricyclohexylphenyl)imino]ethyl}pyridine]iron trichloride; [2,6-bis{1-[(2,6-diethyl-4-methylphenyl) imino]ethyl}pyridine]iron trichloride; [2,6-bis{1-[(2,6-dipropyl-4-methylphenyl)imino]ethyl}pyridine]iron trichloride; [2,6-bis{1-[(2,6-diisopropyl-4-methylphenyl)imino]ethyl}pyridine]iron trichloride; [2,6-bis{1-[(2,6-dibutyl-4-methylphenyl)imino]ethyl}pyridine]iron trichloride; [2,6-bis{1-[(2,6-dicyclohexyl-4-methylphenyl)imino]ethyl}pyridine]iron trichloride; [2,6-bis{[(4-methylphenyl)imino]methyl}pyridine]iron trichloride; [2,6-bis{[(2,4,6-trimethylphenyl)imino] methyl}pyridine]iron trichloride; [2,6-bis{[(2,4,6-triethylphenyl)imino]methyl}pyridine]iron trichloride; [2,6-bis{[ (2,4,6-tripropylphenyl)imino]methyl}pyridine]iron trichloride; [2,6-bis{[(2,4,6-triisopropylphenyl)imino]methyl}pyridine]iron trichloride; [2,6-bis{[(2,4,6-tributylphenyl)imino]methyl}pyridine]iron trichloride; [2,6-bis{[(2,4,6-tricyclohexylphenyl)imino]methyl}pyridine]iron trichloride; [2,6-bis{[(2,6-diethyl-4-methylphenyl)imino]methyl}pyridine]iron trichloride; [2,6-bis{[(2,6-dipropyl-4-methylphenyl)imino]methyl}pyridine]iron trichloride; [2,6-bis{[(2,6-diisopropyl-4-methylphenyl)imino]methyl}pyridine]iron trichloride; [2,6-bis{[(2,6-dibutyl-4-methylphenyl)imino]methyl}pyridine] iron trichloride; [2,6-bis{[(2,6-dicyclohexyl-4-methylphenyl)imino]methyl}pyridine]iron trichloride; [2,6-bis{1-[(phenyl)imino]ethyl}-4-methylpyridine]iron trichloride; [2,6-bis(1-[(2,6-dimethylphenyl)imino]ethyl}-4-methylpyridine] iron trichloride; [2,6-bis{1-[(2,6-diethylphenyl)imino]ethyl}-4-methylpyridine]iron trichloride; [2,6-bis{1-[(2,6-dipropylphenyl)imino]ethyl}-4-methylpyridine]iron trichloride; [2,6-bis{1-[(2,6-diisopropylphenyl)imino]ethyl}-4-methylpyridine]iron trichloride; [2,6-bis{1 [(2,6-dibutylphenyl)imino]ethyl}-4-methylpyridine]iron trichloride; [2,6-bis{1-[(2,6-dicyclohexylphenyl)imino]ethyl}-4-methylpyridine]iron trichloride; [2,6-bis{[(phenyl)imino]methyl}-4-methylpyridine]iron trichloride; [2,6-bis{[(2,6-dimethylphenyl)imino]methyl}-4-methylpyridine]iron trichloride; [2,6-bis{[(2,6-diethylphenyl)imino]methyl}-4-methylpyridine]iron trichloride; [2,6-bis{[(2,6-dipropylphenyl)imino]methyl}-4-methylpyridine]iron trichloride; [2,6-bis{[(2,6-diisopropylphenyl)imino]methyl}-4-methylpyridine]iron trichloride; [2,6-bis{[(2,6-dibutylphenyl)imino]methyl}-4-methylpyridine]iron trichloride; [2,6-bis{[(2,6-dicyclohexylphenyl)imino]methyl}-4-methylpyridine]iron trichloride; [2,6-bis{1-[(4-methylphenyl)imino]ethyl}-4-methylpyridine]iron trichloride; [2,6-bis{1-[(2,4,6-trimethylphenyl )imino]ethyl}-4-methylpyridine]iron trichloride; [2,6-bis{1-[(2,4,6-triethylphenyl)imino]ethyl}-4-methylpyridine]iron trichloride; [2,6-bis{1-[(2,4,6-tripropylphenyl)imino]ethyl}-4-methylpyridine]iron trichloride; [2,6-bis{1-[(2,4,6-triisopropylphenyl)imino]ethyl}-4-methylpyridine]iron trichloride; [2,6-bis{1-[(2,4,6-tributylphenyl)imino]ethyl}-4-methylpyridine]iron trichloride; [2,6-bis{1-[(2,4,6-tricyclohexylphenyl)imino]ethyl}-4-methylpyridine]iron trichloride; [2,6-bis{1-[(2,6-diethyl-4-methylphenyl)imino]ethyl}-4-methylpyridine]iron trichloride; [2,6-bis{1 -[(2,6-dipropyl-4-methylphenyl)imino]ethyl}-4-methylpyridine]iron trichloride; [2,6-bis{1-[(2,6-diisopropyl-4-methylphenyl)imino]ethyl}-4-methylpyridine]iron trichloride; [2,6-bis{1-[(2,6-dibutyl-4-methylphenyl)imino]ethyl}-4-methylpyridine]iron trichloride; [2,6-bis(1-[(2,6-dicyclohexyl-4-methylphenyl)imino]ethyl}-4-methylpyridine]iron trichloride; [2,6-bis{[(4-methylphenyl)imino]methyl}-4-methylpyridine]iron trichloride; [2,6-bis{[(2,4,6-trimethylphenyl)imino]methyl}-4-methylpyridine]iron trichloride; [2,6-bis{[(2,4,6-triethylphenyl)imino]methyl}-4-methylpyridine]iron trichloride; [2,6-bis{[(2,4,6-tripropylphenyl)imino]methyl}-4-methylpyridine]iron trichloride; [2,6-bis{[(2,4,6-triisopropylphenyl)imino]methyl}-4-methylpyridine]iron trichloride; [2,6-bis{[(2,4,6-tributylphenyl)imino]methyl}-4-methylpyridine]iron trichloride; [2,6-bis{[(2,4,6-tricyclohexylphenyl)imino]methyl}-4-methylpyridine]iron trichloride; [2,6-bis{[(2,6-diethyl-4-methylphenyl)imino]methyl}-4-methylpyridine]iron trichloride; [2,6-bis{[(2,6-dipropyl-4-methylphenyl)imino]methyl}-4-methylpyridine]iron trichloride; [2,6-bis{[(2,6-diisopropyl-4-methylphenyl)imino]methyl}4-methylpyridine]iron trichloride; [2,6-bis{[(2,6-dibutyl-4-methylphenyl)imino]methyl}-4-methylpyridine]iron trichloride; [2,6-bis{[(2,6-dicyclohexyl-4-methylphenyl)imino]methyl}-4-methylpyridine]iron trichloride; [2,6-bis{1-[(phenyl)imino]ethyl}-4-chloropyridine]iron trichloride; [2,6-bis{1-[(2,6-dimethylphenyl)imino]ethyl}-4-chloropyridine]iron trichloride; [2,6-bis{1-[(2,6-diethylphenyl)imino]ethyl}-4-chloropyridine]iron trichloride; [2,6-bis{1-[(2,6-dipropylphenyl)imino]ethyl}-4-chloropyridine]iron trichloride; [2,6-bis{1-[(2,6-diisopropylphenyl)imino]ethyl}-4-chloropyridine]iron trichloride; [2,6-bis{1-[(2,6-dibutylphenyl)imino]ethyl}-4-chloropyridine]iron trichloride; [2,6-bis{1-[(2,6-dicyclohexylphenyl)imino]ethyl}-4-chloropyridine]iron trichloride; [2,6-bis{[(phenyl)imino]methyl}-4-chloropyridine]iron trichloride; [2,6-bis{[(2,6-dimethylphenyl)imino]methyl}-4-chloropyridine]iron trichloride; [2,6-bis{[(2,6-diethylphenyl)imino]methyl}-4-chloropyridine]iron trichloride; [2,6-bis{[(2,6-dipropylphenyl)imino]methyl}-4-chloropyridine]iron trichloride; [2,6-bis{[(2,6-diisopropylphenyl)imino]methyl}-4-chloropyridine]iron trichloride; [2,6-bis{[(2,6-dibutylphenyl)imino]methyl}-4-chloropyridine]iron trichloride; [2,6-bis{[(2,6-dicyclohexylphenyl)imino]methyl}-4-chloropyridine]iron trichloride; [2,6-bis{1-[(4-methylphenyl)imino]ethyl}-4-chloropyridine]iron trichloride; [2,6-bis{1-[(2,4,6-trimethylphenyl)imino]ethyl}-4-chloropyridine]iron trichloride; [2,6-bis{1-[(2,4,6-triethylphenyl)imino]ethyl}-4-chloropyridine]iron trichloride; [2,6-bis{1-[(2,4,6-tripropylphenyl)imino]ethyl}-4-chloropyridine]iron trichloride; [2,6-bis{1-[(2,4,6-triisopropylphenyl)imino]ethyl}4-chloropyridine]iron trichloride; [2,6-bis{1-[(2,4,6-tributylphenyl)imino]ethyl}-4-chloropyridine]iron trichloride; [2,6-bis{1-[(2,4,6-tricyclohexylphenyl)imino]ethyl}-4-chloropyridine]iron trichloride; [2,6-bis{1-[(2,6-diethyl-4-methylphenyl)imino]ethyl}-4-chloropyridine]iron trichloride; [2,6-bis{1-[(2,6-dipropyl-4-methylphenyl)imino]ethyl}-4-chloropyridine]iron trichloride; [2,6-bis{1-[(2,6-diisopropyl-4-methylphenyl)imino]ethyl}-4-chloropyridine]iron trichloride; [2,6-bis{1-[(2,6-dibutyl-4-methylphenyl)imino]ethyl}-4-chloropyridine]iron trichloride; [2,6-bis(1-[(2,6-dicyclohexyl-4-methylphenyl)imino]ethyl}-4-chloropyridine]iron trichloride; [2,6-bis{[(4-methylphenyl)imino]methyl}-4-chloropyridine]iron trichloride; [2,6-bis{[(2,4,6-trimethylphenyl)imino]methyl}-4-chloropyridine]iron trichloride; [2,6-bis{[(2,4,6-triethylphenyl)imino]methyl}-4-chloropyridine]iron trichloride; [2,6-bis{[(2,4,6-tripropylphenyl)imino]methyl}-4-chloropyridine]iron trichloride; [2,6-bis{[(2,4,6-triisopropylphenyl)imino]methyl}-4-chloropyridine]iron trichloride; [2,6-bis{[(2,4,6-tributylphenyl)imino]methyl}4-chloropyridine]iron trichloride; [2,6-bis{[(2,4,6-tricyclohexylphenyl)imino]methyl}-4-chloropyridine]iron trichloride; [2,6-bis{[(2,6-diethyl-4-methylphenyl)imino]methyl}-4-chloropyridine]iron trichloride; [2,6-bis{[(2,6-dipropyl-4-methylphenyl)imino]methyl}-4-chloropyridine]iron trichloride; [2,6-bis{[(2,6-diisopropyl-4-methylphenyl)imino]methyl}4-chloropyridine]iron trichloride; [2,6-bis{[(2,6-dibutyl-4-methylphenyl)imino]methyl}-4-chloropyridine]iron trichloride; [2,6-bis{[(2,6-dicyclohexyl-4-methylphenyl)imino]methyl}-4-chloropyridine]iron trichloride; [2,6-bis{1-[(methyl)imino]ethyl}pyridine]iron trichloride; [2,6-bis{1-[(ethyl)imino]ethyl}pyridine]iron trichloride; [2,6-bis{1-((isopropyl)imino]ethyl}pyridine]iron trichloride; [2,6-bis{1-[(cyciohexyl}imino]ethyl}pyridine]iron trichloride; [2,6-bis{1-[(methyl)imino]methyl}pyridine]iron trichloride; [2,6-bis{1-[(ethyl)imino]methyl}pyridine]iron trichloride; [2,6-bis{1-[(isopropyl)imino]methyl}pyridine]iron trichloride; [2,6-bis{1-[(cyclohexyl)imino]methyl}pyridine]iron trichloride; [2,6-bis{1-[(methyl)imino]ethyl}-4-methylpyridine]iron trichloride; [2,6-bis{1-[(ethyl)imino]ethyl}-4-methylpyridine]iron trichloride; [2,6-bis{1-((isopropyl}imino]ethyl}-4-methylpyridine]iron trichloride; [2,6-bis{1-[(cyclohexyl)imino]ethyl}-4-methylpyridine]iron trichloride; [2,6-bis{1-[(methyl)imino]methyl}-4-methylpyridine]iron trichloride; [2,6-bis{1-[(ethyl)imino]methyl}-4-methylpyridine]iron trichloride; [2,6-bis{1-[(isopropyl)imino]methyl}-4-methylpyridine]iron trichloride; [2,6-bis{1-[(cyclohexyl )imino]methyl}-4-methylpyridine]iron trichloride; 2,6-diformylpyridine bis(pyrrolidylhydrazone)iron trichloride; 2,6-diformylpyridine bis(piperidylhydrazone)iron trichloride; 2,6-diformylpyridine bis(phenylhydrazone)iron trichloride; 2,6-diformylpyridine bis (methylhydrazone)iron trichloride; 2,6-diformyl-4-chloropyridine bis(methylhydrazone)iron trichloride; 2,6-diacetylpyridine bis(pyrrolidylhydrazone)iron trichloride; 2,6-diacetylpyridine bis(piperidylhydrazone)iron trichloride; 2,6-diacetylpyridine bis(phenylhydrazone)iron trichloride; 2,6-diacetylpyridine bis(methylhydrazone) iron trichloride; 2,6-diacetyl-4-chloropyridine bis(phenylhydrazone)iron trichloride; 2,6-diformyl-4-methyl-pyridine bis(pyrrolidylhydrazone)iron trichloride; 2,6-diformyl-4-methyl-pyridine bis(piperidylhydrazone)iron trichloride; 2,6-diformyl-4-methyl-pyridine bis(phenylhydrazone)iron trichloride; 2,6-diformyl-4-methyl-pyridine bis(methylhydrazone)iron trichloride; 2,6-diacetyl-4-methyl-pyridine bis(pyrrolidylhydrazone)iron trichloride; 2,6-diacetyl-4-methyl-pyridine bis(piperidylhydrazone)iron trichloride; 2,6-diacetyl-4-methyl-pyridine bis(phenylhydrazone)iron trichloride; 2,6-diacetyl-4-methyl-pyridine bis(methylhydrazone)iron trichloride;

[2,6-bis-(2-oxazolin-2-yl)pyridine]iron trichloride; [2,6-bis-(4S-isopropyl-2-oxazolin-2-yl)pyridine]iron trichloride; [2,6-bis-(4R-isopropyl-2-oxazolin-2-yl)pyridine]iron trichloride;

[2,6-bis-(4-methyl-2-oxazolin-2-yl)pyridine]iron trichloride; [2,6-bis-(4-t-butyl-2-oxazolin-2-yl)pyridine]iron trichloride; [2,6-bis-(4,4-dimethyl-2-oxazolin-2-yl)pyridine]iron trichloride; [2,6-bis-(4-phenyl-2-oxazolin-2-yl)pyridine] iron trichloride; [2,6-bis-(5-phenyl-2-oxazolin-2-yl)pyridine]iron trichloride; [2,6-bis-(4,5-diphenyl-2-oxazolin-2-yl) pyridine]iron trichloride;

[2,6-bis-(4-benzyl-2-oxazolin-2-yl)pyridine]iron trichloride; [2,6-bis-(4-methoxymethyl-2-oxazolin-2-yl)pyridine]iron trichloride; [2,6-bis-(4-methyl-2-oxazolin-2-yl)pyridine]iron trichloride; [2,6-bis-(4S-isopropyl-4-methyl-2-oxazolin-2-yl)pyridine]iron trichloride; [2,6-bis-(4R-isopropyl-4-methyl-2-oxazolin-2-yl)pyridine]iron trichloride; [2,6-bis-(4-methyl-4-methyl-2-oxazolin-2-yl)pyridine]iron trichloride; [2,6-bis-(4-t-butyl-4-methyl-2-oxazolin-2-yl) pyridine]iron trichloride; [2,6-bis-(4,4-dimethyl-4-methyl-2-oxazolin-2-yl)pyridine]iron trichloride; [2,6-bis-(4-phenyl-4-methyl-2-oxazolin-2-yl)pyridine]iron trichloride; [2,6-bis-(5-phenyl-4-methyl-2-oxazolin-2-yl)pyridine]iron trichloride; [2,6-bis-(4,5-diphenyl-4-methyl-2-oxazolin-2-yl)pyridine]iron trichloride; [2,6-bis-(4-benzyl-4-methyl-2-oxazolin-2-yl)pyridine]iron trichloride; [2,6-bis-(4-methoxymethyl-4-methyl-2-oxazolin-2-yl)pyridine]iron trichloride;

[2,6-bis(imidazol-2-yl)pyridine]iron trichloride; [2,6-bis(1-methylimidazol-2-yl)pyridine]iron trichloride; [2,6-bis (1-ethylimidazol-2-yl)pyridine]iron trichloride; [2,6-bis(1-butylimidazol-2-yl)pyridine]iron trichloride; [2,6-bis(1-phenylimidazol-2-yl)pyridine]iron trichloride; [2,6-bis(1-benzylimidazol-2-yl)pyridine]iron trichloride; [2,6-bis(1 -phenylimidazol-2-yl)pyridine]iron trichloride; [2,6-bis(1-acetylimidazol-2-yl)pyridine]iron trichloride; [2,6-bis(1-(4-methoxyphenyl)imidazol-2-yl)pyridine]iron trichloride; [2,6-bis(1-trimethylsilylimidazol-2-yl)pyridine]iron trichloride; [2,6-bis(1,5-dimethylimidazol-2-yl)pyridine]iron trichloride; [2,6-bis(1,5-dimethyl-4-phenylimidazol-2-yl)pyridine] iron trichloride; [2,6-bis(1-methyl-5-nitroimidazol-2-yl)pyridine]iron trichloride; [2,6-bis(1,4,5-trimethylimidazol-2-yl)pyridine]iron trichloride; [2,6-bis(4,5-dimethylimidazol-2-yl)pyridine]iron trichloride; [2,6-bis(4,5-diphenylimidazol-2-yl)pyridine]iron trichloride; [2,6-bis(4-methylimidazol-2-yl)pyridine]iron trichloride; [2,6-bis(4-(2-methoxethyl)imidazol-2-yl )pyridine]iron trichloride;

[2,6-bis(benzimidazol-2-yl)pyridine]iron trichloride; [2,6-bis(1-methylbenzimidazol-2-yl)pyridine]iron trichloride; [2,6-bis(1-ethylbenzimidazol-2-yl)pyridine]iron trichloride; [2,6-bis(1-propylbenzimidazol-2-yl)pyridine]iron trichloride; [2,6-bis(1-isopropylbenzimidazol-2-yl)pyridine]iron trichloride; [2,6-bis(1-butylbenzimidazol-2-yl)pyridine]iron trichloride; [2,6-bis(1-pentylbenzimidazol-2-yl)pyridine]iron trichloride; [2,6-bis(1-cyclopentylbenzimidazol-2-yl)pyridine]iron trichloride; [2,6-bis(1-hexylbenzimidazol-2-yl)pyridine]iron trichloride; [2,6-bis(1-cyclohexylbenzimidazol-2-yl)pyridine]iron trichloride; [2,6-bis(1-octylbenzimidazol-2-yl)pyridine]iron trichloride; [2,6-bis(1-decylbenzimidazol-2-yl)pyridine]iron trichloride; [2,6-bis(1-dodecylbenzimidazol-2-yl)pyridine]iron trichloride; [2,6-bis(1 -tetradecylbenzimidazol-2-yl)pyridine]iron trichloride; [2,6-bis(1-hexadecylbenzimidazol-2-yl)pyridine]iron trichloride;

[2,6-bis(1-octadecylbenzimidazol-2-yl)pyridine]iron trichloride; [2,6-bis(1-benzylbenzimidazol-2-yl)pyridine]iron trichloride; [2,6-bis(1-phenylbenzimidazol-2-yl)pyridine]iron trichloride; [2,6-bis(4-methylbenzimidazol-2-yl)pyridine]iron trichloride; [2,6-bis(5-methylbenzimidazol-2-yl)pyridine]iron trichloride; [2,6-bis(6-methylbenzimidazol-2-yl)pyridine]iron trichloride; [2,6-bis(7-methylbenzimidazol-2-yl)pyridine]iron trichloride; [2,6-bis(5-ethylbenzimidazol-2-yl)pyridine]iron trichloride; [2,6-bis(5-propylbenzimidazol-2-yl)pyridine]iron trichloride; [2,6-bis(5-isopropylbenzimidazol-2-yl)pyridine]iron trichloride;

[2,6-bis(5-butylbenzimidazol-2-yl)pyridine]iron trichloride; [2,6-bis(5-pentylbenzimidazol-2-yl)pyridine]iron trichloride; [2,6-bis(5-cyclopentylbenzimidazol-2-yl)pyridine]iron trichloride;

[2,6-bis(5-hexylbenzimidazol-2-yl)pyridine]iron trichloride; [2,6-bis(1-acetylbenzimidazol-2-yl)pyridine]iron trichloride; [2,6-bis(1-benzoylbenzimidazol-2-yl)pyridine]iron trichloride; [2,6-bis(1,5-dimethylbenzimidazol-2-yl)pyridine]iron trichloride; [2,6-bis(4-methoxybenzimidazol2-yl)pyridine]iron trichloride; [2,6-bis(5-methoxybenzimidazol-2-yl)pyridine]iron trichloride;

[2,6-bis(6-methoxybenzimidazol-2-yl)pyridine]iron trichloride; [2,6-bis(7-methoxybenzimidazol-2-yl)pyridine]iron

trichloride; [2,6-bis(1-methyl-5-methoxybenzimidazol-2-yl)pyridine]iron trichloride; [2,6-bis(1-(methoxymethyl) benzimidazol-2-yl)pyridine]iron trichloride; [2,6-bis(1 -(ethoxymethyl)benzimidazol-2-yl)pyridine]iron trichloride; [2,6-bis(1-(propoxymethyl)benzimidazol-2-yl)pyridine]iron trichloride; [2,6-bis(1-(butoxymethyl)benzimidazol-2-yl) pyridine]iron trichloride; [2,6-bis(1-(hexyloxymethyl)benzimidazol-2-yl)pyridine]iron trichloride; [2,6-bis(1-(2-methoxyethyl)benzimidazol-2-yl)pyridine]iron trichloride; [2,6-bis(1-(2-ethoxyethyl)benzimidazol-2-yl)pyridine]iron trichloride; [2,6-bis(1-(2-propoxyethyl)benzimidazol-2-yl)pyridine]iron trichloride; [2,6-bis(1-(2-butoxyethyl)benzimidazol-2-yl)pyridine]iron trichloride; [2,6-bis(1-(2-hexyloxyethyl)benzimidazol-2-yl)pyridine]iron trichloride; [2,6-bis(1-(dimethylaminomethyl)benzimidazol-2-yl)pyridine]iron trichloride; [2,6-bis(1-(diethylaminomethyl)benzimidazol-2-yl)pyridine]iron trichloride; [2,6-bis(1-(dimethylaminoethyl)benzimidazol-2-yl)pyridine]iron trichloride; [2,6-bis(1-(diethylaminoethyl)benzimidazol-2-yl)pyridine]iron trichloride; [2,6-bis(1-(morpholinomethyl)benzimidazol-2-yl)pyridine]iron trichloride; [2,6-bis(1-(anilinomethyl)benzimidazol-2-yl)pyridine]iron trichloride; [2,6-bis (1-(piperidinomethyl)benzimidazol-2-yl)pyridine]iron trichloride; [2,6-bis(1-(pyrrolidinomethyl)benzimidazol-2-yl) pyridine]iron trichloride; [2,6-bis(5-(dimethylamino)benzimidazol-2-yl)pyridine]iron trichloride; [2,6-bis(5-(piperidino)benzimidazol-2-yl)pyridine]iron trichloride; [2,6-bis(5-(pyrrolidino)benzimidazol-2-yl)pyridine]iron trichloride; [2,6-bis(5,6-dimethyl-1-(piperidinomethyl)benzimidazol-2-yl)pyridine]iron trichloride;

The skilled artisan will recognize that additional members of the foregoing list will include the corresponding Lewis base adducts thereof.

Further exemplary, but non-limiting metal complexes according to the invention include the following cobalt dichloride and trichloride complexes:

[2,6-bis{1-[(phenyl)imino]ethyl}pyridine]cobalt dichloride; [2,6-bis{1-[(2,6-dimethylphenyl)imino]ethyl}pyridine]cobalt dichloride; [2,6-bis{1-[(2,6-diethylphenyl)imino]ethyl}pyridine]cobalt dichloride; [2,6-bis{1-[(2,6-dipropylphenyl)imino]ethyl}pyridine]cobalt dichloride; [2,6-bis{1-[(2,6-diisopropylphenyl)imino]ethyl}pyridine]cobalt dichloride; [2,6-bis{1-[(2,6-dibutylphenyl)imino]ethyl}pyridine]cobalt dichloride; [2,6-bis{1-[(2,6-dicyclohexylphenyl)imino] ethyl}pyridine]cobalt dichloride; [2,6-bis{[(phenyl)imino]methyl}pyridine]cobalt dichloride; [2,6-bis{[(2,6-dimethylphenyl)imino]methyl}pyridine]cobalt dichloride; [2,6-bis{[(2,6-diethylphenyl)imino]methyl}pyridine]cobalt dichloride; [2,6-bis{[(2,6-dipropylphenyl)imino]methyl}pyridine]cobalt dichloride; [2,6-bis{[(2,6-diisopropylphenyl)imino] methyl}pyridine]cobalt dichloride; [2,6-bis{[(2,6-dibutylphenyl)imino]methyl}pyridine]cobalt dichloride; [2,6-bis{[ (2,6-dicyclohexylphenyl)imino]methyl}pyridine]cobalt dichloride; [2,6-bis{1-[(4-methylphenyl)imino]ethyl}pyridine] cobalt dichloride; [2,6-bis{1-[(2,4,6-trimethylphenyl)imino]ethyl}pyridine]cobalt dichloride; [2,6-bis{1-[(2,4,6-triethylphenyl)imino]ethyl}pyridine]cobalt dichloride; [2,6-bis{I -[(2,4,6-tripropylphenyl)imino]ethyl}pyridine]cobalt dichloride; [2,6-bis{1-[(2,4,6-triisopropylphenyl)imino]ethyl}pyridine]cobalt dichloride; [2,6-bis{1-[(2,4,6-tributylphenyl) imino]ethyl}pyridine]cobalt dichloride; [2,6-bis{1-[(2,4,6-tricyclohexylphenyl)imino]ethyl}pyridine]cobalt dichloride; [2,6-bis{1-[(2,6-diethyl-4-methylphenyl)imino]ethyl}pyridine]cobalt dichloride; [2,6-bis{1-[(2,6-dipropyl-4-methylphenyl)imino]ethyl}pyridine]cobalt dichloride; [2,6-bis{1-((2,6-diisopropyl-4-methylphenyl)imino]ethyl}pyridine]cobalt dichloride; [2,6-bis{1-[(2,6-dibutyl-4-methylphenyl)imino]ethyl}pyridine]cobalt dichloride; [2,6-bis{1-[(2,6-dicyclohexyl-4-methylphenyl)imino]ethyl}pyridine]cobalt dichloride; [2,6-bis{[(4-methylphenyl)imino]methyl}pyridine] cobalt dichloride; [2,6-bis{[(2,4,6-trimethylphenyl)imino]methyl}pyridine]cobalt dichloride; [2,6-bis{[(2,4,6-triethylphenyl)imino]methyl}pyridine]cobalt dichloride; [2,6-bis{[(2,4,6-tripropylphenyl)imino]methyl}pyridine]cobalt dichloride; [2,6-bis{[(2,4,6-triisopropylphenyl)imino]methyl}pyridine]cobalt dichloride; [2,6-bis{[(2,4,6-tributylphenyl)imino]methyl}pyridine]cobalt dichloride; [2,6-bis{[(2,4,6-tricyclohexylphenyl)imino]methyl}pyridine]cobalt dichloride; [2,6-bis{[(2,6-diethyl-4-methylphenyl)imino]methyl}pyridine]cobalt dichloride; [2,6-bis{[(2,6-dipropyl-4-methylphenyl)imino]methyl}pyridine]cobalt dichloride; [2,6-bis([(2,6-diisopropyl-4-methylphenyl)imino]methyl} pyridine]cobalt dichloride; [2,6-bis{[(2,6-dibutyl-4-methylphenyl)imino]methyl}pyridine]cobalt dichloride; [2,6-bis{[ (2,6-dicyclohexyl-4-methylphenyl)imino]methyl}pyridine]cobalt dichloride; [2,6-bis{1-[(phenyl)imino]ethyl}-4-methylpyridine]cobalt dichloride; [2,6-bis{1-[(2,6-dimethylphenyl)imino]ethyl}-4-methylpyridine]cobalt dichloride; [2,6-bis{1-[(2,6-diethylphenyl)imino]ethyl}-4-methylpyridine]cobalt dichloride; [2,6-bis{1-[(2,6-dipropylphenyl)imino]ethyl}-4-methylpyridine]cobalt dichloride; [2,6-bis{1-[(2,6-diisopropylphenyl)imino]ethyl}-4-methylpyridine]cobalt dichloride; [2,6-bis{1-[(2,6-dibutylphenyl)imino]ethyl}-4-methylpyridine]cobalt dichloride; [2,6-bis{1-[(2,6-dicyclohexylphenyl)imino]ethyl}-4-methylpyridine]cobalt dichloride; [2,6-bis{[(phenyl)imino]methyl}-4-methylpyridine] cobalt dichloride; [2,6-bis{[(2,6-dimethylphenyl)imino]methyl}-4-methylpyridine]cobalt dichloride; [2,6-bis{[(2,6-diethylphenyl)imino]methyl}-4-methylpyridine]cobalt dichloride; [2,6-bis{[(2,6-dipropylphenyl)imino]methyl}-4-methylpyridine]cobalt dichloride; [2,6-bis{[(2,6-diisopropylphenyl)imino]methyl}-4-methylpyridine]cobalt dichloride; [2,6-bis{[(2,6-dibutylphenyl)imino]methyl}-4-methylpyridine]cobalt dichloride; [2,6-bis{[(2,6-dicyclohexylphenyl) imino]methyl}-4-methylpyridine]cobalt dichloride; [2,6-bis{1-[(4-methylphenyl)imino]ethyl}-4-methylpyridine]cobalt dichloride; [2,6-bis{1-[(2,4,6-trimethylphenyl)imino]ethyl}-4-methylpyridine]cobalt dichloride; [2,6-bis{1-[(2,4,6-triethylphenyl)imino]ethyl}-4-methylpyridine]cobalt dichloride; [2,6-bis{1-[(2,4,6-tripropylphenyl)imino]ethyl}-4-methylpyridine]cobalt dichloride; [2,6-bis{1-[(2,4,6-triisopropylphenyl)imino]ethyl}-4-methylpyridine]cobalt dichloride; [2,6-bis{1-[(2,4,6-tributylphenyl)imino]ethyl}-4-methylpyridine]cobalt dichloride; [2,6-bis{1-[(2,4,6-tricyclohexylphenyl)imino]ethyl}-4-methylpyridine]cobalt dichloride; [2,6-bis{1-[(2,6-diethyl-4-methylphenyl)imino]ethyl}-4-methylpyridine]cobalt dichloride; [2,6-bis{1-[(2,6-dipropyl-4-methylphenyl)imino]ethyl}-4-methylpyridine]cobalt dichloride; [2,6-bis{1-[(2,6-diisopropyl-4-methylphenyl)imino]ethyl}-4-methylpyridine]cobalt dichloride; [2,6-bis {1-[(2,6-dibutyl-4-methylphenyl)imino]ethyl}-4-methylpyridine]cobalt dichloride; [2,6-bis{1 -[(2,6-dicyclohexyl-4-methylphenyl)imino]ethyl}-4-methylpyridine]cobalt dichloride; [2,6-bis{[(4-methylphenyl)imino]methyl)-4-methylpyridine]cobalt dichloride; [2,6-bis{[(2,4,6-trimethylphenyl)imino]methyl}-4-methylpyridine]cobalt dichloride; [2,6-bis{[(2,4,6-triethylphenyl)imino]methyl}-4-methylpyridine]cobalt dichloride; [2,6-bis{[(2,4,6-tripropylphenyl) imino]methyl}4-methylpyridine]cobalt dichloride; [2,6-bis{[(2,4,6-triisopropylphenyl)imino]methyl}-4-methylpyridine]cobalt dichloride; [2,6-bis{[(2,4,6-tributylphenyl)imino]methyl}-4-methylpyridine]cobalt dichloride; [2,6-bis{[ (2,4,6-tricyclohexylphenyl)imino]methyl}-4-methylpyridine]cobalt dichloride; [2,6-bis{[(2,6-diethyl-4-methylphenyl) imino]methyl}-4-methylpyridine]cobalt dichloride; [2,6-bis{[(2,6-dipropyl-4-methylphenyl)imino]methyl}-4-methylpyridine]cobalt dichloride; [2,6-bis{[(2,6-diisopropyl-4-methylphenyl)imino]methyl}-4-methylpyridine]cobalt dichloride; [2,6-bis{[(2,6-dibutyl-4-methylphenyl)imino]methyl}-4-methylpyridine]cobalt dichloride; [2,6-bis{[(2,6-dicyclohexyl-4-methylphenyl)imino]methyl}-4-methylpyridine]cobalt dichloride; [2,6-bis{1-[(phenyl)imino]ethyl}-4-chloropyridine]cobalt dichloride; [2,6-bis{1-[(2,6-dimethylphenyl)imino]ethyl}-4-chloropyridine]cobalt dichloride; [2,6-bis{1-[(2,6-diethylphenyl)imino]ethyl}-4-chloropyridine]cobalt dichloride; [2,6-bis{1-[(2,6-dipropylphenyl)imino]ethyl}4-chloropyridine]cobalt dichloride; [2,6-bis{1-[(2,6-diisopropylphenyl)imino]ethyl}-4-chloropyridine]cobalt dichloride; [2,6-bis{1-[(2,6-dibutylphenyl)imino]ethyl}-4-chloropyridine]cobalt dichloride; [2,6-bis{1-[(2,6-dicyclohexylphenyl)imino]ethyl}-4-chloropyridine]cobalt dichloride; [2,6-bis{[(phenyl)imino]methyl}-4-chloropyridine] cobalt dichloride; [2,6-bis{[(2,6-dimethylphenyl)imino]methyl}-4-chloropyridine]cobalt dichloride; [2,6-bis{[(2,6-diethylphenyl)imino]methyl}-4-chloropyridine]cobalt dichloride; [2,6-bis{[(2,6-dipropylphenyl)imino]methyl}-4-chloropyridine]cobalt dichloride; [2,6-bis{[(2,6-diisopropylphenyl)imino]methyl}-4-chloropyridine]cobalt dichloride; [2,6-bis{[(2,6-dibutylphenyl)imino]methyl}-4-chloropyridine]cobalt dichloride; [2,6-bis{[(2,6-dicyclohexylphenyl)imino]methyl}-4-chloropyridine]cobalt dichloride; [2,6-bis{1-[(4-methylphenyl)imino]ethyl}-4-chloropyridine]cobalt dichloride; [2,6-bis{1-[(2,4,6-trimethylphenyl)imino]ethyl}-4-chloropyridine]cobalt dichloride; [2,6-bis{1-[(2,4,6-triethylphenyl)imino]ethyl}-4-chloropyridine]cobalt dichloride; [2,6-bis{1-[(2,4,6-tripropylphenyl)imino]ethyl}-4-chloropyridine]cobalt dichloride; [2,6-bis{1-[(2,4,6-triisopropylphenyl)imino]ethyl}-4-chloropyridine]cobalt dichloride; [2,6-bis{1-[(2,4,6-tributylphenyl)imino]ethyl}-4-chloropyridine]cobalt dichloride; [2,6-bis{1-[(2,4,6-tricyclohexylphenyl)imino]ethyl}4-chloropyridine]cobalt dichloride; [2,6-bis{1-[(2,6-diethyl-4-methylphenyl)imino]ethyl}-4-chloropyridine]cobalt dichloride; [2,6-bis{1-[(2,6-dipropyl-4-methylphenyl)imino]ethyl}-4-chloropyridine]cobalt dichloride; [2,6-bis{1-[(2,6-diisopropyl-4-methylphenyl)imino]ethyl}-4-chloropyridine]cobalt dichloride; [2,6-bis{1-[(2,6-dibutyl-4-methylphenyl)imino]ethyl}-4-chloropyridine]cobalt dichloride; [2,6-bis{1-[(2,6-dicyclohexyl-4-methylphenyl) imino]ethyl}-4-chloropyridine]cobalt dichloride; [2,6-bis{[(4-methylphenyl)imino]methyl}-4-chloropyridine]cobalt dichloride; [2,6-bis{[(2,4,6-trimethylphenyl)imino]methyl}-4-chloropyridine]cobalt dichloride; [2,6-bis{[(2,4,6-triethylphenyl)imino]methyl}-4-chloropyridine]cobalt dichloride; [2,6-bis{[(2,4,6-tripropylphenyl)imino]methyl}-4-chloropyridine]cobalt dichloride; [2,6-bis{[(2,4,6-triisopropylphenyl)imino]methyl}4-chloropyridine]cobalt dichloride; [2,6-bis{[(2,4,6-tributylphenyl)imino]methyl}-4-chloropyridine]cobalt dichloride; [2,6-bis{[(2,4,6-tricyclohexylphenyl)imino]methyl}-4-chloropyridine]cobalt dichloride; [2,6-bis{[(2,6-diethyl-4-methylphenyl)imino]methyl}-4-chloropyridine]cobalt dichloride; [2,6-bis{[(2,6-dipropyl-4-methylphenyl)imino]methyl}-4-chloropyridine]cobalt dichloride; [2,6-bis{[(2,6-diisopropyl-4-methylphenyl)imino]methyl}-4-chloropyridine]cobalt dichloride; [2,6-bis{[ (2,6-dibutyl-4-methylphenyl)imino]methyl}-4-chloropyridine]cobalt dichloride; [2,6-bis{[(2,6-dicyclohexyl-4-methylphenyl)imino]methyl}-4-chloropyridine]cobalt dichloride; [2,6-bis{1-[(methyl)imino]ethyl}pyridine]cobalt dichloride; [2,6-bis{1-[(ethyl)imino]ethyl}pyridine]cobalt dichloride; [2,6-bis{1-[(isopropyl)imino]ethyl}pyridine]cobalt dichloride; [2,6-bis{1-[(cyclohexyl)imino]ethyl}pyridine]cobalt dichloride; [2,6-bis{1-[(methyl)imino]methyl}pyridine]cobalt dichloride; [2,6-bis{1-[(ethyl)imino]methyl}pyridine]cobalt dichloride; [2,6-bis{1-[(isopropyl)imino]methyl}pyridine] cobalt dichloride; [2,6-bis{1-[(cyclohexyl)imino]methyl}pyridine]cobalt dichloride; [2,6-bis{1-[(methyl)imino]ethyl}-4-methylpyridine]cobalt dichloride; [2,6-bis{1-((ethyl)imino]ethyl}-4-methylpyridine]cobalt dichloride; [2,6-bis {1-[(isopropyl)imino]ethyl}-4-methylpyridine]cobalt dichloride; [2,6-bis{1-[(cyclohexyl )imino]ethyl}-4-methylpyridine]cobalt dichloride; [2,6-bis{1-((methyl)imino]methyl}-4-methylpyridine]cobalt dichloride; [2,6-bis{1-[(ethyl)imino] methyl}-4-methylpyridine]cobalt dichloride; [2,6-bis{1-[(isopropyl)imino]methyl}-4-methylpyridine]cobalt dichloride; [2,6-bis{1-((cyclohexyl)imino]methyl}-4-methylpyridine]cobalt dichloride; 2,6-diformylpyridine bis(pyrrolidylhydrazone)cobalt dichloride; 2,6-diformylpyridine bis(piperidylhydrazone)cobalt dichloride; 2,6-diformylpyridine bis(phenylhydrazone)cobalt dichloride; 2,6-diformylpyridine bis(methylhydrazone)cobalt dichloride; 2,6-diformyl-4-chloropyridine bis(methylhydrazone)cobalt dichloride; 2,6-diacetylpyridine bis(pyrrolidylhydrazone)cobalt dichloride; 2,6-diacetylpyridine bis(piperidylhydrazone)cobalt dichloride; 2,6-diacetylpyridine bis(phenylhydrazone)cobalt dichloride; 2,6-diacetylpyridine bis(methylhydrazone)cobalt dichloride; 2,6-diacetyl-4-chloropyridine

bis(phenylhydrazone)cobalt dichloride; 2,6-diformyl-4-methyl-pyridine bis(pyrrolidylhydrazone)cobalt dichloride; 2,6-diformyl-4-methyl-pyridine bis(piperidylhydrazone)cobalt dichloride; 2,6-diformyl-4-methyl-pyridine bis(phenylhydrazone)cobalt dichloride; 2,6-diformyl-4-methyl-pyridine bis(methylhydrazone)cobalt dichloride; 2,6-diacetyl-4-methyl-pyridine bis(pyrrolidylhydrazone)cobalt dichloride; 2,6-diacetyl-4-methyl-pyridine bis(piperidylhydrazone)cobalt dichloride; 2,6-diacetyl-4-methyl-pyridine bis(phenylhydrazone)cobalt dichloride; 2,6-diacetyl-4-methyl-pyridine bis(methylhydrazone)cobalt dichloride;

[2,6-bis-(2-oxazolin-2-yl)pyridine]cobalt dichloride; [2,6-bis-(4S-isopropyl-2-oxazolin-2-yl)pyridine]cobalt dichloride; [2,6-bis-(4R-isopropyl-2-oxazolin-2-yl)pyridine]cobalt dichloride; [2,6-bis-(4-methyl-2-oxazolin-2-yl)pyridine] cobalt dichloride; [2,6-bis-(4-t-butyl-2-oxazolin-2-yl)pyridine]cobalt dichloride; [2,6-bis-(4,4-dimethyl-2-oxazolin-2-yl)pyridine]cobalt dichloride; [2,6-bis-(4-phenyl-2-oxazolin-2-yl)pyridine]cobalt dichloride; [2,6-bis-(5-phenyl-2-oxazolin-2-yl)pyridine]cobalt dichloride; [2,6-bis-(4,5-diphenyl-2-oxazolin-2-yl)pyridine]cobalt dichloride; [2,6-bis-(4-benzyl-2-oxazolin-2-yl)pyridine]cobalt dichloride; [2,6-bis-(4-methoxymethyl-2-oxazolin-2-yl)pyridine] cobalt dichloride; [2,6-bis-(4-methyl-2-oxazolin-2-yl)pyridine]cobalt dichloride; [2,6-bis-(4S-isopropyl-4-methyl-2-oxazolin-2-yl)pyridine]cobalt dichloride; [2,6-bis-(4R-isopropyl-4-methyl-2-oxazolin-2-yl)pyridine]cobalt dichloride; [2,6-bis-(4-methyl-4-methyl-2-oxazolin-2-yl)pyridine]cobalt dichloride; [2,6-bis-(4-t-butyl-4-methyl-2-oxazolin-2-yl)pyridine]cobalt dichloride; [2,6-bis-(4,4-dimethyl-4-methyl-2-oxazolin-2-yl)pyridine]cobalt dichloride; [2,6-bis-(4-phenyl-4-methyl-2-oxazolin-2-yl)pyridine]cobalt dichloride; [2,6-bis-(5-phenyl-4-methyl-2-oxazolin-2-yl)pyridine]cobalt dichloride; [2,6-bis-(4,5-diphenyl-4-methyl-2-oxazolin-2-yl)pyridine]cobalt dichloride; [2,6-bis-(4-benzyl-4-methyl-2-oxazolin-2-yl)pyridine]cobalt dichloride; [2,6-bis-(4-methoxymethyl-4-methyl-2-oxazolin-2-yl)pyridine]cobalt dichloride;

[2,6-bis(imidazol-2-yl)pyridine]cobalt dichloride; [2,6-bis(1-methylimidazol-2-yl)pyridine]cobalt dichloride; [2,6-bis (1-ethylimidazol-2-yl)pyridine]cobalt dichloride; [2,6-bis(1-butylimidazol-2-yl)pyridine]cobalt dichloride; [2,6-bis (1-phenylimidazol-2-yl)pyridine]cobalt dichloride; [2,6-bis(1-benzylimidazol-2-yl)pyridine]cobalt dichloride; [2,6-bis (1-phenylimidazol-2-yl)pyridine]cobalt dichloride; [2,6-bis(1-acetylimidazol-2-yl)pyridine]cobalt dichloride; [2,6-bis (1-(4-methoxyphenyl)imidazol-2-yl)pyridine]cobalt dichloride; [2,6-bis(1-trimethylsilylimidazol-2-yl)pyridine]cobalt dichloride; [2,6-bis(1,5-dimethylimidazol-2-yl)pyridine]cobalt dichloride; [2,6-bis(1,5-dimethyl-4-phenylimidazol-2-yl)pyridine]cobalt dichloride; [2,6-bis(1-methyl-5-nitroimidazol-2-yl)pyridine]cobalt dichloride; [2,6-bis(1,4,5-trimethylimidazol-2-yl)pyridine]cobalt dichloride; [2,6-bis(4,5-dimethylimidazol-2-yl)pyridine]cobalt dichloride; [2,6-bis(4,5-diphenylimidazol-2-yl)pyridine]cobalt dichloride; [2,6-bis(4-methylimidazol-2-yl)pyridine]cobalt dichloride; [2,6-bis(4-(2-methoxethyl)imidazol-2-yl)pyridine]cobalt dichloride;

[2,6-bis(benzimidazol-2-yl)pyridine]cobalt dichloride; [2,6-bis(1-methylbenzimidazol-2-yl)pyridine]cobalt dichloride; [2,6-bis(1-ethylbenzimidazol-2-yl)pyridine]cobalt dichloride;

[2,6-bis(1-propylbenzimidazol-2-yl)pyridine]cobalt dichloride; [2,6-bis(1-isopropylbenzimidazol-2-yl)pyridine]cobalt dichloride; [2,6-bis(1-butylbenzimidazol-2-yl)pyridine]cobalt dichloride; [2,6-bis(1-pentylbenzimidazol-2-yl)pyridine]cobalt dichloride;

[2,6-bis(1-cyclopentylbenzimidazol-2-yl)pyridine]cobalt dichloride; [2,6-bis(1-hexylbenzimidazol-2-yl)pyridine]cobalt dichloride; [2,6-bis(1-cyclohexylbenzimidazol-2-yl)pyridine]cobalt dichloride; [2,6-bis(1-octylbenzimidazol-2-yl)pyridine]cobalt dichloride;

[2,6-bis(1-decylbenzimidazol-2-yl)pyridine]cobalt dichloride; [2,6-bis(1-dodecylbenzimidazol-2-yl)pyridine]cobalt dichloride; [2,6-bis(1-tetradecylbenzimidazol-2-yl)pyridine]cobalt dichloride; [2,6-bis(1-hexadecylbenzimidazol-2-yl)pyridine]cobalt dichloride; [2,6-bis(1-octadecylbenzimidazol-2-yl)pyridine]cobalt dichloride; [2,6-bis(1-benzyibenzimidazol-2-yl)pyridine)cobalt dichloride; [2,6-bis(1-phenylbenzimidazol-2-yl)pyridine]cobalt dichloride;

[2,6-bis(4-methylbenzimidazol-2-yl)pyridine]cobalt dichloride; [2,6-bis(5-methylbenzimidazol-2-yl)pyridine]cobalt dichloride; [2,6-bis(6-methylbenzimidazol-2-yl)pyridine]cobalt dichloride; [2,6-bis(7-methylbenzimidazol-2-yl)pyridine]cobalt dichloride; [2,6-bis(5-ethylbenzimidazol-2-yl)pyridine]cobalt dichloride; [2,6-bis(5-propylbenzimidazol-2-yl)pyridine]cobalt dichloride;

[2,6-bis(5-isopropylbenzimidazol-2-yl)pyridine]cobalt dichloride; [2,6-bis(5-butylbenzimidazol-2-yl)pyridine]cobalt dichloride; [2,6-bis(5-pentylbenzimidazol-2-yl)pyridine]cobalt dichloride; [2,6-bis(5-cyclopentylbenzimidazol-2-yl) pyridine]cobalt dichloride; [2,6-bis(5-hexylbenzimidazol-2-yl)pyridine]cobalt dichloride; [2,6-bis(1-acetylbenzimidazol-2-yl)pyridine]cobalt dichloride; [2,6-bis(1-benzoylbenzimidazol-2-yl)pyridine]cobalt dichloride; [2,6-bis (1,5-dimethylbenzimidazol-2-yl)pyridine]cobalt dichloride; [2,6-bis(4-methoxybenzimidazol-2-yl)pyridine]cobalt dichloride; [2,6-bis(5-methoxybenzimidazol-2-yl)pyridine]cobalt dichloride; [2,6-bis(6-methoxybenzimidazol-2-yl) pyridine]cobalt dichloride; [2,6-bis(7-methoxybenzimidazol-2-yl)pyridine]cobalt dichloride;

[2,6-bis(1 -methyl-5-methoxybenzimidazol-2-yl)pyridine]cobalt dichloride; [2,6-bis(1-(methoxymethyl )benzimidazol-2-yl)pyridine]cobalt dichloride; [2,6-bis(1-(ethoxymethyl)benzimldazol-2-yl)pyridine]cobalt dichloride; [2,6-bis (1-(propoxymethyl)benzimidazol-2-yl)pyridine]cobalt dichloride; [2,6-bis(1-(butoxymethyl)benzimldazol-2-yl)pyridine]cobalt dichloride; [2,6-bis(1-(hexyloxymethyl)benzimidazol-2-yl)pyridine]cobalt dichloride; [2,6-bis(1-(2-methoxyethyl)benzimidazol-2-yl)pyridine]cobalt dichloride; [2,6-bis(1-(2-ethoxyethyl)benzimidazol-2-yl)pyridine]cobalt

dichloride; [2,6-bis(1-(2-propoxyethyl)benzimidazol-2-yl)pyridine]cobalt dichloride; [2,6-bis(1-(2-butoxyethyl)benzimidazol-2-yl)pyridine]cobalt dichloride; [2,6-bis(1-(2-hexyloxyethyl)benzimidazol-2-yl)pyridine]cobalt dichloride; [2,6-bis(1-(dimethylaminomethyl)benzimidazol-2-yl)pyridine]cobalt dichloride; [2,6-bis(1-(diethylaminomethyl) benzimidazol-2-yl)pyridine]cobalt dichloride; [2,6-bis(1-(dimethylaminoethyl)benzimidazol-2-yl)pyridine]cobalt dichloride; [2,6-bis(1-(diethylaminoethyl)benzimidazol-2-yl)pyridine]cobalt dichloride; [2,6-bis(1-(morpholinomethyl)benzimidazol-2-yl)pyridine]cobalt dichloride; [2,6-bis(1-(anilinomethyl)benzimidazol-2-yl)pyridine]cobalt dichloride; [2,6-bis(1-(piperidinomethyl)benzimidazol-2-yl)pyridine]cobalt dichloride; [2,6-bis(1-(pyrrolidinomethyl) benzimidazol-2-yl)pyridine]cobalt dichloride; [2,6-bis(5-(dimethylamino)benzimidazol-2-yl)pyridine]cobalt dichloride; [2,6-bis(5-(piperidino)benzimidazol-2-yl)pyridine]cobalt dichloride; [2,6-bis(5-(pyrrolidino)benzimidazol-2-yl) pyridine]cobalt dichloride; [2,6-bis(5,6-dimethyl-1 -(piperidinomethyl)benzimidazol-2-yl)pyridine]cobalt dichloride; [2,6-bis{1-[(phenyl)imino]ethyl}pyridine]cobalt trichloride; [2,6-bis{1-[(2,6-dimethylphenyl)imino]ethyl}pyridine]cobalt trichloride; [2,6-bis{1-[(2,6-diethylphenyl)imino]ethyl}pyridine]cobalt trichloride; [2,6-bis{1-[(2,6-dipropylphenyl)imino]ethyl}pyridlne]cobalt trichloride; [2,6-bis{1-[(2,6-diisopropylphenyl)imino]ethyl}pyridine]cobalt trichloride; [2,6-bis{1-[(2,6-dibutylphenyl)imino]ethyl}pyridine]cobalt trichloride; [2,6-bis{1-[(2,6-dicyclohexylphenyl)imino] ethyl}pyridine]cobalt trichloride; [2,6-bis{[(phenyl)imino]methyl}pyridine]cobalt trichloride; [2,6-bis{[(2,6-dimethylphenyl)imino]methyl}pyridine]cobalt trichloride; [2,6-bis{[(2,6-diethylphenyl)imino]methyl}pyridine]cobalt trichloride; [2,6-bis{[(2,6-dipropylphenyl)imino]methyl}pyridine]cobalt trichloride; [2,6-bis{[(2,6-diisopropylphenyl)imino] methyl}pyridine]cobalt trichloride; [2,6-bis{[(2,6-dibutylphenyl)imino]methyl}pyridine]cobalt trichloride; [2,6-bis{[ (2,6-dicyclohexylphenyl)imino]methyl}pyridine]cobalt trichloride; [2,6-bis{1-[(4-methylphenyl)imino]ethyl}pyridine] cobalt trichloride; [2,6-bis{1-[(2,4,6-trimethylphenyl)imino]ethyl}pyridine]cobalt trichloride; [2,6-bis{1-[(2,4,6-triethylphenyl)imino]ethyl}pyridine]cobalt trichloride; [2,6-bis{1-[(2,4,6-tripropylphenyl)imino]ethyl}pyridine]cobalt trichloride;[2,6-bis{1-[(2,4,6-triisopropylphenyl)imino]ethyl}pyridine]cobalttrichloride;[2,6-bis{1-[(2,4,6-tributylphenyl)imino]ethyl}pyridine]cobalt trichloride; [2,6-bis{1-[(2,4,6-tricyclohexylphenyl)imino]ethyl}pyridine]cobalt trichloride; [2,6-bis{1-[(2,6-diethyl-4-methylphenyl)imino]ethyl}pyridine]cobalt trichloride; [2,6-bis{1-[(2,6-dipropyl-4-methyl phenyl)imino]ethyl}pyridine]cobalt trichloride; [2,6-bis{1-[(2,6-diisopropyl-4-methylphenyl)imino]ethyl}pyridine]cobalt trichloride; [2,6-bis{1-[(2,6-dibutyl-4-methylphenyl)imino]ethyl}pyridine]cobalt trichloride; [2,6-bis {1-[(2,6-dicyclohexyl-4-methylphenyl)imino]ethyl}pyridine]cobalt trichloride; [2,6-bis{[(4-methylphenyl)imino]methyl}pyridine]cobalt trichloride; [2,6-bis{[(2,4,6-trimethylphenyl)imino]methyl}pyridine]cobalt trichloride; [2,6-bis{[ (2,4,6-triethylphenyl)imino]methyl}pyridine]cobalt trichloride; [2,6-bis{[(2,4,6-tripropylphenyl)imino]methyl}pyridine]cobalt trichloride; [2,6-bis{[(2,4,6-triisopropylphenyl)imino]methyl}pyridine]cobalt trichloride; [2,6-bis{[ (2,4,6-tributylphenyl)imino]methyl}pyridine]cobalt trichloride; [2,6-bis{[(2,4,6-tricyclohexylphenyl)imino]methyl}pyridine]cobalt trichloride; [2,6-bis{[(2,6-diethyl-4-methylphenyl)imino]methyl}pyridine]cobalt trichloride; [2,6-bis{[ (2,6-dipropyl-4-methylphenyl)imino]methyl}pyridine]cobalt trichloride; [2,6-bis{[(2,6-diisopropyl-4-methylphenyl) imino]methyl}pyridine]cobalt trichloride; [2,6-bis{[(2,6-dibutyl-4-methylphenyl)imino]methyl}pyridine]cobalt trichloride; [2,6-bis{[(2,6-dicyclohexyl-4-methylphenyl)imino]methyl}pyridine]cobalt trichloride; [2,6-bis{1-[(phenyl)imino] ethyl}-4-methylpyridine]cobalt trichloride; [2,6-bis{1-[(2,6-dimethylphenyl)imino]ethyl}-4-methylpyridine]cobalt trichloride; [2,6-bis{1-[(2,6-diethylphenyl)imino]ethyl}-4-methylpyridine]cobalt trichloride; [2,6-bis{1-[(2,6-dipropylphenyl)imino]ethyl}-4-methylpyridine]cobalt trichloride; [2,6-bis{1-[(2,6-diisopropylphenyl)imino]ethyl}-4-methylpyridine]cobalt trichloride; [2,6-bis{1-[(2,6-dibutylphenyl)imino]ethyl}-4-methylpyridine]cobalt trichloride; [2,6-bis {1-[(2,6-dicyclohexylphenyl)imino]ethyl}-4-methylpyridine]cobalt trichloride; [2,6-bis{[(phenyl)imino]methyl}-4-methylpyridine]cobalt trichloride; [2,6-bis{((2,6-dimethylphenyl)imino]methyl}-4-methylpyridine]cobalt trichloride; [2,6-bis{[(2,6-diethylphenyl)imino]methyl}-4-methylpyridine]cobalt trichloride; [2,6-bis{[(2,6-dipropylphenyl) imino]methyl)4-methylpyridine]cobalt trichloride; [2,6-bis{[(2,6-diisopropylphenyl)imino]methyl}-4-methylpyridine] cobalt trichloride; [2,6-bis{[(2,6-dibutylphenyl)imino]methyl}-4-methylpyridine]cobalt trichloride; [2,6-bis{[(2,6-dicyclohexylphenyl)imino]methyl}-4-methylpyridine]cobalt trichloride; [2,6-bis{1-[(4-methylphenyl)imino]ethyl}-4-methylpyridine]cobalt trichloride; [2,6-bis{1-[(2,4,6-trimethylphenyl)imino]ethyl}-4-methylpyridine]cobalt trichloride; [2,6-bis{1-[(2,4,6-triethylphenyl)imino]ethyl}-4-methylpyridine]cobalt trichloride; [2,6-bis{1-[(2,4,6-tripropylphenyl)imino]ethyl}-4-methylpyridine]cobalt trichloride; [2,6-bis{1-[(2,4,6-triisopropylphenyl)imino]ethyl}-4-methylpyridine]cobalt trichloride; [2,6-bis{1-[(2,4,6-tributylphenyl)imino]ethyl}-4-methylpyridine]cobalt trichloride; [2,6-bis {1-[(2,4,6-tricyclohexylphenyl)imino]ethyl}-4-methylpyridine]cobalt trichloride; [2,6-bis{1 -[(2,6-diethyl-4-methylphenyl)imino]ethyl}-4-methylpyridine]cobalt trichloride; [2,6-bis{1-[(2,6-dipropyl-4-methylphenyl)imino]ethyl}-4-methylpyridine]cobalt trichloride; [2,6-bis{1-[(2,6-diisopropyl-4-methylphenyl)imino]ethyl}-4-methylpyridine]cobalt trichloride; [2,6-bis{1-[(2,6-dibutyl-4-methylphenyl)imino]ethyl}-4-methylpyridine]cobalt trichloride; [2,6-bis (1-[(2,6-dicyclohexyl-4-methylphenyl)imino]ethyl}-4-methylpyridine]cobalt trichloride; [2,6-bis{[(4-methylphenyl) imino]methyl}-4-methylpyridine]cobalt trichloride; [2,6-bis{[(2,4,6-trimethylphenyl)imino]methyl}-4-methylpyridine] cobalt trichloride; [2,6-bis{[(2,4,6-triethylphenyl)imino]methyl}-4-methylpyridine]cobalt trichloride; [2,6-bis{[ (2,4,6-tripropylphenyl)imino]methyl}-4-methylpyridine]cobalt trichloride; [2,6-bis{[(2,4,6-triisopropylphenyl)imino] methyl}-4-methylpyridine]cobalt trichloride; [2,6-bis{[(2,4,6-tributylphenyl)imino]methyl}-4-methylpyridine]cobalt

trichloride; [2,6-bis{[(2,4,6-tricyclohexylphenyl)imino]methyl}-4-methylpyridine]cobalt trichloride; [2,6-bis{[(2,6-diethyl-4-methylphenyl)imino]methyl}-4-methylpyridine]cobalt trichloride; [2,6-bis{[(2,6-dipropyl-4-methylphenyl)imino]methyl}-4-methylpyridine]cobalt trichloride; [2,6-bis{[(2,6-diisopropyl-4-methylphenyl)imino]methyl}-4-methylpyridine]cobalt trichloride; [2,6-bis{[(2,6-dibutyl-4-methylphenyl)imino]methyl}-4-methylpyridine]cobalt trichloride; [2,6-bls{((2,6-dicyclohexyl-4-methylphenyl)imino]methyl}-4-methylpyridine]cobalt trichloride; [2,6-bis{1-[(phenyl)imino]ethyl}-4-chloropyridine]cobalt trichloride; [2,6-bis{1-[(2,6-dimethylphenyl)imino]ethyl}-4-chloropyridine]cobalt trichloride; [2,6-bis{1-[(2,6-diethylphenyl)imino]ethyl}-4-chloropyridine]cobalt trichloride; [2,6-bis{1-[(2,6-dipropylphenyl)imino]ethyl}-4-chloropyridine]cobalt trichloride; [2,6-bis{1-[(2,6-diisopropylphenyl)imino]ethyl}-4-chloropyridine]cobalt trichloride; [2,6-bis{1-[(2,6-dibutylphenyl)imino]ethyl}-4-chloropyridine]cobalt trichloride; [2,6-bis {1-[(2,6-dicyclohexyiphenyl)imino]ethyl}-4-chloropyridine]cobalt trichloride; [2,6-bis{[(phenyl)imino]methyl}-4-chloropyridine]cobalt trichloride; [2,6-bis{[(2,6-dimethylphenyl)imino]methyl}-4-chloropyridine]cobalt trichloride; [2,6-bis{[(2,6-diethylphenyl)imino]methyl}-4-chloropyridine]cobalt trichloride; [2,6-bis{[(2,6-dipropylphenyl)imino]methyl}-4-chloropyridine]cobalt trichloride; [2,6-bis{[(2,6-diisopropylphenyl)imino]methyl}-4-chloropyridine]cobalt trichloride; [2,6-bis{[(2,6-dibutylphenyl)imino]methyl}-4-chloropyridine]cobalt trichloride; [2,6-bis{[(2,6-dicyclohexylphenyl)imino]methyl}4-chloropyridine]cobalt trichloride; [2,6-bis{1-[(4-methylphenyl)imino]ethyl}-4-chloropyridine]cobalt trichloride; [2,6-bis{1-[(2,4,6-trimethylphenyl)imino]ethyl}-4-chloropyridine]cobalt trichloride; [2,6-bis {1-[(2,4,6-triethylphenyl)imino]ethyl}-4-chloropyridine]cobalt trichloride; [2,6-bis{1-[(2,4,6-trlpropylphenyl)imino]ethyl}-4-chloropyrldine]cobalt trichloride; [2,6-bis{1-[(2,4,6-triisopropylphenyl)imino]ethyl}-4-chloropyridine]cobalt trichloride; [2,6-bis{1-[(2,4,6-tributylphenyl)imino]ethyl}-4-chloropyridine]cobalt trichloride; [2,6-bis{1-[(2,4,6-tricyclohexylphenyl)imino]ethyl}-4-chloropyridine]cobalt trichloride; [2,6-bis{1-[(2,6-diethyl-4-methylphenyl)imino]ethyl}-4-chloropyridine]cobalt trichloride; [2,6-bis{1-[(2,6-dipropyl-4-methylphenyl)imino]ethyl}-4-chloropyridine]cobalt trichloride; [2,6-bis{1-[(2,6-diisopropyl-4-methylphenyl)imino]ethyl}-4-chloropyridine]cobalt trichloride; [2,6-bis{1-[(2,6-dibutyl-4-methylphenyl)imino]ethyl}-4-chloropyridine]cobalt trichloride; [2,6-bis{1-[(2,6-dicyclohexyl-4-methylphenyl)imino]ethyl}-4-chloropyridine]cobalt trichloride; [2,6-bis{[(4-methylphenyl)imino]methyl}-4-chloropyridine]cobalt trichloride; [2,6-bis{[(2,4,6-trimethylphenyl)imino]methyl}-4-chloropyridine]cobalt trichloride; [2,6-bis{[(2,4,6-triethylphenyl)imino]methyl}-4-chloropyridine]cobalt trichloride; [2,6-bis{[(2,4,6-tripropylphenyl)imino]methyl}-4-chloropyridine]cobalt trichloride; [2,6-bis{[(2,4,6-triisopropylphenyl)imino]methyl}-4-chloropyridine]cobalt trichloride; [2,6-bis{[(2,4,6-tributylphenyl)imino]methyl}-4-chloropyridine]cobalt trichloride; [2,6-bis{[ (2,4,6-tricyclohexylphenyl)imino]methyl}-4-chloropyridine]cobalt trichloride; [2,6-bis{[(2,6-diethyl-4-methylphenyl) imino]methyl}4-chloropyridine]cobalt trichloride; [2,6-bis([(2,6-dipropyl-4-methylphenyl)imino]methyl}4-chloropyridine]cobalt trichloride; [2,6-bis{[(2,6-diisopropyl-4-methylphenyl)imino]methyl}-4-chloropyridine]cobalt trichloride; [2,6-bis{[(2,6-dibutyl-4-methylphenyl)imino]methyl}-4-chloropyridine]cobalt trichloride; [2,6-bis{[(2,6-dicyclohexyl-4-methylphenyl)imino]methyl}-4-chloropyridine]cobalt trichloride; [2,6-bis{1-[(methyl)imino]ethyl}pyridine]cobalt trichloride; [2,6-bis{1 -[(ethyl)imino]ethyl}pyridine]cobalt trichloride; [2,6-bis{1-[(isopropyl)imino]ethyl}pyridine]cobalt trichloride; [2,6-bis{1-[(cyclohexyl)imino]ethyl}pyridine]cobalt trichloride; [2,6-bis{1-[(methyl)imino]methyl}pyridine]cobalt trichloride; [2,6-bis{1-[(ethyl)imino]methyl}pyridine]cobalt trichloride; [2,6-bis{1-[(isopropyl)imino]methyl}pyridine]cobalt trichloride; [2,6-bis{1-[(cyclohexyl)imino]methyl}pyridine]cobalt trichloride; [2,6-bis{1-[(methyl) imino]ethyl}-4-methylpyridine]cobalt trichloride; [2,6-bis{1-[(ethyl)imino]ethyl}-4-methylpyridine]cobalt trichloride; [2,6-bis{1-[(isopropyl)imino]ethyl}-4-methylpyridine]cobalt trichloride; [2,6-bis{1-[(cyclohexyl)imino]ethyl}-4-methylpyridine]cobalt trichloride; [2,6-bis{1-((methyl)imino]methyl}-4-methylpyridine]cobalt trichloride; [2,6-bis {1-[(ethyl)imino]methyl}-4-methylpyridine]cobalt trichloride; [2,6-bis{1-[(isopropyl)imino]methyl}-4-methylpyridine] cobalt trichloride; [2,6-bis{1-[(cyclohexyl )imino]methyl}-4-methylpyridine]cobalt trichloride;

2,6-diformylpyridine bis(pyrrolidylhydrazone)cobalt trichloride; 2,6-diformylpyridine bis(piperidylhydrazone)cobalt trichloride; 2,6-diformylpyridine bis(phenylhydrazone)cobalt trichloride; 2,6-diformylpyridine bis(methylhydrazone) cobalt trichloride; 2,6-diformyl-4-chloropyridine bis(methylhydrazone)cobalt trichloride; 2,6-diacetylpyridine bis (pyrrolidylhydrazone)cobalt trichloride; 2,6-diacetylpyridine bis(piperidylhydrazone)cobalt trichloride; 2,6-diacetylpyridine bis(phenylhydrazone)cobalt trichloride; 2,6-diacetylpyridine bis(methylhydrazone)cobalt trichloride; 2,6-diacetyl-4-chloropyridine bis(phenylhydrazone)cobalt trichloride; 2,6-diformyl-4-methyl-pyridine bis (pyrrolidylhydrazone)cobalt trichloride; 2,6-diformyl-4-methyl-pyridine bis(piperidylhydrazone)cobalt trichloride; 2,6-diformyl-4-methyl-pyridine bis(phenylhydrazone)cobalt trichloride; 2,6-diformyl-4-methyl-pyridine bis(methylhydrazone)cobalt trichloride; 2,6-diacetyl-4-methyl-pyridine bis(pyrrolidylhydrazone)cobalt trichloride; 2,6-diacetyl-4-methyl-pyridine bis(piperidylhydrazone)cobalt trichloride; 2,6-diacetyl-4-methyl-pyridine bis(phenylhydrazone)cobalt trichloride; 2,6-diacetyl-4-methyl-pyridine bis(methylhydrazone)cobalt trichloride;

[2,6-bis-(2-oxazolin-2-yl)pyridine]cobalt trichloride; [2,6-bis-(4S-isopropyl-2-oxazolin-2-yl)pyridine]cobalt trichloride; [2,6-bis-(4R-isopropyl-2-oxazolin-2-yl)pyridine]cobalt trichloride; [2,6-bis-(4-methyl-2-oxazolin-2-yl)pyridine] cobalt trichloride; [2,6-bis-(4-t-butyl-2-oxazolin-2-yl)pyridine]cobalt trichloride; [2,6-bis-(4,4-dimethyl-2-oxazolin-2-yl)pyridine]cobalt trichloride; [2,6-bis-(4-phenyl-2-oxazolin-2-yl)pyridine]cobalt trichloride; [2,6-bis-(5-phenyl-2-oxazolin-2-yl)pyridine]cobalt trichloride; [2,6-bis-(4,5-diphenyl-2-oxazolin-2-yl)pyridine]cobalt trichloride;

[2,6-bis-(4-benzyl-2-oxazolin-2-yl)pyridine]cobalt trichloride; [2,6-bis-(4-methoxymethyl-2-oxazolin-2-yl)pyridine] cobalt trichloride; [2,6-bis-(4-methyl-2-oxazolin-2-yl)pyridine]cobalt trichloride; [2,6-bis-(4S-isopropyl-4-methyl-2-oxazolin-2-yl)pyridine]cobalt trichloride; [2,6-bis-(4R-isopropyl-4-methyl-2-oxazolin-2-yl)pyridine]cobalt trichloride; [2,6-bis-(4-methyl-4-methyl-2-oxazolin-2-yl)pyridine]cobalt trichloride; [2,6-bis-(4-t-butyl-4-methyl-2-oxazolin-2-yl)pyridine]cobalt trichloride; [2,6-bis-(4,4-dimethyl-4-methyl-2-oxazolin-2-yl)pyridine]cobalt trichloride; [2,6-bis-(4-phenyl-4-methyl-2-oxazolin-2-yl)pyridine]cobalt trichloride; [2,6-bis-(5-phenyl-4-methyl-2-oxazolin-2-yl)pyridine]cobalt trichloride; [2,6-bis-(4,5-diphenyl-4-methyl-2-oxazolin-2-yl)pyridine]cobalt trichloride; [2,6-bis-(4-benzyl-4-methyl-2-oxazolin-2-yl)pyridine]cobalt trichloride; [2,6-bis-(4-methoxymethyl-4-methyl-2-oxazolin-2-yl)pyridine]cobalt trichloride;

[2,6-bis(imidazol-2-yl)pyridine]cobalt trichloride; [2,6-bis(1-methylimidazol-2-yl)pyridine]cobalt trichloride; [2,6-bis (1-ethylimidazol-2-yl)pyridine]cobalt trichloride; [2,6-bis(1-butylimidazol-2-yl)pyridine]cobalt trichloride; [2,6-bis (1-phenylimidazol-2-yl)pyridine]cobalt trichloride; [2,6-bis(1-benzylimidazol-2-yl)pyridine]cobalt trichloride; [2,6-bis(1-phenylimidazol-2-yl)pyridine]cobalt trichloride; [2,6-bis(1-acetylimidazol-2-yl)pyridine]cobalt trichloride; [2,6-bis(1-(4-methoxyphenyl)imidazol-2-yl)pyridine]cobalt trichloride; [2,6-bis(1-trimethylsilylimidazol-2-yl)pyridine]cobalt trichloride; [2,6-bis(1,5-dimethylimidazol-2-yl)pyridine]cobalt trichloride; [2,6-bis(1,5-dimethyl-4-phenylimidazol-2-yl)pyridine]cobalt trichloride; [2,6-bis(1-methyl-5-nitroimidazol-2-yl)pyridine]cobalt trichloride; [2,6-bis(1,4,5-trimethylimidazol-2-yl)pyridine]cobalt trichloride; [2,6-bis(4,5-dimethylimidazol-2-yl)pyridine]cobalt trichloride; [2,6-bis(4,5-diphenylimidazol-2-yl)pyridine]cobalt trichloride;

[2,6-bis(4-methylimidazol-2-yl)pyridine]cobalt trichloride; [2,6-bis(4-(2-methoxethyl)imidazol-2-yl)pyridine]cobalt trichloride;

[2,6-bis(benzimidazol-2-yl)pyridine]cobalt trichloride; [2,6-bis(1-methylbenzimidazol-2-yl)pyridine]cobalt trichloride; [2,6-bis(1-ethylbenzimidazol-2-yl)pyridine]cobalt trichloride;

[2,6-bis(1-propylbenzimidazol-2-yl)pyridine]cobalt trichloride; [2,6-bis(1-isopropylbenzimidazol-2-yl)pyridine]cobalt trichloride; [2,6-bis(1-butylbenzimidazol-2-yl)pyridine]cobalt trichloride; [2,6-bis(1-pentylbenzimidazol-2-yl)pyridine]cobalt trichloride;

[2,6-bis(1-cyclopentylbenzimidazol-2-yl)pyridine]cobalt trichloride; [2,6-bis(1-hexylbenzimidazol-2-yl)pyridine]cobalt trichloride; [2,6-bis(1-cyclohexylbenzimidazol-2-yl)pyridine]cobalt trichloride; [2,6-bis(1-octylbenzimidazol-2-yl)pyridine]cobalt trichloride;

[2,6-bis(1-decylbenzimidazol-2-yl)pyridine]cobalt trichloride; [2,6-bis(1-dodecylbenzimidazol-2-yl)pyridine]cobalt trichloride; [2,6-bis(1-tetradecylbenzimidazol-2-yl)pyridine]cobalt trichloride; [2,6-bis(1-hexadecylbenzimidazol-2-yl)pyridine]cobalt trichloride; [2,6-bis(1-octadecylbenzimidazol-2-yl)pyridine]cobalt trichloride; [2,6-bis(1-benzylbenzimidazol-2-yl)pyridine]cobalt trichloride; [2,6-bis(1-phenylbenzimidazol-2-yl)pyridine]cobalt trichloride;

[2,6-bis(4-methylbenzimidazol-2-yl)pyridine]cobalt trichloride; [2,6-bis(5-methylbenzimidazol-2-yl)pyridine]cobalt trichloride; [2,6-bis(6-methylbenzimidazol-2-yl)pyridine]cobalt trichloride; [2,6-bis(7-methylbenzimidazol-2-yl)pyridine]cobalt trichloride; [2,6-bis(5-ethylbenzimldazol-2-yl)pyridine]cobalt trichloride; [2,6-bis(5-propylbenzimidazol-2-yl)pyridine]cobalt trichloride;

[2,6-bis(5-isopropylbenzimidazol-2-yl)pyridine]cobalt trichloride; [2,6-bis(5-butylbenzimidazol-2-yl)pyridine]cobalt trichloride; [2,6-bis(5-pentylbenzimidazol-2-yl)pyridine]cobalt trichloride; [2,6-bis(5-cyclopentylbenzimidazol-2-yl) pyridine]cobalt trichloride; [2,6-bis(5-hexylbenzimidazol-2-yl)pyridine]cobalt trichloride; [2,6-bis(1-acetylbenzimidazol-2-yl)pyridine]cobalt trichloride; [2,6-bis(1-benzoylbenzimidazol-2-yl)pyridine]cobalt trichloride; [2,6-bis (1,5-dimethylbenzimidazol-2-yl)pyridine]cobalt trichloride; [2,6-bis(4-methoxybenzimidazol-2-yl)pyridine]cobalt trichloride; [2,6-bis(5-methoxybenzimidazol-2-yl)pyridine]cobalt trichloride; [2,6-bis(6-methoxybenzimidazol-2-yl) pyridine]cobalt trichloride; [2,6-bis(7-methoxybenzimidazol-2-yl)pyridine]cobalt trichloride;

[2,6-bis(1-methyl-5-methoxybenzimidazol-2-yl)pyridine]cobalt trichloride; [2,6-bis(1-(methoxymethyl)benzimidazol-2-yl)pyridine]cobalt trichloride; [2,6-bis(1-(ethoxymethyl)benzimidazol-2-yl)pyridine]cobalt trichloride; [2,6-bis (1-(propoxymethyl)benzimidazol-2-yl)pyridine]cobalt trichloride; [2,6-bis(1-(butoxymethyl)benzimidazol-2-yl)pyridine]cobalt trichloride; [2,6-bis(1-(hexyloxymethyl)benzimidazol-2-yl)pyridine]cobalt trichloride; [2,6-bis(1-(2-methoxyethyl)benzimidazol-2-yl)pyridine]cobalt trichloride; [2,6-bis(1-(2-ethoxyethyl)benzimidazol-2-yl)pyridine]cobalt trichloride; [2,6-bis(1-(2-propoxyethyl)benzimidazol-2-yl)pyridine]cobalt trichloride; [2,6-bis(1-(2-butoxyethyl)benzimidazol-2-yl)pyridine]cobalt trichloride; [2,6-bis(1-(2-hexyloxyethyl)benzimidazol-2-yl)pyridine]cobalt trichloride; [2,6-bis(1-(dimethylaminomethyl)benzimidazol-2-yl)pyridine]cobalt trichloride; [2,6-bis(1-(diethylaminomethyl) benzimidazol-2-yl)pyridine]cobalt trichloride; [2,6-bis(1-(dimethylaminoethyl)benzimidazol-2-yl)pyridine]cobalt trichloride; [2,6-bis(1-(diethylaminoethyl)benzimidazol-2-yl)pyridine]cobalt trichloride; [2,6-bis(1-(morpholinomethyl)benzimidazol-2-yl)pyridine]cobalt trichloride; [2,6-bis(1-(anilinomethyl)benzimidazol-2-yl)pyridine]cobalt trichloride; [2,6-bis(1-(piperidinomethyl)benzimidazol-2-yl)pyridine]cobalt trichloride; [2,6-bis(1-(pyrrolidinomethyl) benzimidazol-2-yl)pyridine]cobalt trichloride; [2,6-bis(5-(dimethylamino)benzimidazol-2-yl)pyridine]cobalt trichloride; [2,6-bis(5-(piperidino)benzimidazol-2-yl)pyridine]cobalt trichloride; [2,6-bis(5-(pyrrolidino)benzimidazol-2-yl) pyridine]cobalt trichloride; [2,6-bis(5,6-dimethyl-1-(piperidinomethyl)benzimidazol-2-yl)pyridine]cobalt trichloride;

The skilled artisan will recognize that additional members of the foregoing list will include the corresponding Lewis base adducts thereof.

Further exemplary, but non-limiting metal complexes according to the invention include the following neodymium trichloride complexes:

[2,6-bis{1-((phenyl)imino]ethyl}pyridine]neodymium trichloride; [2,6-bis{1-[(2,6-dimethylphenyl)imino]ethyl}pyridine]neodymium trichloride; [2,6-bis{1-[(2,6-diethylphenyl)imino]ethyl}pyridine]neodymium trichloride; [2,6-bis {1-[(2,6-dipropylphenyl)imino]ethyl}pyridine]neodymium trichloride; [2,6-bis{1-[(2,6-diisopropylphenyl)imino]ethyl} pyridine]neodymium trichloride; [2,6-bis{1-[(2,6-dibutylphenyl)imino]ethyl}pyridine]neodymium trichloride; [2,6-bis {1-[(2,6-dicyclohexylphenyl)imino]ethyl}pyridine]neodymium trichloride; [2,6-bis{[(phenyl)imino]methyl}pyridine] neodymium trichloride; [2,6-bis{[(2,6-dimethylphenyl)imino]methyl}pyridine]neodymium trichloride; [2,6-bis{[ (2,6-diethylphenyl)imino]methyl}pyridine]neodymium trichloride; [2,6-bis{[(2,6-dipropylphenyl)imino]methyl}pyridine]neodymium trichloride; [2,6-bis{[(2,6-diisopropylphenyl)imino]methyl}pyridine]neodymium trichloride; [2,6-bis{[ (2,6-dibutylphenyl)imino]methyl}pyridine]neodymium trichloride; [2,6-bis{[(2,6-dicyclohexylphenyl)imino]methyl} pyridine]neodymium trichloride; [2,6-bis{1-[(4-methylphenyl)imino]ethyl}pyridine]neodymium trichloride; [2,6-bis {1-[(2,4,6-trimethylphenyl)imino]ethyl}pyridine]neodymium trichloride; [2,6-bis{1-[(2,4,6-triethylphenyl)imino] ethyl}pyridine]neodymium trichloride; [2,6-bis{1-[(2,4,6-tripropylphenyl)imino]ethyl}pyridine]neodymium trichloride; [2,6-bis{1-[(2,4,6-triisopropylphenyl)imino]ethyl}pyridine]neodymium trichloride; [2,6-bis{1-[(2,4,6-tributylphenyl)imino]ethyl}pyridine]neodymium trichloride; [2,6-bis{1-[(2,4,6-tricyclohexylphenyl)imino]ethyl}pyridine]neodymium trichloride; [2,6-bis{1-[(2,6-diethyl-4-methylphenyl)imino]ethyl}pyridine]neodymium trichloride; [2,6-bis {1-[(2,6-dipropyl-4-methylphenyl)imino]ethyl}pyridine]neodymium trichloride; [2,6-bis{1-[(2,6-diisopropyl-4-methyl phenyl)imino]ethyl}pyridine]neodymium trichloride; [2,6-bis{1-[(2,6-dibutyl-4-methylphenyl)imino]ethyl}pyridine] neodymium trichloride; [2,6-bis{1-[(2,6-dicyclohexyl-4-methylphenyl)imino]ethyl}pyridine]neodymium trichloride; [2,6-bis{[(4-methylphenyl)imino]methyl}pyridine]neodymium trichloride; [2,6-bis{[(2,4,6-trimethylphenyl)imino]methyl}pyridine]neodymium trichloride; [2,6-bis{[(2,4,6-triethylphenyl)imino]methyl}pyridine]neodymium trichloride; [2,6-bis{[(2,4,6-tripropylphenyl)imino]methyl}pyridine]neodymium trichloride; [2,6-bis{[(2,4,6-triisopropylphenyl) imino]methyl}pyridine]neodymium trichloride; [2,6-bis{[(2,4,6-tributylphenyl)imino]methyl}pyridine]neodymium trichloride; [2,6-bis{[(2,4,6-tricyclohexylphenyl)imino]methyl}pyridine]neodymium trichloride; [2,6-bis{[(2,6-diethyl-4-methylphenyl)imino]methyl}pyridine]neodymium trichloride; [2,6-bis{[(2,6-dipropyl-4-methylphenyl)imino]methyl}pyridine]neodymium trichloride; [2,6-bis{[(2,6-diisopropyl-4-methylphenyl)imino]methyl}pyridine]neodymium trichloride; [2,6-bis{[(2,6-dibutyl-4-methylphenyl)imino]methyl}pyridine]neodymium trichloride; [2,6-bis{[(2,6-dicyclohexyl-4-methylphenyl)imino]methyl}pyridine]neodymium trichloride; [2,6-bis{1-[(phenyl)imino]ethyl}-4-methylpyridine]neodymium trichloride; [2,6-bis{1-[(2,6-dimethylphenyl)imino]ethyl}-4-methylpyridine]neodymium trichloride; [2,6-bis{1-[(2,6-diethylphenyl)imino]ethyl}4-methylpyridine]neodymium trichloride; [2,6-bis{1-[(2,6-dipropylphenyl)imino]ethyl}-4-methylpyridine]neodymium trichloride; [2,6-bis{1-[(2,6-diisopropylphenyl)imino]ethyl}-4-methylpyridine]neodymium trichloride; [2,6-bis{1-[(2,6-dibutylphenyl)imino]ethyl}-4-methylpyridine]neodymium trichloride; [2,6-bis{1-[(2,6-dicyclohexylphenyl)imino]ethyl}-4-methylpyridine]neodymium trichloride; [2,6-bis{[ (phenyl)imino]methyl}-4-methylpyridine]neodymium trichloride; [2,6-bis{[(2,6-dimethylphenyl)imino]methyl}-4-methylpyridine]neodymium trichloride; [2,6-bis{[(2,6-diethylphenyl)imino]methyl}-4-methylpyridine]neodymium trichloride; [2,6-bis{[(2,6-dipropylphenyl)imino]methyl}-4-methylpyridine]neodymium trichloride; [2,6-bis{[(2,6-diisopropylphenyl)imino]methyl}-4-methylpyridine]neodymium trichloride; [2,6-bis{[(2,6-dibutylphenyl)imino]methyl}-4-methylpyridine]neodymium trichloride; [2,6-bis{[(2,6-dicyclohexylphenyl)imino]methyl}-4-methylpyridine] neodymium trichloride; [2,6-bis{1-[(4-methylphenyl)imino]ethyl}-4-methylpyridine]neodymium trichloride; [2,6-bis {1-[(2,4,6-trimethylphenyl)imino]ethyl}-4-methylpyridine]neodymium trichloride; [2,6-bis{1-[(2,4,6-triethylphenyl) imino]ethyl}-4-methylpyridine]neodymium trichloride; [2,6-bis{1-[(2,4,6-tripropylphenyl)imino]ethyl}-4-methylpyridine]neodymium trichloride; [2,6-bis{1-[(2,4,6-triisopropylphenyl)imino]ethyl}-4-methylpyridine]neodymium trichloride; [2,6-bis{1-((2,4,6-tributylphenyl)imino]ethyl}-4-methylpyridine]neodymium trichloride; [2,6-bis{1-[(2,4,6-tricyclohexylphenyl)imino]ethyl}-4-methylpyridine]neodymium trichloride; [2,6-bis{1-[(2,6-diethyl-4-methylphenyl)imino]ethyl}-4-methylpyridine]neodymium trichloride; [2,6-bis{1-[(2,6-dipropyl-4-methylphenyl)imino]ethyl}-4-methylpyridine]neodymium trichloride; [2,6-bis{1-((2,6-diisopropyl-4-methylphenyl)imino]ethyl}-4-methylpyridine]neodymium trichloride; [2,6-bis{1-[(2,6-dibutyl-4-methylphenyl)imino]ethyl}-4-methylpyridine]neodymium trichloride; [2,6-bis{1-[(2,6-dicyclohexyl-4-methylphenyl)imino]ethyl}-4-methylpyridine]neodymium trichloride; [2,6-bis{[ (4-methylphenyl)imino]methyl}-4-methylpyridine]neodymium trichloride; [2,6-bis{[(2,4,6-trimethylphenyl)imino] methyl}-4-methylpyridine]neodymium trichloride; [2,6-bis{[(2,4,6-triethylphenyl)imino]methyl}-4-methylpyridine] neodymium trichloride; [2,6-bis{[(2,4,6-tripropylphenyl)imino]methyl}-4-methylpyridine]neodymium trichloride; [2,6-bis{[(2,4,6-triisopropylphenyl)imino]methyl}-4-methylpyridine]neodymium trichloride; [2,6-bis{[(2,4,6-tributylphenyl)imino]methyl}-4-methylpyridine]neodymium trichloride; [2,6-bis{[(2,4,6-tricyclohexylphenyl)imino]methyl}-4-methylpyridine]neodymium trichloride; [2,6-bis{[(2,6-diethyl-4-methylphenyl)imino]methyl}-4-methylpyridine]neodymium trichloride; [2,6-bis{[(2,6-dipropyl-4-methylphenyl)imino]methyl}-4-methylpyridine]neodymium trichloride; [2,6-bis{[(2,6-diisopropyl-4-methylphenyl)imino]methyl}-4-methylpyridine]neodymium trichloride; [2,6-bis{[(2,6-dibutyl-4-methylphenyl)imino]methyl}-4-methylpyridine]neodymium trichloride; [2,6-bis{[(2,6-dicyclohexyl-4-methylphenyl)imino]methyl}-4-methylpyridine]neodymium trichloride; [2,6-bis{1 -[(phenyl)imino]ethyl}-4-chloropyridine]neodymium trichloride; [2,6-bis{1-[(2,6-dimethylphenyl)imino]ethyl}-4-chloropyridine]neodymium trichloride; [2,6-bis{1-[(2,6-diethylphenyl)imino]ethyl}-4-chloropyridine]neodymium trichloride; [2,6-bis{1-[(2,6-dipropylphenyl)imino]ethyl}4-chloropyridine]neodymium trichloride; [2,6-bis{1-[(2,6-diisopropylphenyl)imino]ethyl}-4-chloropyridine]neodymium trichloride; [2,6-bis{1-[(2,6-dibutylphenyl)imino]ethyl}-4-chloropyridine]neodymium trichloride; [2,6-bis{1-[(2,6-dicyclohexylphenyl)imino]ethyl}-4-chloropyridine]neodymium trichloride; [2,6-bis{[(phenyl)imino]methyl}-4-chloropyridine]neodymium trichloride; [2,6-bis{[(2,6-dimethylphenyl)imino]methyl}-4-chloropyridine] neodymium trichloride; [2,6-bis{[(2,6-diethylphenyl)imino]methyl}-4-chloropyridine]neodymium trichloride; [2,6-bis{[(2,6-dipropylphenyl)imino]methyl}-4-chloropyridine]neodymium trichloride; [2,6-bis{[(2,6-diisopropylphenyl)imino]methyl}-4-chloropyridine]neodymium trichloride; [2,6-bis{[(2,6-dibutylphenyl)imino]methyl}-4-chloropyridine]neodymium trichloride; [2,6-bis{[(2,6-dicyclohexylphenyl)imino]methyl}-4-chloropyridine]neodymium trichloride; [2,6-bis{1-[(4-methylphenyl)imino]ethyl}-4-chloropyridine]neodymium trichloride; [2,6-bis{1-[(2,4,6-trimethylphenyl)imino]ethyl}-4-chloropyridine]neodymium trichloride; [2,6-bis{1-[(2,4,6-triethylphenyl)imino]ethyl}-4-chloropyridine]neodymium trichloride; [2,6-bis{1-[(2,4,6-tripropylphenyl)imino]ethyl)-4-chloropyridine]neodymium trichloride; [2,6-bis{1-[(2,4,6-triisopropylphenyl)imino]ethyl}-4-chloropyridine]neodymium trichloride; [2,6-bis {1-[(2,4,6-tributylphenyl)imino]ethyl}-4-chloropyridine]neodymium trichloride; [2,6-bis{1-[(2,4,6-tricyclohexylphenyl)imino]ethyl}-4-chloropyridine]neodymium trichloride; [2,6-bis{1-[(2,6-diethyl-4-methylphenyl )imino]ethyl}-4-chloropyridine]neodymium trichloride; [2,6-bis{1-[(2,6-dipropyl-4-methylphenyl)imino]ethyl}-4-chloropyridine] neodymium trichloride; [2,6-bis{1-[(2,6-diisopropyl-4-methylphenyl)imino]ethyl}-4-chloropyridine]neodymium trichloride; [2,6-bis{1-[(2,6-dibutyl-4-methylphenyl )imino]ethyl}4-chloropyridine]neodymium trichloride; [2,6-bis {1-[(2,6-dicyclohexyl-4-methylphenyl)imino]ethyl}-4-chloropyridine]neodymium trichloride; [2,6-bis{[(4-methylphenyl)imino]methyl}-4-chloropyridine]neodymium trichloride; [2,6-bis{[(2,4,6-trimethylphenyl)imino]methyl}-4-chloropyridine]neodymium trichloride; [2,6-bis{[(2,4,6-triethylphenyl)imino]methyl}-4-chloropyridine]neodymium trichloride; [2,6-bis{[(2,4,6-tripropylphenyl)imino]methyl}-4-chloropyridine]neodymium trichloride; [2,6-bis{[(2,4,6-triisopropylphenyl)imino]methyl}4-chloropyridine]neodymium trichloride; [2,6-bis{[(2,4,6-tributylphenyl)imino]methyl}-4-chloropyridine]neodymium trichloride; [2,6-bis{[(2,4,6-tricyclohexylphenyl)imino]methyl}-4-chloropyridine]neodymium trichloride; [2,6-bis{[(2,6-diethyl-4-methylphenyl)imino]methyl}-4-chloropyridine]neodymium trichloride; [2,6-bis{[(2,6-dipropyl-4-methylphenyl)imino]methyl}-4-chloropyridine]neodymium trichloride; [2,6-bis{[(2,6-diisopropyl-4-methylphenyl)imino]methyl}-4-chloropyridine]neodymium trichloride; [2,6-bis{[(2,6-dibutyl-4-methylphenyl)imino]methyl}-4-chloropyridine]neodymium trichloride; [2,6-bis{[(2,6-dicyclohexyl-4-methylphenyl)imino]methyl}-4-chloropyridine]neodymium trichloride;

[2,6-bis{1 -[(methyl)imino]ethyl}pyridine]neodymium trichloride; [2,6-bis{1-[(ethyl)imino]ethyl}pyridine]neodymium trichloride; [2,6-bis{1-[(isopropyl)imino]ethyl}pyridine]neodymium trichloride; [2,6-bis{1-[(cyclohexyl)imino]ethyl} pyridine]neodymium trichloride; [2,6-bis{1-[(methyl)imino]methyl}pyridine]neodymium trichloride; [2,6-bis {1-[(ethyl)imino]methyl}pyridine]neodymium trichloride; [2,6-bis{1-[(isopropyl)imino]methyl}pyridine]neodymium trichloride; [2,6-bis{1-[(cyclohexyl)imino]methyl}pyridine]neodymium trichloride; [2,6-bis{1-[(methyl)imino]ethyl}-4-methylpyridine]neodymium trichloride; [2,6-bis{1-[(ethyl)imino]ethyl}-4-methylpyridine]neodymium trichloride; [2,6-bis{1-[(isopropyl)imino]ethyl}-4-methylpyridine]neodymium trichloride; [2,6-bis{1-[(cyclohexyl)imino]ethyl}-4-methylpyridine]neodymium trichloride; [2,6-bis{1-[(methyl)imino]methyl}-4-methylpyridine]neodymium trichloride; [2,6-bis{1-[(ethyl)imino]methyl}-4-methylpyridine]neodymium trichloride; [2,6-bis{1-[(isopropyl)imino]methyl}-4-methylpyridine]neodymium trichloride; [2,6-bis{1-[(cyclohexyl)imino]methyl}-4-methylpyridine]neodymium trichloride;

2,6-diformylpyridine bis(pyrrolidylhydrazone)neodymium trichloride; 2,6-diformylpyridine bis(piperidylhydrazone) neodymium trichloride; 2,6-diformylpyridine bis(phenylhydrazone)neodymium trichloride; 2,6-diformylpyridine bis (methylhydrazone)neodymium trichloride; 2,6-diformyl-4-chloropyridine bis(methylhydrazone)neodymium trichloride; 2,6-diacetylpyridine bis(pyrrolidylhydrazone)neodymium trichloride; 2,6-diacetylpyridine bis(piperidylhydrazone)neodymium trichloride; 2,6-diacetylpyridine bis(phenylhydrazone)neodymium trichloride; 2,6-diacetylpyridine bis(methylhydrazone)neodymium trichloride; 2,6-diacetyl-4-chloropyridine bis(phenylhydrazone)neodymium trichloride; 2,6-diformyl-4-methyl-pyridine bis(pyrrolidylhydrazone)neodymium trichloride; 2,6-diformyl-4-methylpyridine bis(piperidylhydrazone)neodymium trichloride; 2,6-diformyl-4-methyl-pyridine bis(phenylhydrazone)neodymium trichloride; 2,6-diformyl-4-methyl-pyridine bis(methylhydrazone)neodymium trichloride; 2,6-diacetyl-4-methyl-pyridine bis(pyrrolidylhydrazone)neodymium trichloride; 2,6-diacetyl-4-methyl-pyridine bis(piperidylhydrazone)neodymium trichloride; 2,6-diacetyl-4-methyl-pyridine bis(phenylhydrazone)neodymium trichloride; 2,6-diacetyl-4-methyl-pyridine bis(methylhydrazone)neodymium trichloride;

[2,6-bis-(2-oxazolin-2-yl)pyridine]neodymium trichloride; [2,6-bis-(4S-isopropyl-2-oxazolin-2-yl)pyridine]neodymium trichloride; [2,6-bis-(4R-isopropyl-2-oxazolin-2-yl)pyridine]neodymium trichloride; [2,6-bis-(4-methyl-2-oxazolin-2-yl)pyridine]neodymium trichloride; [2,6-bis-(4-t-butyl-2-oxazodin-2-yl)pyridine]neodynium trichloride; [2,6-bis-(4,4-dimethyl-2-oxazolin-2-yl)pyridine]neodymium trichloride; [2,6-bis-(4-phenyl-2-oxazolin-2-yl)pyridine] neodymium trichloride; [2,6-bis-(5-phenyl-2-oxazolin-2-yl)pyridine]neodymium trichloride; [2,6-bis-(4,5-diphenyl-2-oxazolin-2-yl)pyridine]neodymium trichloride; [2,6-bis-(4-benzyl-2-oxazolin-2-yl)pyridine]neodymium trichloride; [2,6-bis-(4-methoxymethyl-2-oxazolin-2-yl)pyridine]neodymium trichloride; [2,6-bis-(4-methyl-2-oxazolin-2-yl)pyridine]neodymium trichloride; [2,6-bis-(4S-isopropyl-4-methyl-2-oxazolin-2-yl)pyridine]neodymium trichloride; [2,6-bis-(4R-isopropyl-4-methyl-2-oxazolin-2-yl)pyridine]neodymium trichloride; [2,6-bis-(4-methyl-4-methyl-2-oxazolin-2-yl)pyridine]neodymium trichloride; [2,6-bis-(4-t-butyl-4-methyl-2-oxazolin-2-yl)pyridine]neodymium trichloride; [2,6-bis-(4,4-dimethyl-4-methyl-2-oxazolin-2-yl)pyridine]neodymium trichloride; [2,6-bis-(4-phenyl-4-methyl-2-oxazolin-2-yl)pyridine]neodymium trichloride; [2,6-bis-(5-phenyl-4-methyl-2-oxazolin-2-yl)pyridine] neodymium trichloride; [2,6-bis-(4,5-diphenyl-4-methyl-2-oxazolin-2-yl)pyridine]neodymium trichloride; [2,6-bis-(4-benzyl-4-methyl-2-oxazolin-2-yl)pyridine]neodymium trichloride; [2,6-bis-(4-methoxymethyl-4-methyl-2-oxazolin-2-yl)pyridine]neodymium trichloride;
[2,6-bis(imidazol-2-yl)pyridine]neodymium trichloride; [2,6-bis(1-methylimidazol-2-yl)pyridine]neodymium trichloride; [2,6-bis(1-ethylimidazol-2-yl)pyridine]neodymium trichloride; [2,6-bis(1-butylimidazol-2-yl)pyridine]neodymium trichloride; [2,6-bis(1-phenylimidazol-2-yl)pyridine]neodymium trichloride; [2,6-bis(1-benzylimidazol-2-yl)pyridine]neodymium trichloride; [2,6-bis(1-phenylimidazol-2-yl)pyridine]neodymium trichloride; [2,6-bis(1-acetylimidazol-2-yl)pyridine]neodymium trichloride; [2,6-bis(1-(4-methoxyphenyl)imidazol-2-yl)pyridine]neodymium trichloride; [2,6-bis(1-trimethylsilylimidazol-2-yl)pyridine]neodymium trichloride; [2,6-bis(1,5-dimethylimidazol-2-yl)pyridine]neodymium trichloride; [2,6-bis(1,5-dimethyl-4-phenylimidazol-2-yl)pyridine]neodymium trichloride; [2,6-bis (1-methyl-5-nitroimidazol-2-yl)pyridine]neodymium trichloride; [2,6-bis(1,4,5-trimethylimidazol-2-yl)pyridine]neodymium trichloride; [2,6-bis(4,5-dimethylimidazol-2-yl)pyridine]neodymium trichloride; [2,6-bis(4,5-diphenylimidazol-2-yl)pyridine]neodymium trichloride; [2,6-bis(4-methylimidazol-2-yl)pyridine]neodymium trichloride; [2,6-bis (4-(2-methoxethyl)imidazol-2-yl)pyridine]neodymium trichloride;
[2,6-bis(benzimidazol-2-yl)pyridine]neodymium trichloride; [2,6-bis(1-methylbenzimidazol-2-yl)pyridine]neodymium trichloride; [2,6-bis(1-ethylbenzimidazol-2-yl)pyridine]neodymium trichloride; [2,6-bis(1-propylbenzimidazol-2-yl)pyridine]neodymium trichloride; [2,6-bis(1-isopropylbenzimidazol-2-yl)pyridine]neodymium trichloride; [2,6-bis(1-butylbenzimidazol-2-yl)pyridine]neodymium trichloride; [2,6-bis(1-pentylbenzimidazol-2-yl)pyridine] neodymium trichloride; [2,6-bis(1-cyclopentylbenzimidazol-2-yl)pyridine]neodymium trichloride; [2,6-bis(1-hexylbenzimidazol-2-yl)pyridine]neodymium trichloride; [2,6-bis(1-cyclohexylbenzimidazol-2-yl)pyridine]neodymium trichloride; [2,6-bis(1-octylbenzimidazol-2-yl)pyridine]neodymium trichloride; [2,6-bis(1-decylbenzimidazol-2-yl) pyridine]neodymium trichloride; [2,6-bis(1-dodecylbenzimidazol-2-yl)pyridine]neodymium trichloride; [2,6-bis (1-tetradecylbenzimidazol-2-yl)pyridine]neodymium trichloride; [2,6-bis(1-hexadecylbenzimidazol-2-yl)pyridine] neodymium trichloride; [2,6-bis(1-octadecylbenzimidazol-2-yl)pyridine]neodymium trichloride; [2,6-bis(1-benzylbenzimidazol-2-yl)pyridine]neodymium trichloride; [2,6-bis(1-phenylbenzimidazol-2-yl)pyridine]neodymium trichloride; [2,6-bis(4-methylbenzimidazol-2-yl)pyridine]neodymium trichloride; [2,6-bis(5-methylbenzimidazol-2-yl)pyridine]neodymium trichloride; [2,6-bis(6-methylbenzimidazol-2-yl)pyridine]neodymium trichloride; [2,6-bis (7-methylbenzimidazol-2-yl)pyridine]neodymium trichloride; [2,6-bis(5-ethylbenzimidazol-2-yl)pyridine]neodymium trichloride; [2,6-bis(5-propylbenzimidazol-2-yl)pyridine]neodymium trichloride; [2,6-bis(5-isopropylbenzimidazol-2-yl)pyridine]neodymium trichloride; [2,6-bis(5-butylbenzimidazol-2-yl)pyridine]neodymium trichloride; [2,6-bis (5-pentylbenzimidazol-2-yl)pyridine]neodymium trichloride; [2,6-bis(5-cyclopentylbenzimidazol-2-yl)pyridine]neodymium trichloride; [2,6-bis(5-hexylbenzimidazol-2-yl)pyridine]neodymium trichloride; [2,6-bis(1-acetylbenzimidazol-2-yl)pyridine]neodymium trichloride; [2,6-bis(1-benzoylbenzimidazol-2-yl)pyridine]neodymium trichloride; [2,6-bis(1,5-dimethylbenzimidazol-2-yl)pyridine]neodymium trichloride; [2,6-bis(4-methoxybenzimidazol-2-yl)pyridine]neodymium trichloride; [2,6-bis(5-methoxybenzimidazol-2-yl)pyridine]neodymium trichloride; [2,6-bis (6-methoxybenzimidazol-2-yl)pyridine]neodymium trichloride; [2,6-bis(7-methoxybenzimidazol-2-yl)pyridine]neodymium trichloride; [2,6-bis(1-methyl-5-methoxybenzimidazol-2-yl)pyridine]neodymium trichloride; [2,6-bis (1-(methoxymethyl)benzimidazol-2-yl)pyridine]neodymium trichloride; [2,6-bis(1-(ethoxymethyl)benzimidazol-2-yl)pyridine]neodymium trichloride; [2,6-bis(1-(propoxymethyl)benzimidazol-2-yl)pyridine]neodymium trichloride; [2,6-bis(1-(butoxymethyl)benzimidazol-2-yl)pyridine]neodymium trichloride; [2,6-bis(1-(hexyloxymethyl)benzimidazol-2-yl)pyridine]neodymium trichloride; [2,6-bis(1-(2-methoxyethyl)benzimidazol-2-yl)pyridine]neodymium trichloride; [2,6-bis(1-(2-ethoxyethyl)benzimidazol-2-yl)pyridine]neodymium trichloride; [2,6-bis(1-(2-propoxyethyl)benzimidazol-2-yl)pyridine]neodymium trichloride; [2,6-bis(1-(2-butoxyethyl)benzimidazol-2-yl)pyridine]neodymium trichloride; [2,6-bis(1-(2-hexyloxyethyl)benzimidazol-2-yl)pyridine]neodymium trichloride; [2,6-bis (1-(dimethylaminomethyl)benzimidazol-2-yl)pyridine]neodymium trichloride; [2,6-bis(1-(diethylaminomethyl)benzimidazol-2-yl)pyridine]neodymium trichloride; [2,6-bis(1-(dimethylaminoethyl)benzimidazol-2-yl)pyridine]neodymium trichloride; [2,6-bis(1-(diethylaminoethyl)benzimidazol-2-yl)pyridine]neodymium trichloride; [2,6-bis(1-(morpholinomethyl)benzimidazol-2-yl)pyridine]neodymium trichloride; [2,6-bis(1-(anilinomethyl)benzimidazol-2-yl)pyridine]neodymium trichloride; [2,6-bis(1-(piperidinomethyl)benzimidazol-2-yl)pyridine]neodymium trichloride; [2,6-bis(1-(pyrrolidinomethyl)benzimidazol-2-yl)pyridine]neodymium trichloride; [2,6-bis(5-(dimethylamino) benzimidazol-2-yl)pyridine]neodymium trichloride; [2,6-bis(5-(piperidino)benzimidazol-2-yl)pyridine]neodymium trichloride; [2,6-bis(5-(pyroolidino)benzimidazol-2-yl)pyridine]neodymium trichloride; [2,6-bis(5,6-dimethyl-1-(piperidinomethyl)benzimidazol-2-yl)pyridine]neodymium trichloride;

The skilled artisan will recognize that additional members of the foregoing list will include the corresponding Lewis base adducts thereof.

Preferably the metal complex does not contain hapto 5 bond ligands such as, but not limited to, cyclopentadienyl, indenyl or fluorenyl ligands

In general, the complexes can be prepared by contacting a metal compound corresponding to the formula $MX_xX'_{x''}$ or a Lewis base adduct thereof with the pyridine or phosphabenzene compound corresponding to the formula:

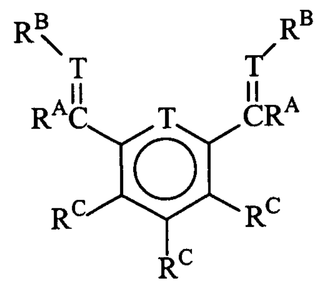

the molar ratio of the metal compound to the pyridine or phosphabenzene compound being from 10:1 to 1:10, preferably from 2:1 to 1:2, most preferably from 1.1:1 to 1:1.1, in a suitable noninterferring solvent or reaction medium at a temperature from -100°C to 300°C, preferably from -78°C to 150°C, most preferably from 0°C to 125°C. By noninterferring is meant that the solvent does not prevent formation of the pyridine or phosphabenzene metal complex. Suitable reaction media for the formation of the complexes are aliphatic and aromatic hydrocarbons and halohydrocarbons, ethers, amines, alcohols, amides, nitriles and esters. Examples include straight and branched-chain hydrocarbons such as isobutane, butane, pentane, hexane, heptane, octane, and mixtures thereof, cyclic and alicyclic hydrocarbons such as cyclohexane, cycloheptane, methylcyclohexane, methylcycloheptane, and mixtures thereof; chlorinated-, fluorinated- or chlorofluorinated hydrocarbons such as chloroform, dichloromethane, chlorobenzene, dichlorobenzene, and perfluorinated $C_{4-10}$ alkanes; aromatic and hydrocarbyl-substituted aromatic compounds such as benzene, toluene, xylene, and styrene; alkyl ethers having from 1 to 4 carbons in each alkyl group such as diethyl ether, THF and dioxane; $C_{1-4}$ dialkyl ether derivatives of (poly)alkylene glycols, such as DME; aromatic or aliphatic amines such as pyridine, pyridine, pyrrolidine, piperidine, ethylenediamine, tetramethylethylenediamine (TMEDA) and triethylamine (TEA); alcohols, such as methanol, ethanol, propanol, butanol; amides, especially dimethylformamide (DMF) and dimethylacetamide (DMA); nitriles, especially acetonitrile, propanenitrile, benzonitrile; esters, especially methyl acetate, ethyl acetate and butyl acetate. Mixtures of the foregoing are also suitable. Preferred solvents include butanol, DMF, diethylether, ethanol and THF.

The recovery procedure usually involves a separation of the product from the reaction medium and/or any possible byproducts and/or unreacted starting materials. The solvents and other volatile components are advantageously removed via devolatilization of the reaction medium. Extracton into a secondary solvent may be employed if desired. Alternatively, if the desired product is an insoluble precipitate, filtration or other separation technique may be employed.

Formation of the pyridine or phosphabenzene compounds is described in the literature, for example in Helvetica Chimica Acta 1989, 72, 323; J. Am. Chem. Soc., 1999, 121, 8728 and in J. Chem. Soc., Dalton Trans., 2001, 1639.

The catalyst compositions which are useful in the polymerization or copolymerization of conjugated ethylenically unsaturated addition polymerizable monomers according to the invention comprise

1) a combination of one or more of the above metal complexes and one or more activators (cocatalyst) and optionally a support or

2) the reaction product formed by contacting one or more of the above metal complexes with one or more activators

and optionally a support or

3) the product formed by subjecting one or more of the above metal complexes and optionally a support to activating techniques.

The catalyst compositions are formed by rendering the metal complexes catalytically active in a process 1 ) contacting one or more of the above metal complexes with one or more activators and optionally a support or 2) by subjecting one or more of the above metal complexes to activating techniques optionally in the presence of a support.

The process for the activation of the metal complexes with an activator or cocatalyst or by an activating technique can be performed during a separate reaction step optionally including an isolation of the activated compound or preferably can be performed in *situ* in the polymerization reactor or just prior to it in an aging reactor, for example. The activation is preferably performed in *situ* if, after the activation of the metal complex, separation and/or purification of the activated complex is not necessary. The process for the activation of the metal complexes is carried out in a suitable noninterferring solvent or reaction medium at a temperature from -78°C to 250°C, preferably from -5°C to 160°C, more preferably from 10°C to 110°C. Suitable reaction media for the formation of the catalysts compositions are aliphatic and aromatic hydrocarbons and halohydrocarbons. Examples indude straight and branched-chain hydrocarbons such as isobutane, butane, pentane, hexane, heptane, octane, and mixtures thereof, cyclic and alicyclic hydrocarbons such as cyclohexane, cycloheptane, methylcyclohexane, methylcycloheptane, and mixtures thereof; chlorinated-, fluorinated- or chlorofluorinated hydrocarbons such as chloroform, dichloromethane, chlorobenzene, dichlorobenzene, and perfluorinated $C_{4-10}$ alkanes; aromatic and hydrocarbyl-substituted aromatic compounds such as benzene, toluene, xylene, and styrene. Advantageously, the reaction medium used for the activation is the same reaction medium as is used in the subsequent polymerization, obviating the need to use a secondary solvent system. In addition to the reaction media mentioned above, this includes heptane or mineral oil fractions such as light or regular petrol, naphtha, kerosine or gas oil and other low-priced aliphatic hydrocarbons or mixtures thereof, as marketed by the petrochemical industry as solvent. An advantage of the invention is that the metal complex catalyst precursors according to the invention can be stored at room temperature or even at elevated temperatures such as, for example, but not limited to, 50°C, in the solid state for extended periods of time. In addition, solutions of the catalyst in suitable solvents also can be stored at room temperature at least for hours. This greatly increases the flexibility of production in an industrial plant. A further advantage of the invention is that the catalysts of the invention often do not require a separate aging step (see Runs 3, 4, 8 and 15) and if it is desirable to employ an optional aging step, it advantageously does not require long aging times. Therefore, it is possible to start the polymerization reaction just by adding the catalyst components in the desired order into the polymerization reactor. The polymerization can be started for example either by addition of the metal complex as the last component (see for example Runs 1, 2, 5 and 7) or by the addition of the conjugated diene as the last component. If an optional aging step is incorporated into the catalyst preparation/polymerization procedure, the aging time is short, such as less than two hour, preferably less than one hour, more preferably less than 30 minutes (see Run 7, 13) or even shorter than that and can be performed in a broad temperature range, such as, but not limited to, 0 °C to 150 °C with high catalyst activity. The temperature ranges of the catalyst preparation, catalyst aging and polymerization are independently selected and are between -50°C and +250°C, preferably between -5 and +160°C, more preferably between 10 °C and 110 °C. For example the catalyst activities of (co)polymerizations Run 9 and Run 12 ((co)polymerization temperature 80 °C, aging temperature 80 °C) amounts to 3.88 and 4.72 kg polybutadiene per mmol vanadium per hour. A further advantage of the invention is that aging the catalyst does not require extreme temperatures. It is beneficial that the polymerization reaction can be induced without or without substantial waiting period (delay) upon addition of the last catalyst component into the polymerization reactor.

Suitable activating cocatalysts for use herein include:

1) neutral Lewis acids, especially

a) organo Group 13 compounds, especially

i) $C_{1-30}$ organoboron or organoaluminum compounds, more especially (hydrocarbyl)aluminum- or (hydrocarbyl)boron compounds, even more especially triaryl and trialkyl aluminum compounds, such as methyl aluminum, triisobutyl aluminum, trioctylaluminum; alkyl aluminum hydrides, such as diisobutylaluminum hydride; alkylalkoxy aluminum compounds, such as dibutylethoxyaluminum; halogenated aluminum compounds, such as diethylaluminum chloride, ethylaluminum dichloride, diisobutylaluminum chloride, ethyl (octyl)aluminum chloride, ethylaluminum sesquichloride, ethyl(cyclohexyl)aluminum chloride, dicyclohexylaluminum chloride, dioctylaluminum chloride, and

ii) organohalogenated (including perhalogenated) derivatives of organo Group 13 compounds, especially halogenated $C_{1-30}$ organoboron or organoaluminum compounds, more especially halogenated (hydrocarbyl)aluminum- or (hydrocarbyl)boron compounds, more especially fluorinated or perfluorinated tri(aryl)boron or -aluminum compounds, such as tris(pentafluorophenyl)boron, tris(pentafluorophenyl)aluminum, tris(o-nonalluorobiphenyl)boron, tris(o-nonafluorobiphenyl)aluminum, tris[3,5-bis(trifluoromethyl)phenyl] boron, tris[3,5-bis(trifluoromethyl)phenyl]aluminum; or

b) polymeric or oligomeric alumoxanes, especially methylalumoxane (MAO), triisobutyl aluminum-modified methylalumoxane (MMAO), or isobutylalumoxane; or

2) nonpolymeric, compatible, noncoordinating, ion-forming compounds (including the use of such compounds under oxidizing conditions), especially the use of ammonium-, phosphonium-, oxonium-, carbonium-, silylium-, sulfonium-, or ferrocenium- salts of compatible, noncoordinating anions; and combinations of the foregoing activating compounds.

The foregoing activating cocatalysts have been previously taught with respect to different metal complexes in the following references: U.S. Pat. Nos. 5,132,380, 5,153,157, 5,064,802, 5,321,106, 5,721,185, 5,350,723, and WO-97/04234, equivalent to U.S. Ser. No. 08/818,530, filed Mar. 14, 1997.

Suitable activators for use herein include hydrocarbyl sodium, hydrocarbyl lithium, hydrocarbyl zinc, hydrocarbyl magnesium halide, dihydrocarbyl magnesium, especially alkyl sodium, alkyl lithium, alkyl zinc, alkyl magnesium halide, dialkyl magnesium, such as n-octylsodium, butyllithium, neopentyllithium, methyllithium, ethyllithium, phenyllithium, diethylzinc, dibutylzinc, butylmagnesium chloride, ethylmagnesium chloride, octylmagnesium chloride, dibutylmagnesium, dioctylmagnesium, butyl(octyl)magnesium.

Especially desirable activating cocatalysts for use herein are combinations of neutral optional Lewis acids, especially the combination of a trialkyl aluminum compound having from 1 to 4 carbons in each alkyl group with one or more $C_{1-30}$ hydrocarbyl-substituted Group 13 Lewis acid compounds, especially halogenated tri(hydrocarbyl)boron or-aluminum compounds having from 1 to 20 carbons in each hydrocarbyl group, especially tris(pentafluorophenyl) borane or tris(pentafluorophenyl)alumane, further combinations of such neutral Lewis acid mixtures with a polymeric or oligomeric alumoxane, and combinations of a single neutral Lewis acid, especially tris(pentafluorophenyl)borane or tris(pentafluorophenyl)alumane, with a polymeric or oligomeric alumoxane. A benefit according to the present invention is the discovery that the most efficient catalyst activation using such a combination of tris(pentafluorophenyl)borane/alumoxane mixture occurs at reduced levels of alumoxane. Preferred molar ratios of the metal complex:tris(pentafluorophenyl)borane:alumoxane are from 1:1:1 to 1:5:5, more preferably from 1:1:1.5 to 1:5:3. The surprising efficient use of lower levels of alumoxane with the present invention allows for the production of diene polymers with high catalytic efficiencies using less of the expensive alumoxane activator. Additionally, polymers with lower levels of aluminum residue, and hence greater clarity, are obtained.

Suitable ion-forming compounds useful as activators in one embodiment of the present invention comprise a cation which is a Bronsted acid capable of donating a proton, and a compatible, noncoordinating or poorly coordinating anion. As used herein, the term "noncoordinating" means an anion or substance which either does not coordinate to the metal containing precursor complex and the catalytic derivative derived therefrom, or which is only weakly coordinated to such complexes thereby remaining sufficiently labile to be displaced by a Lewis base such as olefin monomer in a manner such that the polymerization may proceed. A noncoordinating anion specifically refers to an anion which when functioning as a charge-balancing anion in a cationic metal complex does not transfer an anionic substituent or fragment thereof to said cation thereby forming neutral complexes. "Compatible anions" are anions which are not degraded to neutrality when the initially formed complex decomposes and are noninterfering with desired subsequent polymerization or other uses of the complex.

Preferred anions are those containing a single coordination complex comprising a charge-bearing metal or metalloid core which anion is capable of balancing the charge of the active catalyst species (the metal cation) which may be formed when the two components are combined. Also, said anion should be sufficiently labile to be displaced by olefinic, diolefinic and acetylenically unsaturated compounds or other neutral Lewis bases such as ethers or nitriles. Suitable metals include, but are not limited to, aluminum, gold and platinum. Suitable metalloids include, but are not limited to, boron, phosphorus, and silicon. Compounds containing anions which comprise coordination complexes containing a single metal or metalloid atom are, of course, well known and many, particularly such compounds containing a single boron atom in the anion portion, are available commercially.

Preferably such activators may be represented by the following general formula:

$$(L^*\text{-}H)^+_d A^{d-}$$

wherein:

L* is a neutral Lewis base;
$(L^*-H)^+$ is a Bronsted acid;
$A^{d-}$ is a noncoordinating, compatible anion having a charge of d-, and
d is an integer from I to 3.
More preferably Ad- corresponds to the formula: $[M^*Q_4]^-$;
wherein:
M* is boron or aluminum in the +3 formal oxidation state; and
Q independently each occurrence is selected from hydride, dialkylamido, halide, hydrocarbyl, halohydrocarbyl (e.g., fluorinated hydrocarbyl), halocarbyl (e.g., fluorinated aryl group such as pentafluorophenyl or nonafluorobiphenyl group), hydrocarbyloxy, hydrocarbyloxy substituted-hydrocarbyl, organometal substituted- hydrocarbyl, organometalloid substituted-hydrocarbyl, halohydrocarbyloxy (e.g., fluorinated hydrocarbyloxy), halohydrocarbyloxy substituted hydrocarbyl, halocarbyl- substituted hydrocarbyl, and halo- substituted silylhydrocarbyl radicals (including perhalogenated hydrocarbyl-, perhalogenated hydrocarbyloxy- and perhalogenated silythydrocarbyl radicals), said Q having up to 20 carbon atoms with the proviso that in not more than one occurrence is Q halide. Q may additionally or alternatively have up to 20 carbon atoms with the proviso that in not more than one occasion is Q a hydrocarbyl group. Examples of suitable hydrocarbyloxide Q groups are disclosed in U.S. Pat. No. 5,296,433.

In a more preferred embodiment, d is one, that is, the counter ion has a single negative charge and is A-. Activating cocatalysts comprising boron which are particularly useful in the preparation of catalysts of this invention may be represented by the following general formula:

$$(L^*-H)^+ (BQ_4)^-;$$

wherein:

$(L^*-H)^+$ is as previously defined;
B is boron in a formal oxidation state of 3; and
Q is a hydrocarbyl-, hydrocarbyloxy-, fluorinated hydrocarbyl-, fluorinated hydrocarbyloxy-, or fluorinated silylhydrocarbyl- group of up to 20 nonhydrogen atoms, with the proviso that in not more than one occasion is Q hydrocarbyl. Most preferably, Q is each occurrence a fluorinated aryl group, especially, a pentafluorophenyl or nonafluorobiphenyl group. Preferred $BQ_4$- anions are methyltris(pentafluorophenyl)borate, tetrakis(pentafluorophenyl)borate or tetrakis(nonafluorobiphenyl)borate.

Illustrative, but not limiting, examples of boron compounds which may be used as an activating cocatalyst in the preparation of the improved catalysts of this invention are trisubstituted ammonium salts such as: trimethylammonium tetraphenylborate, tri(n-butyl)ammonium tetraphenylborate, methyldioctadecylammonium tetraphenylborate, triethylammonium tetraphenylborate, tripropylammonium tetraphenylborate, tri(n-butyl)ammonium tetraphenylborate, methyltetradecyloctadecylammonium tetraphenylborate, N,N-dimethylanilinium tetraphenylborate, N,N-diethylanilinium tetraphenylborate, N,N,-2,4,6-pentamethylanilinium) tetraphenylborate, N,N-dimethyl anilinium bis(7,8-dicarbundecaborate) cobaltate (III), trimethylammonium tetrakis(pentafluorophenyl)borate, methyldi(tetradecyl)ammonium tetrakis(pentafluorophenyl) borate, methyldi(octadecyl)ammonium tetrakis(pentafluorophenyl) borate, triethylammonium tetrakis(pentafluorophenyl)borate, tripropylammonium tetrakis(pentafluorophenyl)borate, tri(n-butyl)ammonium tetrakis(pentafluorophenyl)borate, tri(sec-butyl)ammonium tetrakis(pentafluorophenyl)borate, N,N-dimethylanilinium tetrakis(pentafluorophenyl)borate, N,N-diethylanilinium tetrakis(pentafluorophenyl)borate, N,N,2,4,6-pentamethylanilinium) tetrakis(pentafluorophenyl)borate, trimethylammonium tetrakis(2,3,4,6-tetrafluorophenyl)borate, triethylammonium tetrakis(2,3,4,6-tetrafluorophenyl)borate, tripropylammonium tetrakis(2,3,4,6-tetrafluorophenyl)borate, tri(n-butyl) ammonium tetrakis(2,3,4,6-tetrafluorophenyl) borate, dimethyl(t-butyl) ammonium tetrakis(2,3,4,6-tetrafluorophenyl) borate, N,N-dimethylanilinium tetrakis(2,3,4,6-tetrafluorophenyl) borate, N,N-diethylanilinium tetrakis(2,3,4,6-tetrafluorophenyl) borate, and N,N,2,4,6-pentamethylanilinium) tetrakis-(2,3,4,6- tetrafluorophenyl)borate; dialkyl ammonium salts such as: di(octadecyl)ammonium tetrakis(pentafluorophenyl)borate, di(tetradecyl)ammonium tetrakis (pentafluorophenyl)borate, and dicyclohexylammonium tetrakis(pentafluorophenyl)-borate; trisubstituted phosphonium salts such as triphenylphosphonium tetrakis(pentafluorophenyl)borate, methyldi(octadecyl)phosphonium tetrakis (pentafluorophenyl)borate, and tris(2,6-dimethylphenyl)phosphonium tetrakis(pentafluorophenyl)borate.

Preferred are tetrakis(pentafluorophenyl)borate salts of long chain alkyl mono- di- and trisubstituted ammonium complexes, especially $C_{14}$-$C_{20}$ alkyl ammonium complexes, especially methyldi(octadecyl) ammonium tetrakis (pentafluorophenyl)borate and methyldi(tetradecyl)ammonium tetrakis(pentafluorophenyl)borate, or mixtures including the same. Such mixtures include protonated ammonium cations derived from amines comprising two $C_{14}$, $C_{16}$ or $C_{18}$

alkyl groups and one methyl group. Such amines are available from Witco Corp., under the trade name Kemamine™ T9701, and from Akzo-Nobel under the trade name Armeen™ M2HT.

Examples of the most highly preferred catalyst activators herein include the foregoing trihydrocarbylammonium-, especially, methylbis(tetradecyl)ammonium- or methylbis(octadecyl)ammonium- salts of:

bis(tris(pentafluorophenyl)borane)imidazolide, bis(tris(pentafluorophenyl)borane)-2-undecylimidazolide, bis(tris(pentafluorophenyl)borane)-2-heptadecylimidazolide,
bis(tris(pentafluorophenyl)borane)-4,5-bis(undecyl)imidazolide,
bis(tris(pentafluorophenyl)borane)-4,5-bis(heptadecyl)imidazolide,
bis(tris(pentafluorophenyl)borane)imidazolinide,
bis(tris(pentafluorophenyl)borane)-2-undecylimidazolinide,
bis(tris(pentafluorophenyl)borane)-2-heptadecylimidazolinide,
bis(tris(pentafluorophenyl)borane)-4,5-bis(undecyl)imidazolinide,
bis(tris(pentafluorophenyl)borane)-4,5-bis(heptadecyl)imidazolinide,
bis(tris(pentafluorophenyl)borane)-5,6-dimethylbenzimidazolide,
bis(tris(pentafluorophenyl)borane)-5,6-bis(undecyl)benzimidazolide,
bis(tris(pentafluorophenyl)alumane)imidazolide,
bis(tris(pentafluorophenyl)alumane)-2-undecylimidazolide,
bis(tris(pentafluorophenyl)alumane)-2-heptadecylimidazolide,
bis(tris(pentafluorophenyl)alumane)-4,5-bis(undecyl)imidazolide,
bis(tris(pentafluorophenyl)alumane)-4,5-bis(heptadecyl)imidazolide,
bis(tris(pentafluorophenyl)alumane)imidazolinide,
bis(tris(pentafluorophenyl)alumane)-2-undecylimidazolinide,
bis(tris(pentafluorophenyl)alumane)-2-heptadecylimidazolinide,
bis(tris(pentafluorophenyl)alumane)-4,5-bis(undecyl)imidazolinide,
bis(tris(pentafluorophenyl)alumane)-4,5-bis(heptadecyl)imidazolinide,
bis(tris(pentafluorophenyl)alumane)-5,6-dimethylbenzimidazolide, and
bis(tris(pentafluorophenyl)alumane)-5,6-bis(undecyl)benzimidazolide. The foregoing activating cocatalysts have been previously taught with respect to different metal complexes in the following reference: EP 1 560 752 A1.

Another suitable ammonium salt, especially for use in heterogeneous catalyst systems, is formed upon reaction of an organometal compound, especially a tri($C_{1-6}$ alkyl)aluminum compound with an ammonium salt of a hydroxyaryltris(fluoroaryl)borate compound. The resulting compound is an organometaloxyaryltris(fluoroaryl)borate compound which is generally insoluble in aliphatic liquids. Examples of suitable compounds include the reaction product of a tri($C_{1-6}$ alkyl)aluminum compound with the ammonium salt of hydroxyaryltris(aryl)borate. Suitable hydroxyaryltris(aryl)borates include the ammonium salts, especially the foregoing long chain alkyl ammonium salts of:

(4-dimethylaluminumoxyphenyl)tris(pentafluorophenyl) borate, (4-dimethylaluminumoxy-3,5-di(trimethylsilyl)phenyl) tris(pentafluorophenyl)borate, (4- dimethylaluminumoxy-3,5-di(t-butyl)phenyl) tris(pentafluorophenyl)borate, (4-dimethylaluminumoxybenzyl)
tris(pentafluorophenyl) borate, (4-dimethylaluminumoxy-3-methylphenyl)
tris(pentafluorophenyl)borate, (4-dimethylaluminumoxy-tetrafluorophenyl)
tris(pentafluorophenyl)borate, (5-dimethylaluminumoxy-2-naphthyl)
tris(pentafluorophenyl)borate,4-(4-dimethylaluminumoxyphenyl)
phenyltris(pentafluorophenyl)borate, 4-(2-(4-(dimethylaluminumoxyphenyl)propane-2-yl)phenyloxy) tris(pentafluorophenyl)borate, (4 -diethylaluminumoxyphenyl)
tris(pentafluorophenyl) borate, (4-diethylaluminumoxy-3,5-di(trimethylsilyl)phenyl)
tris(pentafluorophenyl)borate, (4-diethylaluminumoxy-3,5-di(t-butyl)phenyl)
tris(pentafluorophenyl)borate, (4-diethylaluminumoxybenzyl) tris(pentafluorophenyl)borate, (4-diethylaluminumoxy-3-methylphenyl) tris(pentafluorophenyl)borate, (4 - diethylaluminumoxy-tetrafluorophenyl) tris(pentafluorophenyl)borate, (5-diethylaluminumoxy-2-naphthyl) tris(pentafluorophenyl) borate, 4-(4-diethylaluminumoxyphenyl)phenyl
tris(pentafluorophenyl)borate,4-(2-(4-(diethylaluminumoxyphenyl)propane-2-yl)phenyloxy)
tris(pentafluorophenyl)borate, (4-diisopropylaluminumoxyphenyl)
tris(pentafluorophenyl)borate, (4-diisopropylaluminumoxy-3,5-di(trimethylsilyl)phenyl)tris(pentafluorophenyl)borate, (4-diisopropylaluminumoxy-3,5-di(t-butyl)phenyl) tris(pentafluorophenyl)borate, (4-diisopropylaluminumoxybenzyl)
tris(pentafluorophenyl)borate, (4-diisopropylaluminumoxy-3-methylphenyl)

tris(pentafluorophenyl)borate, (4- diisopropyiaiuminumoxy-tetrafluorophenyl) tris(pentafluorophenyl)borate, (5-diisopropylaluminumoxy-2-naphthyl) tris(pentafluorophenyl)borate, 4-(4-diisopropylaluminumoxyphenyl)phenyl tris(pentafluorophenyl)borate, and 4-(2-(4-(diisopropylaluminumoxyphenyl)propane-2-yl)phenyloxy) tris(pentalluorophenyl)borate.

Especially preferred ammonium compounds are methyldi(tetradecyl)ammonium (4-diethylaluminumoxyphenyl) tris(pentafluorophenyl)borate, methyldi(hexadecyl)ammonium (4-diethylaluminumoxyphenyl) tris(pentafluorophenyl)borate, methyldi(octadecyl)ammonium (4-diethylaluminumoxyphenyl) tris(pentafluorophenyl) borate, and mixtures thereof. The foregoing complexes are disclosed in U.S. Pat. Nos. 5,834,393 and 5,783,512.

Another suitable ion-forming, activating cocatalyst comprises a salt of a cationic oxidizing agent and a noncoordinating, compatible anion represented by the formula:

$$(Ox^{e+})_d(A^{d-})_e, \text{ wherein}$$

$Ox^{e+}$ is a cationic oxidizing agent having a charge of $e^+$;
d is an integer from 1 to 3;
e is an integer from 1 to 3; and
$A^{d-}$ is as previously defined.

Examples of cationic oxidizing agents include: ferrocenium, hydrocarbyl-substituted ferrocenium, $Pb^{+2}$ or $Ag^+$. Preferred embodiments of $A^{d-}$ are those anions previously defined with respect to the Bronsted acid containing activating cocatalysts, especially tetrakis(pentafluorophenyl)borate.

Another suitable ion-forming, activating cocatalyst comprises a compound which is a salt of a carbenium ion and a noncoordinating, compatible anion represented by the formula

$$@^+A^-$$

wherein:

$@^+$ is a $C_{1-20}$ carbenium ion; and

A- is a noncoordinating, compatible anion having a charge of -1. A preferred carbenium ion is the trityl cation, especially triphenylmethylium.

Preferred carbenium salt activating cocatalysts are triphenylmethylium tetrakis(pentalluorophenyl)borate, triphenylmethylium tetrakis(nonafluorobiphenyl)borate, tritolylmethylium tetrakis(pentafluorophenyl)borate and ether substituted adducts thereof.

A further suitable ion-forming, activating cocatalyst comprises a compound which is a salt of a silylium ion and a noncoordinating, compatible anion represented by the formula

$$R_3Si^+A^-$$

wherein:

R is $C_{1-10}$ hydrocarbyl; and

A- is as previously defined.

Preferred silylium salt activating cocatalysts are trimethylsilylium tetrakis(pentafluorophenyl)borate, trimethylsilylium tetrakis(nonafluorobiphenyl)borate, triethylsilylium tetrakis(pentafluorophenyl)borate and other substituted adducts thereof. Silylium salts have been previously generically disclosed in J. Chem Soc. Chem. Comm., 1993, 383-384, as well as Lambert, J. B., et al., Organometallics, 1994, 13, 2430-2443. The use of the above silylium salts as activating cocatalysts for addition polymerization catalysts is claimed in U.S. Pat. No. 5,625,087.

Certain complexes of alcohols, mercaptans, silanols, and oximes with tris(pentafluorophenyl)borane are also effective catalyst activators and may be used according to the present invention. Such activators are disclosed in U.

S. Pat. No. 5,296,433.

The activating cocatalysts may also be used in combination. An especially preferred combination is a mixture of a tri(hydrocarbyl)aluminum or tri(hydrocarbyl)borane compound having from 1 to 4 carbons in each hydrocarbyl group with an oligomeric or polymeric alumoxane compound.

The molar ratio of catalyst/activator employed preferably ranges from 1:10,000 to 10:1, more preferably from 1:5000 to 10:1, most preferably from 1:2500 to 1:1. Alumoxane, when used by itself as an activating cocatalyst, is preferably employed in large molar ratio, generally at least 50 times the quantity of metal complex on a molar basis. Tris(pentafluorophenyl)borane, where used as an activating cocatalyst, is preferably employed in a molar ratio to the metal complex of from 0.5:1 to 10:1, more preferably from 1:1 to 6:1 most preferably from 1:1 to 5:1. The remaining activating cocatalysts are generally preferably employed in approximately equimolar quantity with the metal complex.

If the above-mentioned ion-forming compound comprising a compatible non-coordinating or poorly coordinating anion is used as the activator, it is preferable for the metal complex according to the invention to be alkylated (that is, one of the X groups of the metal complex is an alkyl or aryl group). Activators comprising boron are preferred. Most preferred are activators comprising tetrakis(pentafluorophenyl)borate, tris(pentafluorophenyl)borane, tris(o-nonafluorobiphenyl)borane, tetrakis(3,5- bis(trifluoromethyl)phenyl)borate, tris(pentafluorophenyl)alumane, tris(o-nonafluorobiphenyl)alumane.

The molar ratio of the activator relative to the metal center in the metal complex in the case an organometallic compound is selected as the activator, usually is in a range of from about 1:10 to about 10,000:1, more preferably from 1:10 to 5000:1 and most preferably in a range of from about 1:1 to about 2,500:1. If a compound containing or yielding a non-coordinating or poorly coordinating anion is selected as activator, the molar ratio usually is in a range of from about 1:100 to about 1,000:1, and preferably is in range of from about 1:2 to about 250:1.

In addition to the metal complex according to the invention and the activator, the catalyst composition can also contain a small amount of another organometallic compound that is used as a so-called scavenger agent. The scavenger agent is added to react with or passivate activity-decreasing impurities in the reaction mixture. It may be added at any time, but normally is added to the reaction mixture before addition of the metal complex and the activator (cocatalyst). Usually organoaluminum compounds are used as scavenger agents. Examples of suitable scavengers are trioctylaluminum, triethylaluminum, diethylaluminum chloride, tri-isobutylaluminum, methylalumoxane or MMAO. The metal complex as well as the activator can be present in the catalyst composition as a single component or as a mixture of several components. For instance, a mixture may be desired where there is a need to influence the molecular properties of the polymer, such as molecular weight distribution.

The reaction system optionally contains a solid material, which serves as carrier or support material for the activator component and/or the metal complex. The carrier material can be chosen from one of the following materials: clay, silica, charcoal (activated carbon), graphite, expanded clay, expanded graphite, carbon black, layered silicates, and alumina. Clays and layered silicates include, but are not limited to, magadiite, montmorillonite, hectorite, sepiolite, attapulgite, smectite, and laponite. Supported catalyst systems of the invention may be prepared by several methods. The metal complex and optionally the activator can be combined before the addition of the support material. The mixture may be prepared in conventional solution in a normally liquid alkane or aromatic solvent. The solvent is preferably also suitable for use as a polymerization diluent for the liquid phase polymerization of an olefin monomer. Alternatively, the activator can be placed on the support material followed by the addition of the metal complex or conversely, the metal complex may be applied to the support material followed by the addition of the activator. The supported catalyst maybe prepolymerized. In addition, third components can be added during any stage of the preparation of the supported catalyst. Third components can be defined as compounds containing Lewis acidic or basic functionalities exemplified by, but not limited to, compounds such as N,N-dimethylaniline, tetraethoxysilane, phenyltriethoxysilane, bis-tert-butylhydroxytoluene (BHT) and the like. The catalyst can be supported onto the carrier material using techniques such as the solid-phase immobilization (SPI) technique described by H.C.L. Abbenhuis in Angew. Chem. Int. Ed. 37 (1998) 356-58 and by M. Buisio et al., in Microporous Mater., 5 (1995) 211 and by J.S. Beck et al., in J. Am. Chem. Soc., 114 (1992) 10834, as well as the pore volume impregnation (PVI) technique (see WO 97/24344). The isolation of the impregnated carrier can be done by filtration or by removing the volatile material present (i.e., solvent) under reduced pressure or by heating.

The support, if present, is preferably employed in an amount to provide a weight ratio of catalyst (based on metal):support from 1:100,000 to 1:10, more preferably from 1:50,000 to 1:20, and most preferably from 1:10,000 to 1:30. The ratio of the supported metal complex to the support material is preferably in the range from about 0.5 to about 100,000, more preferably from 1 to 10,000 and most preferably in the range from about 1 to about 5000. Suitable gas phase reactions may utilize condensation of the monomer or monomers employed in the reaction, or of an inert diluent to remove heat from the reactor.

In the polymerization process the catalyst is used in a catalytically effective amount, i.e., any amount that successfully results in the formation of polymer. Such amounts may be readily determined by routine experimentation by the worker skilled in the art, but typically the molar ratio of catalyst:polymerizable compounds employed is from

$10^{-12}$:1 to $10^{-1}$:1, more preferably from $10^{-12}$:1 to $10^{-3}$:1.

The catalysts may be used to polymerize ethylenically and/or acetylenically unsaturated monomers having from 2 to 100,000 carbon atoms either alone or in combination. Preferred monomers include conjugated dienes and olefins chosen from the group comprising α-olefins, internal olefins, cyclic olefins and nonconjugated diolefins. Preferred conjugated dienes are 1,3-butadiene, isoprene (2-methyl-1,3-butadiene), 2,3-dimethyl-1,3-butadiene, 1,3-pentadiene, 2,4-hexadiene, 1,3-hexadiene, 1,4-hexadiene, 1,3-heptadiene, 1,3-octadiene, 2-methyl-2,4-pentadiene, cyclopentadiene, and 1,3-cyclooctadiene. Preferred olefins are $C_{2-20}$ α-olefins, more especially ethene, propene, isobutylene, 1-butene, 1-pentene, 1-hexene, 3-methyl-1-pentene, 4-methyl-1-pentene, 1-hexene, 3,4-dimethyl-1-butene, 1-heptene, 1-octene, 1-decene, long chain macromolecular α-olefins, styrene, including $C_{1-4}$ alkyl substituted styrene, such as 2-methylstyrene, 3-methylstyrene, 4-methylstyrene, 2,4-dimethylstyrene, 2,4,6-trimethylstyrene, α-methylstyrene and stilbene, tetrafluoroethylene, vinylcyclohexane, 1,3-divinylstyrene, 1,2-divinylstyrene, 1,4-divinylstyrene, vinylbenzocyclobutane; and nonconjugated $C_{4-20}$ diolefins, especially norbomadiene, ethylidenenorbomene, 1,4-hexadiene, 1,5-hexadiene, 1,7-octadiene, 4-vinylcyclohexene, and divinylbenzene. Long chain macromolecular α-olefins are vinyl terminated polymeric remnants formed in situ during continuous solution polymerization reactions. Under suitable processing conditions such long chain macromolecular units are readily polymerized into the polymer product along with ethylene, propylene, styrene, butadiene, isoprene and other short chain olefin monomers to give small quantities of long chain branching in the resulting polymer. More preferably butadiene, isoprene and/or cyclopentadiene is used as conjugated diene, styrene and/or 4-methylstyrene is used as aromatic α-olefin and ethene, propene, 1-butene, 1-hexene and/or 1-octene is used as aliphatic α-olefin.

Especially desirably formed using the catalyst in the polymerization process of the invention are homopolymers, co- or terpolymers of conjugated dienes, especially butadiene or isoprene, and random or block copolymers of at least one conjugated diene, especially butadiene or isoprene, with at least one aromatic α-olefin, especially styrene and 4-methylstyrene, aromatic diolefin, especially divinylbenzene, or with an aliphatic α-olefin, especially ethene, propene, 1-butene, 1-hexene, 4-methyl-1-pentene or 1-octene, aliphatic internal olefin, aliphatic cyclic olefin or aliphatic (nonconjugated) diolefin, and random or block copolymers of at least one conjugated diene, especially butadiene, with at least one different type of conjugated diene, especially isoprene. Especially preferred is the random polymerization or copolymerization, optionally terpolymerization, of at least one conjugated diene with at least one different type of conjugated diene, especially isoprene, or copolymerization, optionally terpolymerization with at least one aromatic α-olefin and optionally at least one aromatic diolefin or aliphatic α-olefin, especially butadiene or isoprene with styrene, 4-methylstyrene and/or divinylbenzene and/or ethene, propene, 1-butene, 1-hexene, 4-methyl-1-pentene or 1-octene. Highly preferred polymers comprise a conjugated diene chosen from butadiene or isoprene and an aromatic α-olefin chosen from styrene, 4-methylstyrene and divinylbenzene. Additional highly preferred polymers comprise butadiene and isoprene. The most highly preferred polymers comprise butadiene and styrene or butadiene and isoprene.

In general, the polymerization of the diene monomer(s) or copolymerization of the diene monomer(s) with the α-olefin monomer(s) or copolymerization of the diene monomers with a second type of conjugated diene monomers may be accomplished at conditions well known in the prior art for Ziegler-Natta or Kaminsky-Sinn type polymerization reactions, such as temperatures from —50 - 250° C. The polymerization can be effected at atmospheric pressure, at sub-atmospheric pressure, or at elevated pressures of up to, or even higher than 500 MPa, continuously or discontinuously. Preferably, the polymerization is performed at pressures between 0.01 and 500 MPa, most preferably between 0.01 and 10 MPa, in particular between 0.1-2 MPa. Higher pressures can be applied. In such a high-pressure process the metal complex according to the present invention can also be used with good results. Slurry and solution polymerizations normally take place at lower-pressures, preferably below 10 MPa. The polymerization can be carried out in the gas phase as well as in a liquid reaction medium. The polymerization is generally conducted under batch, continuous or semicontinuous polymerization conditions. The polymerization process can be conducted as a gas phase polymerization (e.g. in a fluidized bed or stirred bed reactor), as a solution polymerization, wherein the homopolymer or copolymer formed is substantially soluble in the reaction mixture, a suspension/slurry polymerization, wherein the polymer formed is substantially insoluble in the the reaction medium, as a solid phase powder polymerization or as a so-called bulk polymerization process, in which an excess of monomer to be polymerized is used as the reaction medium.

The catalysts may also be utilized in combination with at least one additional homogeneous or heterogeneous polymerization catalyst in the same or in separate reactors connected in series or in parallel to prepare polymer blends having desirable properties. An example of such a process is disclosed in WO 94/00500, equivalent to U.S. Ser. No. 07/904,770, as well as U.S. Pat. No. 5,844,045.

The quantity of catalyst to be used generally is such that its concentration in the solvent or dispersion agent amounts to $10^{-8}$ -$10^{-3}$ mol/L, preferably $10^{-7}$ -$10^{-4}$ mol/L.

Suitable solvents, dispersion agents or diluents for the polymerization or copolymerization process via a solution or slurry process are typically noncoordinating, inert liquids and can be chosen from the group comprising, but not limited to, straight and branched-chain hydrocarbons such as propane, butane, isobutane, pentane, hexane, heptane, octane, cyclic and alicyclic hydrocarbons such as cyclohexane, cycloheptane, methylcyclohexane, methylcycloheptane, aromatic and alkyl-substituted aromatic compounds such as benzene, toluene, and xylene and isomers of the foregoing and mixtures thereof as well as pentamethyl heptane or mineral oil fractions such as light or regular petrol, naphtha, kerosine or gas oil. Fluorinated hydrocarbon fluids such as perfluorinated $C_{4-10}$ alkanes are also suitable. Further suitable solvents include liquid olefins which may act as comonomers in the polymerization process including propylene, 1-butene, 1-pentene, cyclopentene, 1-hexene, 3-methyl-1-pentene, 4-methyl-1-pentene, butadiene, isoprene, 1,4-hexadiene, 1,7-octadiene, 1-octene, 1-decene, styrene, divinylbenzene, ethylidenenorbomene, allylbenzene, 2-methylstyrene, 3-methylstyrene, 4-methylstyrene, 4-vinylcyclohexene, and vinylcyclohexane. Mixtures of the foregoing are also suitable. Aromatic hydrocarbons, for instance benzene and toluene, can also be used. Out of cost considerations it is preferred therefore to use low-priced aliphatic hydrocarbons or mixtures thereof in polymerization processes on a technical scale as marketed by the petrochemical industry as solvent. If an aliphatic hydrocarbon is used as solvent, the solvent may optionally contain minor quantities of aromatic hydrocarbon, for instance toluene. Thus, if for instance methyl aluminoxane (MAO) is used as activator, toluene can be used as solvent for the MAO in order to supply the MAO in dissolved form to the polymerization reactor. Drying or purification of the solvents is desirable if such solvents are used; this can be done without problems by known methods by one skilled in the art.

Preferably the polymerization or copolymerization is conducted under batch, continuous or semicontinous solution or bulk polymerization conditions in hydrocarbons such as propylene, propane, butane, butene, pentane, hexane, heptane, cyclohexane, benzene, toluene, including isomers of the foregoing and mixtures thereof at temperatures from -10 °C and 200 °C, preferably from 0° to 130°C. The polymerization may be conducted in one or more continuous stirred reactors or fluidized bed, gas phase reactors, connected in series or parallel. Monomer and/or solvent may be added to the reactor as is well known in the art. The catalyst may also be supported and/or prepolymerized prior to use. A continuous process is preferred, in which event advantageously the mixture of reaction components of catalyst, solvent, diene and optionally α-olefin are substantially supplied continuously or at frequent intervals into the reactor system and is continuously monitored so as to ensure an efficient reaction and the desired product which is continuously removed therefrom. For example, it is well known that many supported coordination catalysts and catalyst systems for polymerization processes are highly sensitive, in varying degrees, to catalyst poisons such as water, oxygen, carbon oxides, acetylenic compounds and sulfur compounds. Introduction of such compounds may result in reactor upset and production of off-grade product. Typically, computer control systems may be used to maintain process variables within acceptable limits, often by measuring polymer variables such as viscosity, molecular weight, or catalyst productivity. If the polymerization process is carried out under suspension or gas phase polymerization conditions, the temperatures typically are below 150 °C.

Polymerization or copolymerization can be effected at atmospheric pressure, at sub-atmospheric pressure, or at elevated pressures of up to, or even higher than 500 MPa, continuously or discontinuously. Preferably, the polymerization or copolymerzation is performed at pressures between 0.01 and 500 MPa, most preferably between 0.01 and 10 MPa, in particular between 0.1-2 MPa. Higher pressures can be applied. In such a high-pressure process the metal complex according to the present invention can also be used with good results. Slurry and solution polymerizations normally take place at lower pressures, preferably below 10 MPa.

Utilizing the catalysts of the present invention, high molecular weight polymers are readily attained by use of the present catalysts, even at elevated reactor temperatures. This result is highly desirable because the molecular weight of diene copolymers can be readily reduced by the use of hydrogen, butene, di- and trihydrocarbylaluminum compounds (such as but not limited to triisopropylaluminum, diisopropylaluminum hydride, triethylaluminum, trioctylaluminum, diethylaluminum chloride and diisopropylaluminum chloride), 1,5-cyclooctadiene or similar chain transfer agent. In addition, productivity is increased due to improved polymer solubility, decreased solution viscosity, and a higher polymer concentration.

Utilizing the catalysts of the present invention, homopolymers or copolymers having high comonomer incorporation may be readily prepared. In a preferred embodiment, 50 mol % or more of conjugated olefins and less than 50 mol % ethylenically unsaturated comonomers are used.

Preferably the aromatic poly-α-olefin content as well as the aliphatic poly-α-olefin content is each 50% or less if copolymers of conjugated dienes and α-olefins are formed. The polybutadiene content of the homo- or copolymers with α-olefins preferably comprises high trans-1,4-polybutadiene. Preferably the copolymers of conjugated dienes, especially butadiene, with alpha-olefins such as styrene are random copolymers.

Preferably the percentage of each type of the conjugated diene monomers in the conjugated dien type A / conjugated diene type B copolymer is higher than 0 and less than 100 %. The polybutadiene content of the diene - diene copolymers preferably comprises high trans-1,4-polybutadiene.

With the catalyst and polymerization process of the invention, amorphous or rubberlike or rubber homo- and copolymers comprizing more or less expanded crystalline areas can be prepared depending on the monomer or monomers used and depending on the monomer ratios used, especially the diene : α-olefin or diene type A / diene type B ratios.

The polymer resulting from the polymerization can be worked up by a method known per se. In general the

catalyst is deactivated at some point during the processing of the polymer in a manner known per se, e.g. by means of water or an alcohol. Removal of the catalyst residues can mostly be omitted because the quantity of catalyst in the homo- or copolymer, in particular the content of halogen and metal, is very low owing to the use of the catalyst system according to the invention. If desired, however, the level of catalyst residues in the polymer can be reduced in a known manner, for example, by washing. The deactivation step can be followed by a stripping step (removal of organic solvent (s) from the homo- or copolymer).

The polymerization (homo- or copolymerization) can also be performed in several steps, in series as well as in parallel. If required, the catalyst composition, temperature, hydrogen concentration, pressure, residence time, etc., may be varied from step to step. In this way it is also possible to obtain products with a wide property distribution, for example, molecular weight distribution. By using the catalysts of the present invention for the polymerization of olefins, polymers may be obtained with molecular weights greater than 50,000 and polydispersities (Mw/Mn) of 1.0 - 50.

The polymerization of conjugated dienes by an addition polymerization mechanism results in the formation of residual olefinic vinyl, E (entgegen) and Z (zusammen) double bonds. In the case of butadiene, these are designated vinyl (or 1,2-, or 1,2-polybutadiene ), trans (or trans-1,4- or trans-1,4-polybutadiene ) and cis (or cis-1,4- or cis-1,4-polybutadiene ) double bonds. An advantage of the invention is the possibility to prepare high trans content polybutadiene (homo)polymers or copolymers. Preferably the fraction of the residual olefinic double bonds in the homopolymer or the copolymer resulting from the polymerization of the conjugated dienes that are E or trans units ranges from 50- 100% even more preferably from 60 to 100 % of the total amount of residual olefinic double bonds resulting from the polymerization of the conjugated dienes.

In one preferred embodiment, the polymers made according to this invention are homopolymers in which the percentage of trans-polybutadiene or polyisoprene is more than 50%. More preferably, that the percentage of trans-polybutadiene is more than 75%. Even more preferably, the percentage of cis-polybutadiene is less than 10 %. The percentage of 1,2 - polybutadiene is preferably between 1 and 20 %, more preferably between 5 and 15 %.

In another preferred embodiment, the polymers made according to this invention are copolymers in which the percentage of the trans-polybutadiene fraction of the polybutadiene is greater than 30%, more preferably greater than 50%. The percentage of the cis-polybutadiene fraction of the polybutadiene is preferably less than 10 %. In a particularly preferred embodiment, the percentage of 1,2- polybutadiene in the polybutadiene fraction is less than 30 %, the percentage of cis-polybutadiene in the polybutadiene fraction is less than 10 % and the percentage of trans-polybutadiene in the polybutadiene moiety is more than 60%. In another particularly perferred embodiment, the percentage of 1,2 - polybutadiene in the polybutadiene fraction is between 5 and 20 %, the percentage of cis-polybutadiene in the polybutadiene fraction is less than 10 % and the percentage of trans-polybutadiene in the polybutadiene fraction is more than 70%.

Preferably the formed copolymerization product of one conjugated diene monomer with one aromatic $\alpha$-olefin monomer is a random copolymer, even more preferably the polymer comprises butadiene and styrene, still more preferably the polymer comprises butadiene and styrene wherein the fraction of residual olefinic double bonds resulting from the polymerization of the conjugated dienes that are trans ranges from 50 -100%, more preferably from 60 - 100%, even more preferably from 70 - 99%, yet still more preferably from 80 - 96% of the total amount of residual olefinic double bonds resulting from the polymerization of the conjugated dienes. Other preferred polymers comprise butadiene and an $\alpha$-olefin selected from ethene, propene, 1-butene, 1-pentene, 1-hexene, 4-methyl-1-pentene and 1-octene, especially preferred are polymers wherein the fraction of residual olefinic double bonds that are trans ranges from 50 - 100% of the total amount of residual olefinic double bonds. Advantageously the conjugated diene polymers and the diene/aromatic $\alpha$-olefin copolymers having high trans-1,4- content also have a high 1,2-(vinyl) content from 2 to 30 percent, preferably from 4 to 20 percent, more preferably from 8 to 12 percent. Such polymers of the invention are well-suited for use in the modification of plastics, particularly polystyrene in the preparation of HIPS (high impact polystyrene). Another preferred polymer comprises butadiene and divinylbenzene, especially preferred are polymers wherein the fraction of residual olefinic double bonds that are trans ranges from 50 - 100%. The aromatic $\alpha$-olefin, preferably styrene, content of conjugated diene/aromatic $\alpha$-olefin copolymers can be varied between 0 - 90 wt.% aromatic $\alpha$-olefin, preferably 0.1 - 50 wt.%, more preferably 0.1 - 40%, still more preferably 1 - 30% wherein the aromatic $\alpha$-olefin preferably is styrene and the conjugated diene preferably is butadiene.

In a preferred embodiment, copolymers according to this invention have a styrene content less than 50%, more preferably less than 25%.

Copolymers according to this invention preferably contain containing statistically distributed units of aromatic alpha olefines. Preferably the styrene-butadiene copolymers of the invention are random copolymers. The 1,3-butadiene-styrene copolymers prepared by the process of the invention are new compositions of matter which possesses new and unique properties.

In the process of the invention, the styrene content of butadiene styrene copolymers can be varied between 0 and 90 wt.% styrene. In a non-limiting example, the styrene content can be regulated in a wide range just changing the butadiene-styrene monomer ratio in the feed giving for example an 8% styrene-containing high trans polybutadiene

(Examples, Run 10, trans content 75%) or a 20.5% styrene-containing high trans polybutadiene (Run 14, trans content 61). Advantageously, the addition of 0.1 to 50 percent styrene in butadiene-styrene copolymers leads to lower molecular weight polymers with much reduced gel content compared with the pure polybutadiene prepared under comparable polymerization conditions. The resulting lower viscosity and reduced gel content results in easier processing and handling in subsequent uses.

Another advantage of the polymerization process of the invention is that the glass temperature (Tg) of the polymers can be regulated in a wide range such as for example between -30 and -100 by changing the styrene content of the (co)polymer between 0 and 50% or by changing the isoprene content of the (co)polymer between 0 and 100%. In one such preferred embodiment, the Tg of the polymers can be regulated between -40 and -90 by changing the styrene content of the (co)polymer between 0 and less than 50% or by changing the isoprene content of the (co)polymer between 0 and 100%. In another such preferred embodiment, the Tg of the polymers can be regulated between -50 and -80 by changing the styrene content of the (co)polymer between 0 and less than 50% or by changing the isoprene content of the (co)polymer between 0 and 100%. In a non-limiting example high trans-1,4-polybutadiene with a low glass temperature of -78 °C was recovered (Polymerization Examples, Run 1) and a high trans-1,4-butadiene-styrene copolymer with a high glass temperature of -60.5 °C was recovered (Run 14).

Other prefered polymers are copolymerization products of one type of conjugated diene monomer with a second type of conjugated diene monomer. Preferably the formed copolymerization product of one type of conjugated diene monomer with a second type of conjugated diene monomer can be chosen to be a random or block copolymer, even more preferably the copolymer comprises butadiene and isoprene. Their isoprene content is preferably more than 0 and less than 100 %, more preferably less than 70 %, and even more preferably less than 35 %.

Advantageously the conjugated diene copolymers having high traps-1,4- content also have a high vinyl content (1,2-polybutadiene and 1,2- and 3,4- polyisoprene) from 2 to 30 percent, preferably from 4 to 20 percent, more preferably the 1,2-polybutadiene content of the polybutadiene fraction of the butadiene-isoprene copolymer ranges from 2 to 30 percent, even more preferably from 2 to 20 percent and the 3,4-polyisoprene content of the polyisoprene fraction of the copolymer ranges from 2 to 50, even more preferably from 2 to 40 percent and the 1,2-polyisoprene content of the polyisoprene fraction of the copolymer amounts to less than 5 %. Such polymers of the invention are well-suited for use in the modification of plastics, particularly polystyrene in the preparation of HIPS (high impact polystyrene). The 1,3-butadiene-isoprene copolymers prepared by the process of the invention are new compositions of matter which possess new and unique properties. In the process of the invention, the isoprene content of the butadiene-isoprene copolymers can be varied between 0.01 and 99.99 mol % isoprene. Preferably, the isoprene content of the butadiene - isoprene copolymer can be varied between 0.01 and 60 %. In a non-limiting example, the isoprene content can be regulated in a wide range just by changing the butadiene-isoprene monomer ratio in the feed giving for example an 11 % isoprene-containing high trans polydiene (Examples, Run 18, the trans polybutadiene of the polybutadiene fraction amounts to 85.9 %, the trans polyisoprene of the polyisoprene fraction amounts to 81.8 %) or a 24.5% isoprene-containing high trans polydiene (Run 19, the trans polybutadiene of the polybutadiene fraction amounts to 84.8 %, the trans polyisoprene of the polyisoprene fraction amounts to 65.3 %). Advantageously, the addition of 0.01 to 50 percent isoprene in butadiene-isoprene copolymers leads to higher molecular weight polymers and higher Mooney values compared with the pure polybutadiene prepared under comparable polymerization conditions. High isoprene contents such as but not limited to 40 to 60 mol% lead to much reduced gel content compared with the pure polybutadiene prepared under comparable polymerization conditions. The resulting reduced gel content results in easier processing and handling of high molecular weight copolymers in subsequent uses. Another advantage of the polymerization process of the invention is that the glass temperature Tg of the copolymers of about -72 °C is in a suitable range between the reference glass temperatures of pure polybutadiene of -78 °C (see run 1 ) and of pure polyisoprene of -63 °C (see run 17). The glass temperature of the copolymers having different butadiene-isoprene compositions is almost identical. The melt enthalpy *($\Delta H^{SL}$)* can be regulated in a wide range such as for example but not limited to values between zero J/g (isoprene content of 50 %) which corresponds to an amorphous copolymer (see run 20) to 38.5 J/g (isoprene content 11 %, see run 18) which corresponds to a copolymer with crystalline areas. It is an advantage that the presence and the extent of the crystalline areas in the copolymer can be varied just by changing the butadiene-isoprene ratio in the feed. Accordingly defined changes of the polymer crystallinity and polymer elasticity can be achieved making these copolymers applicable for example but not limited to tire applications.

The polymerization process of the invention allows the production of tailor-made polymers. In particular, the choice of the activator and of the metal complex and also the manner of preparation of catalyst, as well as the solvent used for the polymerization reaction (nonaromatic or aromatic), the concentration of the diene and the polymerization temperature enable an adjustment of the polymer microstructure (ratio of cis-, trans- and vinyl content <u>and</u> α-olefin content in case of butadiene-α-olefin copolymers <u>and</u> diene content in case of butadiene-diene copolymers), the molecular weight of the resulting polymer (homo- or copolymer) and the polymerization activity of a given catalyst. In a non-limiting example, the trans content of the polybutadiene homopolymer can be regulated in a wide range by exchanging activator compounds or by the use of a suitable activator mixture or by exchanging the metal complex component. For example 94.0% trans-1,4-polybutadiene with an average molecular weight of 1,600,000 was recovered (Run 7) when metal complex 3 was used in combination with tris(pentafluorophenyl)borane and triethylaluminum while 50.5% trans-1,4-polybutadiene with an average molecular weight of 143,000 was obtained (Run 5) when metal complex 4 was used in combination with MMAO.

Another advantage of the invention is that the molecular weight distribution of the polymer can be regulated in a wide range by exchanging the metal complex component and/or the activator compound and/or changing the reaction temperature. In a non-limiting example high trans-1,4-polybutadiene with a narrow molecular weight distribution of 3.4 was recovered (Run 2) and a high trans-1,4-polybutadiene with a broad molecular weight distribution of 22.8 was recovered (Run 7).

Another advantage of the invention for diene polymerization reactions is that the manner of preparation of the catalyst (e.g. order of addition of the catalyst components and catalyst aging) can favorably influence the polymer properties such as the molecular weight.

A further advantage of the invention is greatly increased catalytic activity towards polymerization. Some of the vanadium-based catalysts of the invention demonstrated below gave much higher polymerization activities under comparable polymerization conditions such as reaction temperature and activators (run 9; polymerization activity: 3,876 kg {polymer}/mmol {V}[hr]) than the classical vanadium carboxylate-based catalysts (run 16, comparative example, 0.003 kg {polymer}/mmol {V}[hr].

The polymers and copolymers of the invention may be used in the production of many useful shapes, molded parts, films, foams, golf balls, tires, hoses, conveyor and other belts, gaskets, seals, shoes and in the modification of plastics, such as the manufacture of high impact polystyrene or impact-modified polypropylene.

Examples

It is understood that the present invention is operable in the absence of any component which has not been specifically disclosed. The following examples are provided in order to further illustrate the invention and are not to be constructed as limiting. Unless stated to the contrary, all parts and percentages are expressed on a weight basis. The term "overnight", if used, refers to a time of approximately 16-18 hours, "room temperature", if used, refers to a temperature of about 20-25 °C.

All tests in which organometallic compounds were involved were carried out in an inert nitrogen atmosphere, using standard Schlenk equipment and techniques or in a glovebox. In the following 'THF' stands for tetrahydrofuran, 'Me' stands for 'methyl', 'Et' stands for 'ethyl','Bu' stands for 'butyl', 'Ph' stands for 'phenyl', 'MMAO' or 'MMAO-3a' stands for 'modified methyl alumoxane' purchased from AKZO Nobel and TMB stands for trimethoxybenzene. Pressures mentioned are absolute pressures. The polymerizations were performed under exclusion of moisture and oxygen in a nitrogen atmosphere. The products were characterized by means of SEC (size exclusion chromatography), elemental analysis, NMR (Avance 400 device ($^1H$=400 MHz; $^{13}C$=100 MHz) of Bruker Analytic GmbH) and IR (IFS 66 FT-IR spectrometer of Bruker Optics GmbH). The IR samples were prepared using $CS_2$ as swelling agent and using a two or fourfold dissolution. DSC (differential scanning calorimetry) was measured using a DSC 2920 of TA Instruments. Mn and Mw are molecular weights and were determined by universal calibration of SEC. The ratio between the 1,4-cis-, 1,4-trans- and 1,2-polydiene content of the butadiene or isoprene polymers was determined by IR and $^{13}C$ NMR-spectroscopy. The glass transition temperatures of the polymers were determined by DSC determination.

1. Synthesis of the transition metal complexes

1.1. Preparation of [2,6-bis(benzimidazol-2-yl)pyridine]vanadium trichloride 1.

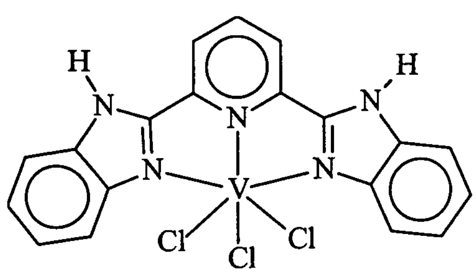

In a flask were combined 0.3423 g (1.10 mmol) of 2,6-bis(benzimidazol-2-yl)pyridine with 0.4107 g (1.10 mmol) of $VCl_3(THF)_3$. About 80 mL of THF were added to form a deep yellow-green precipitate. After stirring for several days, the mustard yellow slurry was refluxed for several hours. The precipitate was collected on the frit, washed with THF, then dried under reduced pressure. The yield of mustard-yellow powder was 0.5832 g, 113.2%, as a THF complex.

1.2. Preparation of 2.6-bis(N-methylbenzimidazol-2-yl)pyridine.

A solution of 11.484 g of 97% (35.78 mmol) of 2,6-bis(2-benzimidazolyl)pyridine in 300 mL of DMSO was made up. The reaction flask was placed in an ice bath just before the addition of 50.00 mL (1.6 M, 80.01 mmol) of butyl lithium, which took place over a 10 minute period. The yellow solution darkened slightly. Near the point where about 75% of the butyl lithium had been added, precipitate began to form. When slightly more than 2 equivalents of butyl lithium had been added, the mixture suddenly acquired a reddish brown color. The ice bath was removed and the reaction mixture was allowed to warm up to ambient temperature. After stirring for about 2 hours, the reaction mixture was again cooled in an ice bath, under formation of a large quantity of solid. Iodomethane (5.05 mL, 2.215 g, 81.15 mmol) was then added dropwise via syringe. As the reaction mixture was allowed to warm to ambient temperature, an intense chartreuse color developed and stirred for several days. Afterhydrolysis of the reaction mixture with about 200 mL of water, the product was extracted into methylene chloride (3 x 250 mL), and the combined extracts were washed with water (3 x 250 mL), concentrated to about 200 mL and dried over anhydrous magnesium sulfate. After filtering, the remaining volatiles were removed under reduced pressure to give the product in quantitative yield as a white solid. $^1H$ NMR ($CDCl_3$) δ 8.4 (d, 2H), 8.05 (t, 1H), 7.85 (dd , 2H) 7.42 (m, 2H) 7.35 (m, 4H) 4.2 (s, 6H).

1.3. Preparation of [2,6-bis(N-methylbenzimidazol-2-yl)pyridine]vanadium dichloride 2.

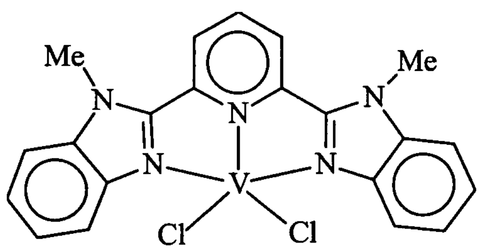

A solution of 1.038 g (3.06 mmol) of 2,6-bis(N-methylbenzimidazol-2-yl)pyridine in about 30 mL of THF was added to slurry of 0.359 g (2.95 mmol) of $VCl_2$ in about 100 mL of THF Yellow-tan precipitate formed instantly. The reaction mixture was refluxed overnight. All the dark $VCl_2$ appeared to have dissolved. The reaction mixture was allowed to stir over the weekend, then the slurry was filtered out and the solid collected on the frit was washed with THF, then dried under reduced pressure. The yield of mustard-yellow powder was 0.5911 g, 43.51%.

1.4. Preparation of 2,6-[bis(benzimidazo -2-yl)pyridine]vanadium dichloride 3.

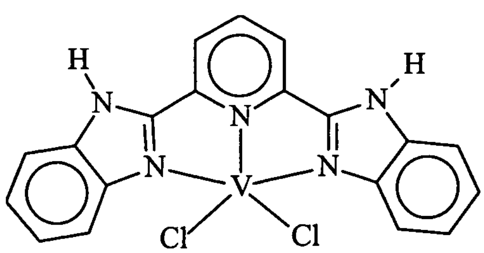

A slurry of 0.2180 g (1.79 mmol) of $VCl_2$ in about 25 mL of THF was added to a solution of 0.5582 g (1.79 mmol) of bis(benzimidazol-2-yl)pyridine in about 100 mL of THF to form a gray precipitate. After stirring overnight, the reaction mixture contained a large amount of what appeared to be unreacted $VCl_2$. The reaction mixture was then heated overnight under gentle reflux. The resulting black solid was filtered off, washed with THF, then dried under reduced pressure to give 0.3574 g (46.0%) of dark gray product.

1.5. Preparation of[2,6-bis-(4S-isopropyl-2-oxazolin-2-yl)pyridine]$VCl_3$4.

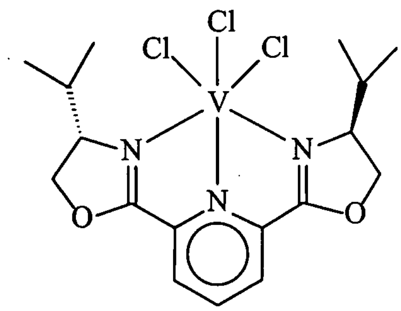

[2,6-Bis-(45-isopropyl-2-oxazolin-2-yl)pyridine] (0.266 g, 0.88 mmole) and $VCl_3(THF)_3$ (0.300 g, 0.80 mmole) were dissolved in 40 mL of THF. The slurry was stirred for 20 hours resulting in the formation of a purple solid. The product was isolated by filtration, washed with $Et_2O$, and dried under vacuum (0.335 g, 91 percent yield).

1.6. Preparation of 2.6-Bis{1-[(2,6-dimethylphenyl)imino]ethyl}pyridine according to WO 0006992.

2,6-Diacetylpyridine (5.360 g, 32.85 mmol), 2,6-dimethylaniline (7.961 g, 65.70 mmol), and p-toluenesulfonic acid (0.01 g) were refluxed together in toluene (150 mL) during which time water was removed from the reaction mixture using a Dean-Stark apparatus. The reaction was allowed to proceed ovemight. The reaction mixture was then allowed to cool to room temperature and filtered. Removal of the volatiles under vacuum left a yellow powder which was then washed well with hexane and dried under vacuum to give the desired product as a pale yellow powder (10.085 g, 83.1 percent yield).

$^1$H NMR ($C_6D_6$): δ 2.05 (s. 12 H), 2.17 (s, 6 H), 6.9-7.1 (m, 6 H), 7.29 (t, $^3J_{HH}$ = 7.7 Hz, 1 H), 8.50 (d, $^3J_{HH}$ = 7.9 Hz, 2 H). $^{13}$C NMR ($C_6D_6$): δ 16.46, 18.25, 122.51, 123.43, 125.38, 136.86, 149.43, 155.48, 166.78.

1.7. Preparation of [2,6-bis(N-methylbenzimidazol-2yl)pyridine]vanadium trichloride 5.

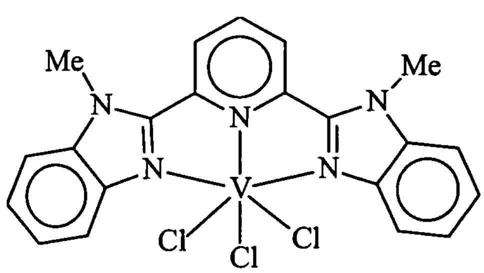

A solution of 4.500 g (13.26 mmol) of 2,6-bis(N-methylbenzimidazol-2-yl)pyridine in about 100 mL of THF was added over about 15 minutes to a slurry of 4.954 g (13.26 mmol) of $VCl_3(THF)_3$ in about 150 mL of THF. Yellow-tan precipitate formed instantly in the initially red slurry. By the time all of the 2,6-bis(N-methylbenzimidazol-2-yl)pyridine had been added, all of the $VCl_3(THF)_3$ had dissolved. The reaction mixture was allowed to stir over the weekend. The precipitate was filtered out and and washed with THF, then dried under reduced pressure. Yield of tan powder was 6.788 g, 103%.

1.8. Preparation of 2.6-Bis{1-[(2,6-dimethylphenyl)imino]ethyl)pyridine vanadium trichloride 6.

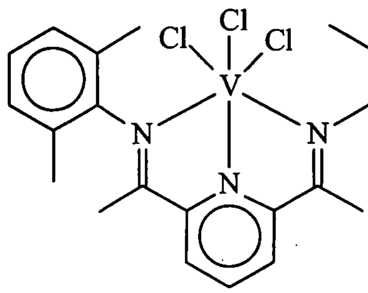

2,6-Bis{1-[(2,6-dimethylphenyl)imino]ethyl}pyridine (0.109 g, 0.29 mmole) and $VCl_3(THF)_3$ (0.100 g, 0.27 mmole) were dissolved in 20 mL of THF. The slurry was stirred for 20 hours resulting in the formation of a purple solid. The product was isolated by filtration, washed with $Et_2O$, and dried under vacuum. Yield was 0.120 g, 85.1 percent.

1.9. Preparation of 2.6-[bis(benzimidazol-2-yl)pyridine]vanadium dichloride (N N N' N'-tetramethylethylenediamine) 7.

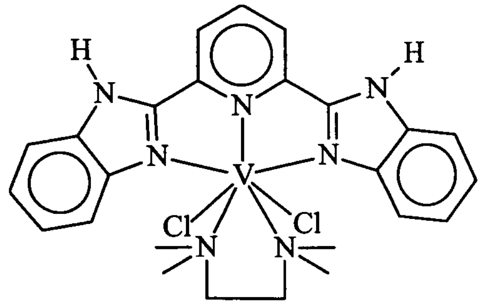

To a solution of 1.005 g (3.23 mmol) of bis(benzimidazol-2-yl)pyridine in about 140 mL of THF was added a solution of 1.144 g (3.23 mmol) of $(TMEDA)_2VCl_2$ in about 100 mL of THF. The reaction mixture was allowed to stir overnight and the resulting dark green precipitate was filtered out and washed with THF, then dried under reduced pressure to give 1.6377 g (92.35%) of forest green powder.

1.10. Preparation of 2,6-diacetylpyridine bis(piperidylhydrazone)vanadium trichloride 8.

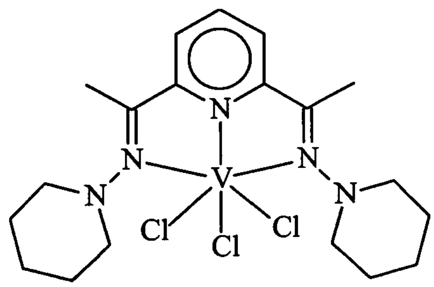

To a bright lemon yellow solution of 1.285 g of (3.92 mmol) of 2,6-diacetylpyridine bis(piperidylhydrazone) in 50 mL of THF were added 1.466 g (3.92 mmol) of $VCl_3(THF)_3$ to form a red-brown solution, then the reaction mixture was allowed to stir overnight, then was allowed to stand for a few days. Black crystalline material formed which was dissolved in THF and the solution was filtered. After removing the volatiles under reduced pressure, the residue was extracted with toluene and filtered. The volatiles were again removed under reduced pressure and toluene was added to form a slurry which was filtered out and the product was washed with a small amount of toluene and dried under vacuum. The yield of deep green-black powder was 1.9905 g, 104.64%, as a THF adduct.

1.11. Preparation of 2,6-diacetylpyridine bis(piperidylhydrazone)vanadium dichloride 9.

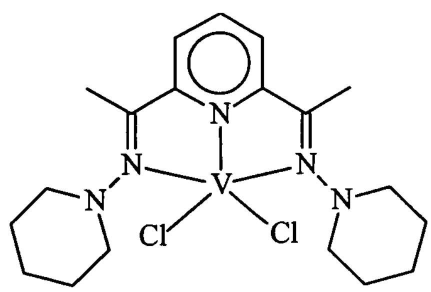

To a bright lemon yellow solution of 1.266 g of (3.86 mmol) of 2,6-diacetylpyridine bis(piperidylhydrazone) in 50 mL THF were added 0.471 g (3.86 mmol) of $VCl_2$ to form a brownish gray solution, then the reaction mixture was allowed to stir overnight. The solution was filtered and the volatiles were removed under reduced pressure. The residue was extracted with toluene and filtered. The volatiles were again removed under reduced pressure and toluene was added to form a slurry which was filtered out and the product was washed with a small amount of toluene and dried under vacuum. The yield of light tan-peach colored powder was 1.1441 g, 65.89%.

1.12. Preparation of 2.6-diacetylpyridine bis(piperidylhydrazone)neodium trichloride 10.

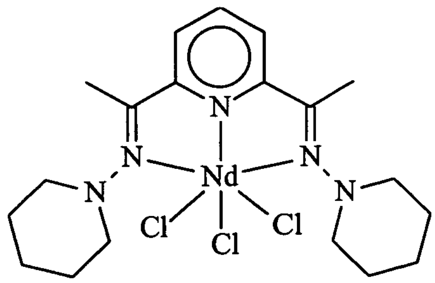

To a bright lemon yellow solution of 1.215 g of (3.71 mmol) of 2,6-diacetylpyridine bis(piperidylhydrazone) in 50 mL THF were added 0.924 g (3.69 mmol) of $NdCl_3$, then the reaction mixture was allowed to stir overnight. The reaction mixture was heated under reflux for several hours, then was filtered to remove 0.2241 g of light blue solid from the yellow solution. The filtrate was concentrated under reduced pressure to dryness, then was extracted with toluene and filtered to give a yellow solution and a yellow-tan solid on the frit. The solvents were removed under reduced pressure to give the product as a yellow powder.

1.13. Preparation of [2,6-bis(*N*-methylbenzimidazol-2-yl)pyridine]neodymium trichloride 11.

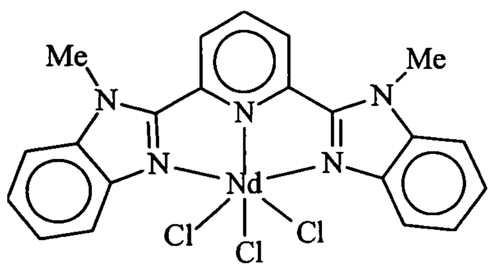

A slurry of 0.664 g (2.65 mmol) of $NdCl_3$ in about 110 mL of THF was refluxed for two hours. After cooling to ambient temperature, a solution of 0.9063 g (2.67 mmol) of 2,6-bis(N-methylbenzimidazol-2-yl)pyridine (from Harold Boone) in about 50 mL of THF was added over about 5 minutes to the pale blue solution. Very pale blue precipitate formed instantly. The reaction mixture was allowed to stir overnight. The slurried product was then decanted carefully onto a frit to leave behind a trace of unreacted $NdCl_3$. The resulting paste was slurried up in THF again then decanted carefully onto a frit to remove the last traces of $NdCl_3$, then washed with THF and dried under reduced pressure to give the product as a very pale blue-green powder. The yield was 1.6074 g, 102.0%

*2. Polymerization*

*2.1* Description of the polymerization procedure

*2.1.1* Description of the polymerization procedure - Method 1

The polymerizations were performed in a double wall 2 L steel reactor, which was purged with nitrogen before the addition of organic solvent, metal complex, activator(s), Lewis acids or other components. The polymerization reactor was tempered to 80 °C if not stated otherwise. The following components were then added in the following order: organic solvent, a portion of the activator 1, optionally a second activator component and/or Lewis acid, conjugated diene monomer(s) and the mixture was allowed to stir for one hour.

In a separate 200 mL double wall steel reactor, which was tempered to the same temperature as the polymerization reactor if the temperature value did not fall below 80 °C (if lower temperatures were chosen for the polymerization process, the 200 mL reactor was still tempered to 80 °C), the following components were added in the following order: organic solvent and a portion of the activator 1 and the mixture was stirred for 0.5 hours. Then optionally a second activator component and/or Lewis acid and subsequently the metal complex were added and the resulting mixture was allowed to stir for an additional 30 minutes.

The polymerization was started through addition of the contents of the 200 mL steel reactor into the 2 L polymerization vessel. The polymerization was performed at 80°C unless stated otherwise. The polymerization time varied depending on the experiment.

For the termination of the polymerization process, the polymer solution was transferred into a third double wall steel reactor containing 50 mL of methanol containing Irganox 1520 as stablizer for the polymer (1L of methanol contains 2 g of Irganox). This mixture was stirred for 15 minutes. The recovered polymer was then stripped with steam for 1 hour to remove solvent and other volatiles and dried in an oven at 45 °C for 24 hours.

*2.1.2* Description of the polymerization procedure - Method 2

The polymerizations were performed in a double wall 2 L steel reactor, which was purged with nitrogen before the addition of organic solvent, metal complex, activator(s), Lewis acids or other components. The polymerization reactor was tempered to 80 °C unless stated otherwise. The following components were then added in the following order: organic solvent, the activator 1, conjugated diene monomer(s)and the mixture was allowed to stir for one hour. Then the following components were added in the following order into the 2 L steel reactor: optionally a second activator component and/or Lewis acid and subsequently the metal complex was added to start the polymerization.

The polymerization was performed at 80°C unless stated otherwise. The polymerization time varied depending on the experiment.

For the termination of the polymerization process, the polymer solution was transferred into a third double wall steel reactor containing 50 mL of methanol containing Irganox 1520 as stablizer for the polymer (1L of methanol contains 2 g of Irganox). This mixture was stirred for 15 minutes. The recovered polymer was then stripped with steam for 1 hour to remove solvent and other volatiles and dried in an oven at 45 °C for 24 hours.

*3 Polymerization Examples:*

3.1 Polymerization of 1,3-butadiene

3.1.1 Polymerization of 1,3-butadiene giving high trans polybutadiene

A) Polymerization of 1,3-butadiene using complex 1 and MMAO-3a (Run 1)

The experiment was carried out according to the general polymerization procedure described above (2.1.1). The polymerization was carried out in 510 g of toluene solvent. Thus 409 g of toluene, 53.9 g (1.0 mol) of 1,3-butadiene monomer and MMAO (2.9 g of a heptane solution containing 7.5 mmol of MMAO) were added into the polymerization reactor. 101 g of touene and 2.9 g of a heptane solution containing 7.5 mmol of MMAO were mixed with 93.7 mg (0.20 mmol) of the metal complex 1 in a separate reaction vessel and stirred for 60 minutes.

Afterwards the resulting mixture was transferred into the polymerization reactor to start the polymerization reaction.

After three hours and 21 minutes the polymerization reaction was terminated as described above (see 2.1.1). At this point, the conversion level of the monomers into polybutadiene was 77.6%. 41.8 g of polybutadiene were recovered as result of the stripping process.

The polymer contained 3.0% cis-1,4-; 87.0% trans-1,4-, 10.0% 1,2-polybutadiene according to IR determination.

The Mooney value amounted to 59.7 and the glass transition temperature amounted to - 78.0 °C.

B) Polymerization of 1,3-butadiene using complex 1 and MMAO-3a (Run 2)

The experiment was carried out according to the general polymerization procedure described above (2.1.1). The polymerization was carried out in 499.5 g of cyclohexane solvent. Thus 400.0 g of cyclohexane, 54.0 g (1.0 mol) of 1,3-butadiene monomer and MMAO (2.9 g of a heptane solution containing 7.5 mmol of MMAO) were added into the polymerization reactor. 99.5 g of cyclohexane and 2.9 g of a heptane solution containing 7.5 mmol of MMAO were mixed with 93.7 mg (0.20 mmol) of the metal complex 1 in a separate reaction vessel and stirred for 60 minutes.

Afterwards the resulting mixture was transferred into the polymerization reactor to start the polymerization

reaction.

After four hour and 5 minutes the polymerization reaction was terminated as described above (see 2.1.1). At this point, the conversion level of the monomers into polybutadiene was 63.5%. 34.3 g of polybutadiene were recovered as result of the stripping process.

The molecular weight of the polymer amounted to 255,000 g/mol and the polydispersity (molecular weight distribution) amounted to 3.4. ($M_n$ = 75,000; $M_z$ = 640,000).

The polymer contained 9.5% cis-1,4-; 82.5% trans-1,4-, 8.0% 1,2-polybutadiene according to IR determination.

The Mooney value amounted to 57.0.

C) Polymerization of 1,3-butadiene using complex 1 and MMAO-3a (Run 3) Presence of 1-octene monomer

The experiment was carried out according to the general polymerization procedure described above (2.1.2). The polymerization was carried out in 500 g of toluene solvent. Thus 500 g of toluene, 54.1 g (1.0 mol) of 1,3-butadiene monomer, MMAO (11.7 g of a heptane solution containing 30.0 mmol of MMAO) and11.2 g (100 mmol) 1-octene were added into the polymerization reactor. The addition of 93.7 mg (0.20 mmol) of the metal complex 1 started the polymerization reaction.

After one hour the polymerization reaction was terminated as described above (see 2.1.2). At this point, the conversion level of the monomers into polybutadiene was 52.4%. 34.2 g of polybutadiene were recovered as result of the stripping process.

The polymer contained 9.0% cis-1,4-; 82.0% trans-1,4-, 9.0% 1,2-polybutadiene according to IR determination.

The Mooney value amounted to 6.2.

D) Polymerization of 1,3-butadiene using complex 3 and MMAO-3a (Run 4)

The experiment was carried out according to the general polymerization procedure described above (2.1.2). The polymerization was carried out in 500 g of toluene solvent. Thus 500 g of toluene, 54.1 g (1.0 mol) of 1,3-butadiene monomer and MMAO (11.9 g of a heptane solution containing 30.5 mmol of MMAO) were added into the polymerization reactor. The addition of 86.6 mg (0.20 mmol) of the metal complex 3 started the polymerization reaction.

After 92 minutes the polymerization reaction was terminated as described above (see 2.1.2). At this point, the conversion level of the monomers into polybutadiene was 79.3%. 42.9 g of polybutadiene were recovered as result of the stripping process.

The polymer contained 1.5% cis-1,4-; 88.0% traps-1,4-, 10.5% 1,2-polybutadiene according to IR determination. The molecular weight of the polymer amounted to 495,000 g/mol and the polydispersity (molecular weight distribution) amounted to 8.1. ($M_n$ = 61,000; $M_z$ = 1,630,000).

The Mooney value amounted to 39.9.

E) Polymerization of 1,3-butadiene using complex 4 and MMAO-3a (Run 5)

The experiment was carried out according to the general polymerization procedure described above (2.1.1). The polymerization was carried out in 500.8 g of cyclohexane solvent. Thus 400.2 g of cyclohexane, 54.2 g (1.0 mol) of 1,3-butadiene monomer and MMAO (2.9 g of a heptane solution containing 7.5 mmol of MMAO) were added into the polymerization reactor. 100.6 g of cyclohexane and 2.9 g of a heptane solution containing 7.5 mmol of MMAO were mixed with 94.1 mg (0.20 mmol) of the metal complex 4 in a separate reaction vessel and stirred for 45 minutes.

Afterwards the resulting mixture was transferred into the polymerization reactor to start the polymerization reaction.

After two hours and 51 minutes the polymerization reaction was terminated as described above (see 2.1.1). At this point, the conversion level of the monomers into polybutadiene was 11.5%. 6.2 g of polybutadiene were recovered as result of the stripping process.

The polymer contained 33.0% cis-1,4-; 50.5% trans-1,4-, 16.5% 1,2-polybutadiene according to IR determination. The molecular weight of the polymer amounted to 143,000 g/mol and the polydispersity (molecular weight distribution) amounted to 12.4. ($M_n$ = 11,500; $M_z$ = 878,000).

F) Polymerization of 1,3-butadiene using complex 5 and MMAO-3a (Run 6)

The experiment was carried out according to the general polymerization procedure described above (2.1.1). The polymerization was carried out in 507.9 g of cyclohexane solvent. Thus 406.9 g of cyclohexane, 108.0 g (2.0 mol)

of 1,3-butadiene monomer and MMAO (2.9 g of a heptane solution containing 7.5 mmol of MMAO) were added into the polymerization reactor. 101.0 g of cyclohexane and 2.9 g of a heptane solution containing 7.5 mmol of MMAO were mixed with 99.3 mg (0.20 mmol) of the metal complex 5 in a separate reaction vessel and stirred for 68 minutes.

Afterwards the resulting mixture was transferred into the polymerization reactor to start the polymerization reaction.

After three hours and 42 minutes the polymerization reaction was terminated as described above (see 2.1.1). At this point, the conversion level of the monomers into polybutadiene was 27.2%. 29.3 g of polybutadiene were recovered as result of the stripping process.

The polymer contained 18.0% cis-1,4-; 74.7% trans-1,4-, 8.0% 1,2-polybutadiene according to IR determination. The molecular weight of the polymer amounted to 300,000 g/mol and the polydispersity (molecular weight distribution) amounted to 4.7. ($M_n$ = 64,000; $M_z$ = 1.360,000).

The Mooney value amounted to 47.1.

G) Polymerization using metal complex 3 in combination with $Et_3Al$ / $B(C_6F_5)_3$ (Run 7)

The experiment was carried out according to the general polymerization procedure described above (2.1.1). The polymerization was carried out in 502.8 g of toluene solvent. Thus 500 g of toluene, 141.9 mg (1.24 mmol) triethylaluminum, 25.4 mg (0.0497 mmol) tris(pentafluorophenyl)borane and 54.1 g (1.0 mol) of 1,3-butadiene monomer. The temperature of the polymerization vessel was adjusted to 80 °C. 2.8 g of toluene, 428.9 mg (3.76 mmol) triethylaluminum, 77.0 mg (0.1503 mmol) tris(pentafluorophenyl)borane and 86.6 mg (0.20 mmol) of the metal complex 3 were dosed into a separate reaction vessel and stirred for 5 minutes at 25 °C.

Afterwards the resulting mixture was transferred into the polymerization reactor to start the polymerization reaction.

After one hour and 30 minutes the polymerization reaction was terminated as described above (see 2.1.1). At this point, the conversion level of the monomers into polybutadiene was 70.4%. 38.1 g of polybutadiene were recovered as result of the stripping process.

The polymer contained 2.0% cis-1,4-; 94.0% trans-1,4-, 4.0% 1;2-polybutadiene according IR determination. The molecular weight of the polymer amounted to 1,600,000 g/mol and the polydispersity (molecular weight distribution) amounted to 22.8. ($M_n$ = 70,000; $M_z$ = 3,650,000).

The Mooney value amounted to 21.7.

H) Polymerization using metal complex 2 in combination with MMAO / $Et_3Al$ / $B(C_6F_5)_3$ (Run 8)

The experiment was carried out according to the general polymerization procedure described above (2.1.2). The polymerization was carried out in 502.7 g of toluene solvent. Thus 500 g of toluene, 11.9 g (11.9 mmol) MMAO, 118. mg (1.0 mmol) triethylaluminum, 102 mg (0.20 mmol) tris(pentafluorophenyl)borane and 54.1 g (1.0 mol) of 1,3-butadiene monomer. The temperature of the polymerization vessel was adjusted to 80 °C. The addition of 92.2 mg (0.2 mmol) of the metal complex 2 into the polymerization reactor started the polymerization reaction.

After three hours and 45 minutes the polymerization reaction was terminated as described above (see 2.1.1). At this point, the conversion level of the monomers into polybutadiene was 63.2%. 34.2 g of polybutadiene were recovered as result of the stripping process.

The polymer contained 3.0% cis-1,4-; 89.0% trans-1,4-, 8.0% 1,2-polybutadiene according to IR determination.

The Mooney value amounted to 124.4.

I) Polymerization using metal complex 1 in combination with $Et_3Al$ / $B(C_6F_5)_3$ (Run 9)

The experiment was carried out according to the general polymerization procedure described above (2.1.1). The polymerization was carried out in 513.2 g of toluene solvent. Thus 400.1 g of toluene, 54.2 g (1.0 mol) of 1,3-butadiene monomer, 35.5 mg (0.311 mmol) triethylaluminum and 6.1 mg (0.012 mmol) tris(pentafluorophenyl)borane were added into the polymerization reactor. The temperature of the polymerization vessel was adjusted to 25 °C. 113.1 g of toluene, 107.2 mg (0.939 mmol) triethylaluminum, 19.5 mg (0.038 mmol) tris(pentafluorophenyl)borane and 23.4 mg (0.050 mmol) of the metal complex 1 were dosed into a separate reaction vessel and stirred for 40 minutes at 25 °C.

Afterwards the resulting mixture was transferred into the polymerization reactor to start the polymerization reaction.

After ten minutes the polymerization reaction was terminated as described above (see 2.1.1). At this point, the conversion level of the monomers into polybutadiene was 59.5%. 32.3 g of polymer were recovered as result of the stripping process.

The polymer contained 1.0% cis-1,4-; 92.0% trans-1,4-, 7.0% 1,2-polybutadiene according to IR determination.

The Mooney value amounted to 63.1.

3.2 Copolymerization of 1,3-butadiene with styrene

J) Copolymerization of 1,3-butadiene with styrene using metal complex 1 in combination with MMAO (Run 10)

The experiment was carried out according to the general polymerization procedure described above (2.1.1). The polymerization was carried out in 4942 g of toluene solvent. Thus 4840 g of toluene, 693 g (12.8 mol) of 1,3-butadiene monomer, 75.7 g (0.73 mol) of styrene and MMAO (2.9 g of a heptane solution containing 7.5 mmol of MMAO) were added into the polymerization reactor. 102 g of toluene and 58.2 g of a heptane solution containing 150.5 mmol of MMAO were mixed with 468.5 mg (1.0 mmol) of the metal complex 1 in a separate reaction vessel and stirred for 30 minutes.

Afterwards the resulting mixture was transferred into the polymerization reactor to start the polymerization reaction.

After one hour and 13 minutes the polymerization reaction was terminated as described above (see 2.1.1). At this point, the conversion level of the monomers into polybutadiene was 55.1%. 381.6 g of copolymer were recovered as result of the stripping process.

The polymer contained 3.7% cis-1,4-; 79.0% trans-1,4-, 9.3% 1,2-polybutadiene and 8% styrene content according to $^{13}C$ NMR and IR determination. The styrene units were statistically distributed over the polymer chain according to NMR investigation (no blocks of more than 4 styrene units could be detected). The molecular weight of the polymer amounted to 954,000 g/mol and the polydispersity (molecular weight distribution) amounted to 7.8. ($M_n$ = 122,000; $M_z$ = 2,140,000).

The Mooney value amounted to 98.8. The glass temperature amounts to -68,9 °C.

K) Copolymerization of 1,3-butadiene with styrene using metal complex 1 in combination with MMAO (Run 11)

The experiment was carried out according to the general polymerization procedure described above (2.1.1). The polymerization was carried out in 5976.7 g of toluene solvent. Thus 5872.7 g of toluene, 486.8 g (9.0 mol) of 1,3-butadiene monomer, 103.1 g (0.99 mol) styrene and MMAO (2.9 g of a heptane solution containing 7.5 mmol of MMAO) were added into the polymerization reactor. 104.0 g of toluene and 49.3 g of a heptane solution containing 126.3 mmol of MMAO were mixed with 468.5 mg (1.0 mmol) of the metal complex 1 in a separate reaction vessel and stirred for 30 minutes.

Afterwards the resulting mixture was transferred into the polymerization reactor to start the polymerization reaction.

After three hour the polymerization reaction was terminated as described above (see 2.1.1). At this point, the conversion level of the monomers into polybutadiene was 75.1%. 365.4 g of copolymer were recovered as result of the stripping process.

The polymer contained 3.0% cis-1,4-; 75.0% trans-1,4-, 9.5% 1,2-polybutadiene and 12.5% styrene content according to $^{13}C$ NMR determination. The styrene units were statistically distributed over the polymer chain according to $^{13}C$ NMR and IR investigation (no blocks of more than 4 styrene units could be detected). The molecular weight of the polymer amounted to 846,000 g/mol and the polydispersity (molecular weight distribution) amounted to 7.8. ($M_n$ = 121,000; $M_z$ = 2,025,000).

The Mooney value amounted to 70.5. The glass temperature amounts to -66,0 °C.

L) Copolymerization of 1,3-butadiene with styrene using metal complex 1 in combination with $Et_3Al$ / $B(C_6F_5)_3$ (Run 12)

The experiment was carried out according to the general polymerization procedure described above (2.1.1). The polymerization was carried out in 597.8 g of toluene solvent. Thus 500.2 g of toluene, 54.1 g (1.0 mol) of 1,3-butadiene monomer, 11.4 g (0.11 mol) styrene and 28.5 mg (0.250 mmol) triethylaluminum and 5.1 mg (0.010 mmol) tris (pentafluorophenyl)borane were added into the polymerization reactor. The temperature of the polymerization vessel was adjusted to 25 °C. 97.6 g of toluene, 86.6 mg (0.750 mmol) triethylaluminum, 19.5 mg (0.038 mmol) tris(pentafluorophenyl)borane and 15.4 mg (0.033 mmol) of the metal complex 1 were dosed into a separate reaction vessel and stirred for 34 minutes at 25 °C.

Afterwards the resulting mixture was transferred into the polymerization reactor to start the polymerization reaction.

After one hour and 41 minutes the polymerization reaction was terminated as described above (see 2.1.1).

At this point, the conversion level of the monomers into polybutadiene was 94.6%. 51.2 g of copolymer were recovered as result of the stripping process.

The polymer contained 1.5% cis-1,4-; 82.0% trans-1,4-, 6.0% 1,2-polybutadiene and 10.5% styrene content according to $^{13}C$ NMR and IR determination. The styrene units were statistically distributed over the polymer chain according to NMR investigation (no blocks of more than 4 styrene units could be detected).

The Mooney value amounted to 30.1. The glass temperature amounts to -67,4 °C.

M)Copolymerization of 1,3-butadiene with styrene using metal complex 1 in combination with MMAO (Run 13)

The experiment was carried out according to the general polymerization procedure described above (2.1.1). The polymerization was carried out in 5009 g of toluene solvent. Thus 4007 g of toluene, 54.2 g (1.0 mol) of 1,3-butadiene monomer, 7.2 g (69 mmol) styrene and MMAO (2.9 g of a heptane solution containing 7.5 mmol of MMAO) were added into the polymerization reactor. 1002 g of toluene and 3.0 g of a heptane solution containing 7.7 mmol of MMAO were mixed with 93.7 mg (0.2 mmol) of the metal complex 1 in a separate reaction vessel and stirred for 30 minutes.

Afterwards the resulting mixture was transferred into the polymerization reactor to start the polymerization reaction.

After three hours and 23 minutes the polymerization reaction was terminated as described above (see 2.1.1). At this point, the conversion level of the monomers into polybutadiene was 77.0%. 47.3 g of copolymer were recovered as result of the stripping process.

The polymer contained 6.0% cis-1,4-; 75.0% trans-1,4-, 9.0% 1,2-polybutadiene and 10.0% styrene content according to $^{13}C$ NMR determination. The polystyrene units of the copolymer contained a block content of 5% according to $^{13}C$ NMR and IR investigation. The molecular weight of the polymer amounted to 625,000 g/mol and the polydispersity (molecular weight distribution) amounted to 7.8. ($M_n$ = 105,000; $M_z$ = 1,600,000).

The Mooney value amounted to 48.9 and the glass temperature to -70.0 °C.

N) Copolymerization of 1,3-butadiene with styrene using metal complex 1 in combination with MMAO (Run 14)

The experiment was carried out according to the general polymerization procedure described above (2.1.1). The polymerization was carried out in 504.1 g of toluene solvent. Thus 401.1 g of toluene, 54.1 g (1.0 mol) of 1,3-butadiene monomer, 25.7 g (247 mmol) styrene and MMAO (2.9 g of a heptane solution containing 7.5 mmol of MMAO) were added into the polymerization reactor. 103.0 g of toluene and 2.9 g of a heptane solution containing 7.5 mmol of MMAO were mixed with 93.7 mg (0.2 mmol) of the metal complex 1 in a separate reaction vessel and stirred for 60 minutes.

Afterwards the resulting mixture was transferred into the polymerization reactor to start the polymerization reaction.

After three hours and 22 minutes the polymerization reaction was terminated as described above (see 2.1.1). At this point, the conversion level of the monomers into polybutadiene was 50.1%. 40.0 g of copolymer were recovered as result of the stripping process.

The polymer contained 9.5% cis-1,4-; 61.5% traps-1,4-, 8.5% 1,2-polybutadiene and 20.5% styrene content according to $^{13}C$ NMR determination. The styrene units were statistically distributed over the polymer chain according to $^{13}C$ NMR and IR investigation (no blocks of more than 4 styrene units could be detected). The molecular weight of the polymer amounted to 370,000 g/mol and the polydispersity (molecular weight distribution) amounted to 7.8. ($M_n$ = 59,000; $M_z$ = 1,475,000).

The Mooney value amounted to 10.3 and the glass temperature to -60.5 °C.

3.3 Copolymerization of 1,3-butadiene with divinylbenzene

O) Copolymerization of 1,3-butadiene with 1,3-divinylbenzene using metal complex 1 in combination with MMAO (Run 15)

The experiment was carried out according to the general polymerization procedure described above (2.1.2). The polymerization was carried out in 600 g of toluene solvent. Thus 600 g of toluene, 54.1 g (1.0 mol) of 1,3-butadiene monomer, and MMAO (5.8 g of a heptane solution containing 14.9 mmol of MMAO), 12.0 g (92 mmol) 1,3-divinylbenzene and 93.7 mg (0.2 mmol) of the metal complex 1 were added into the polymerization reactor. The addition of metal complex 1 started the polymerization reaction.

After one hour and 5 minutes the polymerization reaction was terminated as described above (see 2.1.2). At this point, the conversion level of the monomers into polybutadiene was 81.8%. 54.1 g of copolymer were recovered as result of the stripping process.

The polybutadiene part contained 2.5% cis-1,4-; 88.5% trans-1,4-, 9.0% 1,2-polybutadiene content according to IR determination. In addition 5.3% divinylbenzene were incorporated into the polymer.
The Mooney value amounted to 207.6.

3.4 Polymerization of 1,3-butadiene (Comparative Example)

P) Polymerization of 1,3-butadiene using vanadium acetylacetate in combination with triethylaluminum and tris (pentafluorophenyl)borane (Run 16)

The experiment was carried out according to the general polymerization procedure described above (2.1.1). The polymerization was carried out in 508.2 g of toluene solvent. Thus 401.0 g of toluene, 141.9 mg (1.24 mmol) triethylaluminum, 25.4 mg (0.0497 mmol) tris(pentafluorophenyl)borane and 54.1 g (1.0 mol) of 1,3-butadiene monomer. The temperature of the polymerization vessel was adjusted to 80 °C. 107.2 g of toluene, 428.9 mg (3.76 mmol) triethylaluminum, 77.0 mg (0.1503 mmol) tris(pentafluorophenyl)borane and 70.8 mg (0.20 mmol) of the vanadium acetylacetate were dosed into a separate reaction vessel and stirred for 29 minutes at 25 °C.
Afterwards the resulting mixture was transferred into the polymerization reactor to start the polymerization reaction.
After one hour and 40 minutes the polymerization reaction was terminated as described above (see 2.1.1). At this point, the conversion level of the monomers into polybutadiene was 0.35%. 0.19 g of polybutadiene were recovered as result of the stripping process.

3.5 Homopolymerization of Isoprene

Q) Polymerization of isoprene using complex 1 and MMAO-3a (Run 17)

The experiment was carried out according to the general polymerization procedure described above (2.1.2). The polymerization was carried out in 500 g of toluene solvent. Thus 500 g of toluene, 54.7 g (0.8 mol) of isoprene monomer, MMAO (5.8 g of a heptane solution containing 14.8 mmol of MMAO) were added into the polymerization reactor. The addition of 46.8 mg (0.10 mmol) of the metal complex 1 started the polymerization reaction.
After four hours and 30 minutes the polymerization reaction was terminated as described above (see 2.1.2). At this point, the conversion level of the monomers into polyisoprene was 39.3%. 21.5 g of polyisoprene were recovered as result of the stripping process.
The polymer contained 15.0 % cis-1,4-; 57.5 % trans-1,4-, 27.5 % 3,4-polyisoprene according to NMR determination. The molecular weight of the polymer amounted to 576,500 g/mol and the polydispersity (molecular weight distribution) amounted to 4.4. ($M_n$ = 130,000; $M_z$ = 1,540,000). The melt enthalpy ($\Delta H^{SL}$) amounts to 5.4 J/g and the glass temperature amounted to -63.0 °C.

3.6 Copolymerization of 1,3-butadiene with isoprene

R) Copolymerization of 1,3-butadiene with isoprene using metal complex 1 in combination with MMAO (Run 18)

The experiment was carried out according to the general polymerization procedure described above (2.1.2). The polymerization was carried out in 500 g of toluene solvent. Thus 500 g of toluene, 47.3 g (0.9 mol) of 1,3-butadiene monomer, 8.8 g (0.1 mol) of isoprene monomer, MMAO (5.8 g of a heptane solution containing 14.8 mmol of MMAO) were added into the polymerization reactor. The addition of 46.8 mg (0.10 mmol) of the metal complex 1 started the polymerization reaction.
After 65 minutes the polymerization reaction was terminated as described above (see 2.1.2). At this point, the conversion level of the monomers into polydiene was 46.1%. 25.9 g of copolymer were recovered as result of the stripping process.
The copolymer contained 4.0 % cis-1,4-; 76.5 % trans-1,4-, 8.5 % 1,2-polybutadiene units and 0.0 % cis-1,4-; 9.0 % trans-1,4-, 2.0 % 3,4-polyisoprene units according to NMR determination. The Mooney value amounted to 212, the melt enthalpy ($\Delta H^{SL}$) amounts to 38.5 J/g and the glass temperature amounted to -71.6 °C.

S) Copolymerization of 1,3-butadiene with isoprene using metal complex 1 in combination with MMAO (Run 19)

The experiment was carried out according to the general polymerization procedure described above (2.1.2). The polymerization was carried out in 500 g of toluene solvent. Thus 500 g of toluene, 41.0 g (0.8 mol) of 1,3-butadiene monomer, 17.4 g (0.3 mol) of isoprene monomer, MMAO (5.8 g of a heptane solution containing 14.8 mmol of MMAO)

were added into the polymerization reactor. The addition of 46.8 mg (0.10 mmol) of the metal complex 1 started the polymerization reaction.

After one hours and 41 minutes the polymerization reaction was terminated as described above (see 2.1.2). At this point, the conversion level of the monomers into polydiene was 39.3 %. 21.5 g of copolymer were recovered as result of the stripping process.

The copolymer contained 2.5 % cis-1,4-; 64.0 % trans-1,4-, 9.0 % 1,2-polybutadiene units and 2.5 % cis-1,4-; 16.0 % trans-1,4-, 6.0 % 3,4-polyisoprene units according to NMR determination. The molecular weight of the polymer amounted to 802,000 g/mol and the polydispersity (molecular weight distribution) amounted to 5.6. ($M_n$ = 143,000; $M_z$ = 1,790,000). The Mooney value amounted to 117.5, the melt enthalpy ($\Delta H^{SL}$) amounts to 21.4 J/g and the glass temperature amounted to -72.1 °C.

T) Copolymerization of 1,3-butadiene with isoprene using metal complex 1 in combination with MMAO (Run 20)

The experiment was carried out according to the general polymerization procedure described above (2.1.2). The polymerization was carried out in 500 g of toluene solvent. Thus 500 g of toluene, 27.0 g (0.5 mol) of 1,3-butadiene monomer, 34.3 g (0.5 mol) of isoprene monomer, MMAO (5.8 g of a heptane solution containing 14.8 mmol of MMAO) were added into the polymerization reactor. The addition of 46.8 mg (0.10 mmol) of the metal complex 1 started the polymerization reaction.

After four hours and 40 minutes the polymerization reaction was terminated as described above (see 2.1.2). At this point, the conversion level of the monomers into polydiene was 55.1 %. 33.8 g of copolymer were recovered as result of the stripping process.

The copolymer contained 6.0 % cis-1,4-; 52.5 % trans-1,4-, 9.0 % 1,2-polybutadiene units and 4.5 % cis-1,4-; 18.0 % trans-1,4-, 10.0 % 3,4-polyisoprene units according to NMR determination. The molecular weight of the polymer amounted to 1,022,000 g/mol and the polydispersity (molecular weight distribution) amounted to 6.6. ($M_n$ = 155,000; $M_z$ = 2,122,000). The Mooney value amounted to 157.2, the melt enthalpy ($\Delta H^{SL}$) amounts to zero J/g and the glass temperature amounted to -72.1 °C.

| *3.7 Polymerization activity - Comparison* | | | |
|---|---|---|---|
| Run | Activity [kg {polymer}/mmol {V}[hr]] / [conversion in %] | Run | Activity [kg {polymer}/mmol {V}[hr]] / [conversion in %] |
| 1 | 0.244** [22.7] | 9 | 3.876* [59.6] |
| 2 | 0.206** [19.1] | 10 | 0.895** [29.1] |
| 3 | 0.190*** [47.1] | 11 | 0.605** [25.7] |
| 4 | 0.369 *** [75.0] | 12 | 4.717* [48.0] |
| 5 | 0.102** [6.6] | 13 | 0.441** [35.9] |
| 6 | 0.121** [5.7] | 14 | 0.204** [12.8] |
| 7 | 0.726* [55.9] (3.543**** [55.3]) | 15 | 3.246***** [81.5] |
| 8 | 0.003*** [0.4] | 16 | 0.003** [0.26] |

* .....measured after 10 minutes;
** measured after 15 minutes;
*** measured after 30 minutes;
**** .... measured after 3 min; ****.... measured after 5 min

| Run | Activity [kg {polymer}/mmol {V}[hr]] / [conversion in %] | Run | Activity [kg {polymer}/mmol {V}[hr]] / [conversion in %] |
|---|---|---|---|
| 1 | 0.1* [35.3] | 19 | 0.11* [18.5] |
| 17 | 0.03* [4.8] | 20 | 0.09* [14.0] |
| 18 | 0.22* [38.3] | | |

* .....measured after one hour

| *3.8 Molecular weight - Comparison* | | | | | | | |
|---|---|---|---|---|---|---|---|
| Run | Mw | Mn | Mz | Run | Mw | Mn | Mz |
| 1 | not det. | not det. | Not det. | 11 | 846,000 | 121,000 | 2,025,000 |
| 2 | 255,000 | 75,000 | 640,000 | 12 | Not det. | not det. | not det. |
| 3 | not det. | not det. | Not det. | 13 | 625,000 | 1,475,000 | 105,000 |
| 4 | 495,000 | 61,000 | 1,630,000 | 14 | 370,000 | 1,475,000 | 59,000 |
| 5 | 143,000 | 11,500 | 878,000 | 15 | Not det. | not det. | not det. |
| 6 | 300,000 | 64,000 | 1,360,000 | 16 | Not det. | not det. | not det. |
| 7 | 1,600,000 | 70,000 | 3,650,000 | 17 | 576,500 | 130,000 | 1,540,000 |
| 8 | Not det. | not det. | Not det. | 18 | not det. | not det. | Not det. |
| 9 | Not det. | not det. | not det. | 19 | 802,000 | 143,000 | 1,790,000 |
| 10 | 954,000 | 122,000 | 2,140,000 | 20 | 1,022,000 | 155,000 | 2,122,000 |

| *3.9 Molecular weight distribution (MWG) & Mooney viscosity - Comparison* | | | | | | | |
|---|---|---|---|---|---|---|---|
| Run | Mw/Mn | Mooney | Tg in °C | Run | Mw/Mn | Mooney | Tg in °C |
| 1 | Not det. | 59.7 | -78 | 11 1 | 7.8 | 70.5 | -66.0 |
| 2 | 3.4 | 57.0 | Not det. | 12 | Not det. | 30.1 | -67.4 |
| 3 | Not det. | 6.2 | Not det. | 13 | 6.0 | 48.9 | -70.0 |
| 4 | 8.1 | 39.9 | Not det. | 14 | 6.3 | 10.3 | -60.5 |
| 5 | 12.4 | not det. | Not det. | 15 | Not det. | 207.6 | not det. |
| 6 | 4.7 | 47.1 | Not det. | 16 | Not det. | not det. | not det. |
| 7 | 22.8 | 21.7 | -75.5 | 17 | 4.4 | not det. | -63.0 |
| 8 | Not det. | 124.4 | Not det. | 18 | Not det. | 212 | -71.6 |
| 9 | Notdet. | 63.1 | notdet. | 19 | 5.6 | 117.5 | -72.1 |
| 10 | 7.8 | 98.8 | -68.9 | 20 | 6.6 | 157.2 | -72.1 |

| *3.10 Microstructure - Comparison* | | | | | | | |
|---|---|---|---|---|---|---|---|
| Run | Cis-1,4-PB | Trans-1,4-PB | 1,2-Polymer | Run | Trans-1,4-PB | 1,2-Polymer | Styrene |
| 1 | 3.0 | 87.0 | 10.0 | 9 | 92.0 | 7.0 | 0 |
| 2 | 9.5 | 82.5 | 8.0 | 10 | 79.0 | 9.3 | 8.0 |
| 3 | 9.0 | 82.0 | 9.0 | 11 | 75.0 | 9.5 | 12.5 |
| 4 | 1.5 | 88.0 | 10.5 | 12 | 82.0 | 6.0 | 10.5 |
| 5 | 33.0 | 50.5 | 16.5 | 13 | 74.5 | 9.0 | 10.0 |
| 6 | 18.0 | 74.7 | 8.0 | 14 | 61.0 | 8.5 | 20.5 |
| 7 | 2.0 | 94.0 | 4.0 | 15 | 88.5* | 9.0* | 5.3** |
| 8 | 3.0 | 89.0 | 8.0 | 16 | not det. | not det. | not det. |

* just refers to the polybutadiene part of the copolymer;

** 1,3-divinylbenzene

| *3.11 Microstructure - Polybutadiene* Fraction Comparison | | | | | | | |
|---|---|---|---|---|---|---|---|
| Run | Cis-1,4-PB | Trans-1,4-PB | 1,2-PB | Run | Cis-1,4-PB | Trans-1,4-PB | 1,2-PB |
| 1 | 3.0 | 87.0 | 10.0 | 19 | 2.5 | 64.0 | 9.0 |
| 17 | - | - | - | 20 | 6.0 | 52.5 | 9.0 |
| 18 | 4.0 | 76.0 | 8.5 | | | | |

| *3.12 Microstructure* - Polyisoprene Fraction Comparison | | | | | | | |
|---|---|---|---|---|---|---|---|
| Run | Cis-1,4-PI | Trans-1,4-PI | 3,4-PI | Run | Cis-1,4-PI | Trans-1,4-PI | 3,4-PI |
| 1 | - | - | - | 19 | 2.5 | 16.0 | 6.0 |
| 17 | 15.0 | 57.5 | 27.5 | 20 | 4.5 | 18.0 | 10.0 |
| 18 | 0.0 | 9.0 | 2.0 | | | | |

| *3.13* Melt enthalpy and glass temperature depending on copolymer composition | | | | | |
|---|---|---|---|---|---|
| Run | 1 | 17 | 18 | 19 | 20 |
| $\Delta H^{SL}$ in *Jlg* | 50.0 | 5.4 | 38.5 | 21.4 | 0.0 |
| *Tg in* °*C* | -78.0 | -63.0 | -71.6 | -72.1 | -71.6 |
| Butadiene Moiety [mol%] | 100 | 0 | 89 | 75.5 | 50 |
| Isoprene Moiety [mol%] | 0 | 100 | 11 | 24.5 | 50 |

## Claims

1. A process for homo- or copolymerization of conjugated olefins **characterized in that** one or more metal complex catalyst compositions are used comprising

   a) at least one metal complex according to formula *I*)

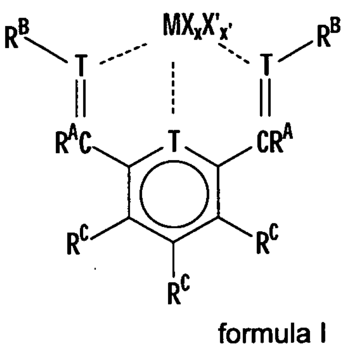

formula I

wherein

M is a metal from one of Groups 5, 8 or 9 of the Periodic System of the Elements, the lanthanides or actinides,

T is nitrogen or phosphorus,

$R^A$ independently each occurrence is hydrogen or a group having from 1 to 80 atoms not counting hydrogen, which is nitro, nitrile, halide, hydrocarbyl, hydrocarbylsilyl, hydrocarbylsiloxy, halo-substituted hydrocarbyl, hydrocarbyloxy-substituted hydrocarbyl, hydrocarbylamino-substituted hydrocarbyl, or hydrocarbylsilyl-substituted hydrocarbyl, hydrocarbyloxy, amino, hydrocarbylamino, and ketohydrocarbyl;

$R^B$ independently each occurrence is hydrogen or a group having from 1 to 80 atoms not counting hydrogen, which is hydrocarbyl, hydrocarbylsilyl, halo-substituted hydrocarbyl, hydrocarbyloxy-substituted hydrocarbyl, hydrocarbylamino-substituted hydrocarbyl, or hydrocarbylsilyl-substituted hydrocarbyl, hydrocarbyloxy, amino, hydrocarbylamino and optionally the $R^B$ and RA groups bonded to the same T=C grouping may be joined together to form a divalent ligand group;

$R^C$ independently each occurrence is hydrogen or a group having from 1 to 80 atoms not counting hydrogen, which is nitro, nitrile, halide, hydrocarbyl, halo-substituted hydrocarbyl, oxygen-substituted hydrocarbyl; amino; nitrogen-substituted hydrocarbyl; silicon-substituted hydrocarbyl; or two $R^c$ groups are joined together forming a divalent ligand group;

X is an anionic ligand group having up to 60 atoms not counting hydrogen, provided however that in no occurrence is X a cyclic, delocalized, aromatic group that is π-bonded to M, and optionally two X groups together form a divalent ligand group;

X' independently each occurrence is a neutral Lewis base ligand having up to 30 nonhydrogen atoms;

x is an integer number from 0 to 5; and

x' is a number from 0 to 3;

b) one or more activator compounds and
c) optionally a catalyst support.

**2.** The process for homo- or copolymerization of conjugated olefines according to claim 1, wherein one or more metal complex catalyst compositions are used comprising a metal complex according to formula *II*

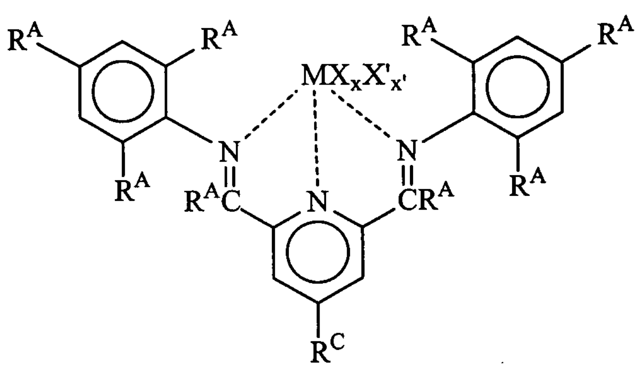

wherein

X, X', x and x' are as defined in claim 1 for formula I;

M is vanadium, iron, cobalt or neodymium;

$R^A$ independently each occurrence is hydrogen or $C_{1-6}$ alkyl;

$R^c$ independently each occurrence is hydrogen, halide or $C_{1-6}$ alkyl;

X independently each occurrence is chloride, bromide, $C_{1-10}$ hydrocarbyl, or $C_{1-10}$ hydrocarbylsilylhydrocarbyl;

x is 1, 2, 3 or 4;

X' is THF, DME, TEA, TMEDA, Et2O;

x' is a number from zero to two.

**3.** The process for homo- or copolymerization of conjugated olefines according to claim 1, wherein one or more metal complex catalyst compositions are used comprising a metal complex according to formula *III*

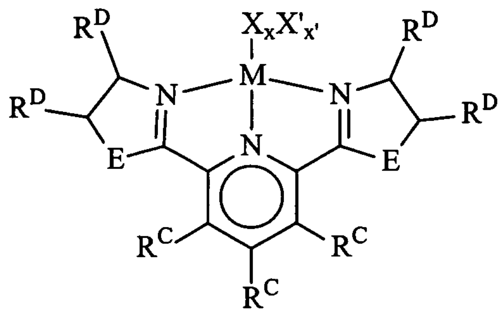

wherein

$R^c$, X, X', x and x' are as defined in claim 1 above for Formula I;

M is vanadium, iron, cobalt or neodymium;

E is $NR^D$ or O;

$R^D$ independently each occurrence is hydrogen, $C_{1-24}$ hydrocarbyl, $C_{1-24}$ hydrocarbyloxy-substituted hydrocarbyl or $C_{1-24}$ hydrocarbylamino-substituted hydrocarbyl, and optionally, two $R^D$ groups on the same ring are joined together in a ring structure.

**4.** The process for homo- or copolymerization of conjugated olefins according to claim 1, wherein one or more metal complex catalyst compositions are used comprising a metal complex according to formula *IV*

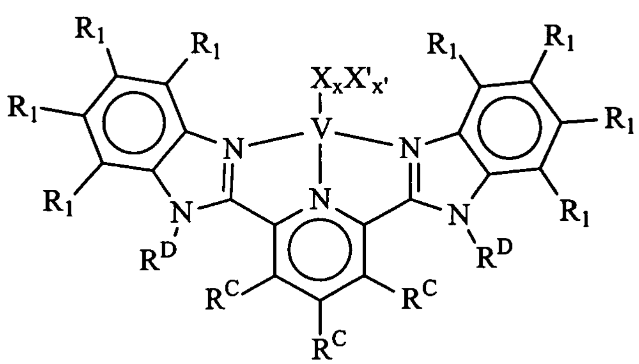

wherein:

$R^c$ independently each occurrence is hydrogen, $C_{1-20}$ hydrocarbyl, $C_{1-20}$ ketohydrocarbyl, $C_{1-20}$ hydrocarbyloxyamino, $C_{1-20}$ hydrocarbylamino; halide;

$R_1$ independently each occurrence is hydrogen or $C_{1-6}$ hydrocarbyl, especially methyl, ethyl, isopropyl, cyclohexyl, $C_{1-6}$ hydrocarbyloxy, especially methoxy, $C_{1-6}$ hydrocarbylamino, especially dimethylamino, piperidino, pyrrolidino, halide, especially fluoro, chloro, bromo;

$R^D$ independently each occurrence is hydrogen or $C_{1-24}$ hydrocarbyl, especially methyl, ethyl, propyl, isopropyl, butyl, pentyl, cyclopentyl, hexyl, cyclohexyl, octyl, dodecyl, tetradecyl, hexadecyl, octadecyl, $C_{1-24}$ hydrocarbyloxy-substituted hydrocarbyl, especially methoxymethyl, methoxylethyl, ethoxyethyl, propoxyethyl, butoxyethyl, hexyloxyethyl, acetyl, benzoyl, or $C_{1-24}$ hydrocarbylamino-substituted hydrocarbyl, especially dimethylaminomethyl, diethylaminomethyl, dimethylaminoethyl; diethylaminoethyl, morpholinomethyl, piperidinomethyl, anilinomethyl;

X independently each occurrence is chloride, bromide, $C_{1-10}$ hydrocarbyl, or $C_{1-10}$ hydrocarbylsilylhydrocarbyl, especially chloride, methyl, neopentyl, trimethylsilylmethyl, benzyl;

x is 1, 2, 3 or 4, especially 2 or 3;

X' is THF, DME, TEA, TMEDA, Et2O;

x' is a number from zero to two.

**5.** The process for homo- or copolymerization of conjugated olefins according to claim 4, wherein one or more metal complex catalyst compositions are used comprising a metal complex according to formula *V*

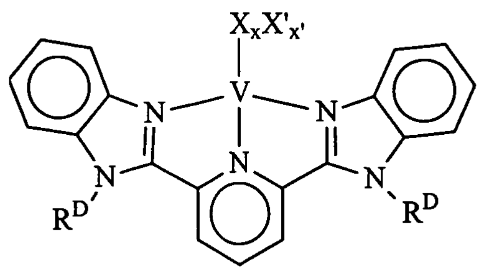

wherein:

$R^D$ independently each occurrence is hydrogen or $C_{1-24}$ hydrocarbyl, especially hydrogen, methyl, ethyl, propyl, isopropyl, butyl, pentyl, cyclopentyl, hexyl, cyclohexyl, octyl, dodecyl, tetradecyl, hexadecyl, octadecyl, phenyl, benzyl;

X independently each occurrence is chloride, bromide, methyl, neopentyl, trimethylsilylmethyl;

x is 2 or 3;

X' is THF, DME, TEA, TMEDA, Et2O

x' is a number from zero to two.

**6.** The process for homo- or copolymerization of conjugated olefins according to any one of the preceding Claims wherein 50 mol % or more of conjugated olefines and less than 50 mol % ethylenically unsaturated comonomers are used.

**7.** The process for homo- or hopolymerization of conjugated olefines according to any one of the preceding Claims, wherein the diolefin monomer(s) are chosen from the group comprising butadiene and isoprene.

**8.** The process for homo- or copolymerization of conjugated olefins according to Claim 6 wherein the ethylenically

unsaturated comonomer is chosen from the group comprising styrene, 2-methylstyrene, 3-methylstyrene, 4-methylstyrene, 2,4-dimethylstyrene, 2,4,6-trimethylstyrene, α-methylstyrene, stilbene (substituted or non-substituted), 1,3-divinylstyrene, 1,2-divinylstyrene and 1,4-divinylstyrene.

**9.** Homopolymers produced according any one of claims 1 to 8 wherein the percentage of trans-polybutadiene or polyisoprene is more than 50%.

**10.** Homopolymers produced according the claim 9 wherein the percentage of cis-polybutadiene is less than 10 % and the percentage of trans-polybutadiene is more than 75%.

**11.** Homopolymers produced according the claim 10 wherein the percentage of 1,2-polybutadiene is between 5 and 15 % , the percentage of cis-polybutadiene is less than 10 % and the percentage of trans-polybutadiene is more than 75%.

**12.** Copolymers produced according to the claims 1 to 8 wherein the percentage of the trans-polybutadiene fraction of the polybutadiene is greater than 30%.

**13.** Copolymers produced according to claim 12 wherein the percentage of the cis-polybutadiene fraction of the polybutadiene is less than 10 % and the percentage of the trans-polybutadiene fraction of the polybutadiene is more than 50%.

**14.** Copolymers produced according to claim 13 wherein percentage of 1,2- polybutadiene in the polybutadiene fraction is between 5 and 20 %, the percentage of cis-polybutadiene in the polybutadiene fraction is less than 10 % and the percentage of trans-polybutadiene in the polybutadiene fraction is more than 70%.

**15.** Copolymers produced according any one of claims 1 to 8 wherein their styrene content is less than 50 %.

**16.** Copolymers produced according claim 15 having a styrene content less than 25 %.

**17.** Copolymers according to any one of Claims 12-16 containing statistically distributed units of aromatic alpha olefins.

**18.** Copolymers produced according claims 1 to 8 wherein their isoprene content is more than 0 and less than 100 %.

**19.** Copolymers produced according claim 18 having an isoprene content less than 35 %.

**20.** A method for regulating the glass transition temperature between -40 and -90 degrees Celsius of polymers derived from monomer(s) comprising conjugated dienes **characterized by** changing the styrene content of the (co)polymer between 0 and less than 50%, or by changing the isoprene content of the (co)polymer between 0 and 100%, in a process for homo- or copolymerization of conjugated olefins according to any one of claims 1 to 8.

**21.** Use of a homo- or copolymer according to any one of Claims 9 to 19 for the production of shapes, molded parts, films, foams, golf balls, tires, hoses, conveyor and other belts, gaskets, seals, shoes and in the modification of plastics, such as the manufacture of high impact polystyrene or impact-modified polypropylene.

European Patent Office

# EUROPEAN SEARCH REPORT

Application Number
EP 03 01 2330

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 698 623 A (GOODYEAR TIRE & RUBBER) 28 February 1996 (1996-02-28) * abstract; claims * * page 5, line 25 - line 40 * | 9-11,21 | C08F36/04 C08F4/68 C08F4/54 C08F4/70 |
| X | US 6 018 007 A (LYNCH THOMAS J) 25 January 2000 (2000-01-25) * abstract; claims; tables * * column 11, line 16 - line 20 * | 9-11,21 | |
| X | GB 1 582 414 A (BAYER AG) 7 January 1981 (1981-01-07) * claims; examples; table 4 * * page 3, line 4 - line 9 * | 9-14,21 | |
| X | EP 0 892 011 A (GOODYEAR TIRE & RUBBER) 20 January 1999 (1999-01-20) * abstract; claims * * page 2, line 40 - page 3, line 2 * | 12-14, 18,19,21 | |
| A | EP 1 201 683 A (SOLVAY) 2 May 2002 (2002-05-02) * abstract; claims * | 1,2 | TECHNICAL FIELDS SEARCHED (Int.Cl.7) C08F |
| P,A | US 6 458 905 B1 (HAMMON ULRICH ET AL) 1 October 2002 (2002-10-01) * abstract; claims * | 1,2 | |

The present search report has been drawn up for all claims

| Place of search | Date of completion of the search | Examiner |
|---|---|---|
| The Hague | 22 August 2003 | Mettler, R-M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 03 01 2330

This annex lists the patent family membersrelating to the patent documents cited in the above-mentioned European search report.
The members are as contained in the European Patent Office EDP file on
The European Patent Office is in no way liable for these particulars which are merely given for the purpose of information.

22-08-2003

| Patent document cited in search report | Publication date | Patent family member(s) | Publication date |
|---|---|---|---|
| EP 0698623 A | 28-02-1996 | US 5448002 A | 05-09-1995 |
| | | BR 9503619 A | 16-04-1996 |
| | | CA 2135025 A1 | 13-02-1996 |
| | | DE 69501530 D1 | 05-03-1998 |
| | | DE 69501530 T2 | 16-07-1998 |
| | | EP 0698623 A1 | 28-02-1996 |
| | | ES 2113707 T3 | 01-05-1998 |
| | | JP 8067716 A | 12-03-1996 |
| US 6018007 A | 25-01-2000 | CA 2247669 A1 | 22-03-1999 |
| | | EP 0903357 A1 | 24-03-1999 |
| | | JP 11158207 A | 15-06-1999 |
| | | US 6184168 B1 | 06-02-2001 |
| GB 1582414 A | 07-01-1981 | DE 2706118 A1 | 17-08-1978 |
| | | BE 863897 A1 | 14-08-1978 |
| | | CA 1126448 A1 | 22-06-1982 |
| | | ES 466958 A1 | 01-10-1978 |
| | | FR 2380307 A1 | 08-09-1978 |
| | | JP 53101087 A | 04-09-1978 |
| | | NL 7801611 A | 16-08-1978 |
| | | US 4189558 A | 19-02-1980 |
| EP 0892011 A | 20-01-1999 | US 5844044 A | 01-12-1998 |
| | | BR 9814780 A | 26-09-2000 |
| | | EP 0892011 A1 | 20-01-1999 |
| | | JP 11080439 A | 26-03-1999 |
| EP 1201683 A | 02-05-2002 | EP 1201683 A1 | 02-05-2002 |
| | | AU 2790302 A | 15-05-2002 |
| | | WO 0236643 A1 | 10-05-2002 |
| US 6458905 B1 | 01-10-2002 | US 2003144438 A1 | 31-07-2003 |
| | | US 6482905 B1 | 19-11-2002 |

EPO FORM P0459

For more details about this annex : see Official Journal of the European Patent Office, No. 12/82